(19)

**Europäisches Patentamt**
**European Patent Office**
**Office européen des brevets**

(11) **EP 4 664 836 A1**

(12) **EUROPEAN PATENT APPLICATION**
published in accordance with Art. 153(4) EPC

(43) Date of publication:
**17.12.2025  Bulletin 2025/51**

(21) Application number: **24752660.1**

(22) Date of filing: **15.01.2024**

(51) International Patent Classification (IPC):
**H04L 25/02** (2006.01)

(52) Cooperative Patent Classification (CPC):
**H04B 7/0413; H04L 5/00; H04L 25/02;**
**H04W 72/231**

(86) International application number:
**PCT/CN2024/072360**

(87) International publication number:
**WO 2024/164802 (15.08.2024 Gazette 2024/33)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **10.02.2023  CN 202310098646**

(71) Applicant: **Datang Mobile Communications**
**Equipment Co., Ltd.**
**Beijing 100085 (CN)**

(72) Inventors:
• **YANG, Xianjun**
**Beijing 100085 (CN)**
• **SU, Xin**
**Beijing 100085 (CN)**

(74) Representative: **Studio Torta S.p.A.**
**Via Viotti, 9**
**10121 Torino (IT)**

(54) **SIGNAL PROCESSING METHODS, APPARATUS AND STORAGE MEDIUM**

(57)    The present disclosure provides a signal processing method and apparatus, and a storage medium, and relates to the field of communication technology. The signal processing method includes: on a network device side, determining, according to antenna spacing, a first reference signal, the antenna spacing being less than or equal to half wavelength; and determining, by the network device and according to the first reference signal, a second reference signal, where a dimension of a second reference signal matrix corresponding to the second reference signal is smaller than a dimension of a first reference signal matrix corresponding to the first reference signal. Thereby, when receiving a first receive signal including the second reference signal transmitted by the network device, a terminal may determine, according to the first receive signal, a second receive signal and use the second receive signal for channel estimation. The present disclosure can effectively reduce the pilot overhead of holographic MIMO, thereby reducing the complexity of the channel estimation.

FIG. 1

FIG. 2

**Description**

This disclosure claims priority to Chinese patent application No. 202310098646.7, filed with the China National Intellectual Property Administration on February 10, 2023, and entitle "SIGNAL PROCESSING METHOD AND APPARATUS, AND STORAGE MEDIUM", the entire contents of which are incorporated by reference in this disclosure.

**TECHNICAL FIELD**

The present disclosure relates to the field of communication technology, and in particular, to a signal processing method and apparatus, and a storage medium.

**BACKGROUND**

Holographic multiple input multiple output (Multiple Input Multiple Output, MIMO) refers to a technology that uses continuous aperture (or approximately continuous aperture) for MIMO transmission. To achieve continuous aperture, holographic MIMO typically requires integrating a massive or even infinite number of antennas in a form of a sub-wavelength dense array within a limited space or surface, and is a technology being capable of approaching the capacity limit of space-constrained MIMO.

Currently, pilot design methods for holographic reconfigurable intelligent surface (Reconfigurable Intelligent Surface, RIS) may be used to reduce pilot overhead of holographic MIMO. However, the pilot overhead of holographic MIMO remains high.

**SUMMARY**

The present disclosure provides a signal processing method and apparatus, and a storage medium for effectively reducing the pilot overhead of holographic MIMO.

In a first aspect, the present disclosure provides a signal processing method, applied to a network device, and the signal processing method includes:

determining, according to antenna spacing, a first reference signal, the antenna spacing being less than or equal to half wavelength;
determining, according to the first reference signal, a second reference signal, where a dimension of a second reference signal matrix corresponding to the second reference signal is smaller than a dimension of a first reference signal matrix corresponding to the first reference signal, and the second reference signal is used for channel estimation; and
transmitting the second reference signal.

Optionally, the dimension of the first reference signal matrix and a first reference signal sequence corresponding to the first reference signal are both determined based on a channel sparsity characteristic and a compressed sensing principle.

Optionally, in a non-isotropic scattering environment, the dimension of the first reference signal matrix satisfies that a number of columns in the first reference signal matrix is greater than or equal to a non-linear multiple of a rank of a channel angle response matrix.

Optionally, the first reference signal sequence is a randomly selected row of an orthogonal matrix; or, the first reference signal sequence is a pseudo-random sequence.

Optionally, the determining, according to the first reference signal, a second reference signal includes: performing, based on a first matrix, rank reduction on the first reference signal to determine the second reference signal, the first matrix being a two-dimensional spatial-frequency Fourier harmonic matrix corresponding to the network device.

Optionally, the signal processing method further includes: determining a third reference signal applied in an isotropic scattering environment, where a number of columns in a third reference signal matrix corresponding to the third reference signal is equal to a cardinality of a two-dimensional lattice ellipse corresponding to the network device in a wavenumber spectrum support set, and a third reference signal sequence corresponding to the third reference signal is an orthogonal sequence or a quasi-orthogonal sequence.

In a second aspect, the present disclosure provides a signal processing method, applied to a terminal, and the signal processing method includes:

receiving a first receive signal, where the first receive signal includes a second reference signal transmitted by a network device, the second reference signal is determined by the network device according to a first reference signal, and the first reference signal is determined by the network device according to antenna spacing, the antenna spacing being less than or equal to half wavelength; and

determining, according to the first receive signal, a second receive signal, the second receive signal being used for channel estimation.

Optionally, the determining, according to the first receive signal, a second receive signal includes: preprocessing, based on a second matrix, the first receive signal to obtain a preprocessed first receive signal, the second matrix being a two-dimensional spatial-frequency Fourier harmonic matrix corresponding to the terminal; and determining a receive signal including a preprocessed second reference signal extracted from the preprocessed first receive signal as the second receive signal.

Optionally, the second receive signal satisfies a following first formula:

$$\mathbf{\Phi}_r^{\mathrm{H}}\mathbf{Y} = \mathbf{\Phi}_r^{\mathrm{H}}\mathbf{H}\mathbf{\Phi}_s\mathbf{P} + \mathbf{\Phi}_r^{\mathrm{H}}\mathbf{N} \quad \text{first formula}$$

where $\mathbf{H}$ represents a channel matrix; $\mathbf{\Phi}_s$ represents a first matrix, the first matrix being a two-dimensional spatial-frequency Fourier harmonic matrix corresponding to the network device; $\mathbf{\Phi}_r$ represents the second matrix; $\mathbf{\Phi}_r^{\mathrm{H}}$ represents a Hermitian transpose matrix of $\mathbf{\Phi}_r$; $\mathbf{P}$ represents a first reference signal matrix corresponding to the first reference signal; $\mathbf{\Phi}_s\mathbf{P}$ represents a second reference signal matrix corresponding to the second reference signal; $\mathbf{\Phi}_r^{\mathrm{H}}\mathbf{Y}$ represents the second receive signal; and $\mathbf{N}$ represents Gaussian white noise of the terminal.

Optionally, the second receive signal and the first reference signal matrix satisfy a following second formula:

$$\mathrm{vec}(\mathbf{\Phi}_r^{\mathrm{H}}\mathbf{Y}) = \mathbf{P}^{\mathrm{H}}\otimes\mathbf{I}_{n_r}\Lambda^{\frac{1}{2}}\widetilde{\mathbf{w}} + \mathrm{vec}(\mathbf{\Phi}_r^{\mathrm{H}}\mathbf{N}) \quad \text{second formula}$$

where $\mathrm{vec}(\mathbf{\Phi}_r^{\mathrm{H}}\mathbf{Y})$ represents vector expression of $\mathbf{\Phi}_r^{\mathrm{H}}\mathbf{Y}$; $\mathbf{P}^{\mathrm{H}}$ represents a Hermitian transpose matrix of $\mathbf{P}$; $\mathbf{I}_{n_r}$ represents an identity matrix of $n_r \times n_r$, $n_r$ representing a cardinality of a two-dimensional lattice ellipse corresponding to the terminal in a wavenumber spectrum support set; $\Lambda$ represents a diagonal matrix including an eigenvalue of a channel autocorrelation matrix, $\widetilde{\mathbf{w}}$ represents a complex Gaussian random vector with a mean of 0 and a variance of 1, $\Lambda^{\frac{1}{2}}\widetilde{\mathbf{w}}$ represents a sparse vector corresponding to the eigenvalue of the channel autocorrelation matrix, and the sparse vector is used for acquiring the channel matrix; and $\mathrm{vec}(\mathbf{\Phi}_r^{\mathrm{H}}\mathbf{N})$ represents vector expression of $\mathbf{\Phi}_r^{\mathrm{H}}\mathbf{N}$.

Optionally, a number of non-zero eigenvalues of the channel autocorrelation matrix included in the diagonal matrix in a non-isotropic scattering environment is less than a number of non-zero eigenvalues of the channel autocorrelation matrix included in the diagonal matrix in an isotropic scattering environment.

Optionally, the second formula is used for acquiring the sparse vector.

Optionally, the second formula being used for acquiring the sparse vector includes: obtaining the sparse vector based on the second formula and using a compressed sensing recovery algorithm.

Optionally, an eigenvalue vector of a channel autocorrelation matrix corresponding to an isotropic scattering environment is obtained by using a matrix inversion algorithm.

In a third aspect, the present disclosure provides a signal processing method, applied to a terminal, and the signal processing method includes:

acquiring a fourth reference signal, where the fourth reference signal is determined by a network device according to antenna spacing of the terminal, and the antenna spacing is less than or equal to half wavelength;

determining, according to the fourth reference signal, a fifth reference signal, where a dimension of a fifth reference signal matrix corresponding to the fifth reference signal is smaller than a dimension of a fourth reference signal matrix corresponding to the fourth reference signal, and the fifth reference signal is used for channel estimation; and

transmitting the fifth reference signal.

Optionally, the acquiring a fourth reference signal includes: acquiring the fourth reference signal locally from the terminal, the fourth reference signal being pre-configured by the network device for the terminal; or, acquiring the fourth reference signal from the network device in a one-time manner via radio resource control (Radio Resource Control, RRC) signaling or medium access control-control element (Medium Access Control-Control Element, MAC-CE) signaling.

Optionally, the dimension of the fourth reference signal matrix and a fourth reference signal sequence corresponding to the fourth reference signal are both determined based on a channel sparsity characteristic and a compressed sensing principle.

Optionally, in a non-isotropic scattering environment, the dimension of the fourth reference signal matrix satisfies that a number of columns in the fourth reference signal matrix is greater than or equal to a non-linear multiple of a rank of a channel angle response matrix.

Optionally, the fourth reference signal sequence is a randomly selected row of an orthogonal matrix; or, the fourth reference signal sequence is a pseudo-random sequence.

Optionally, the determining, according to the fourth reference signal, a fifth reference signal includes: performing, based on a third matrix, rank reduction on the fourth reference signal to determine the fifth reference signal, the third matrix being a two-dimensional spatial-frequency Fourier harmonic matrix corresponding to the terminal.

Optionally, the signal processing method further includes: acquiring a sixth reference signal applied in an isotropic scattering environment, where the sixth reference signal is determined by the network device according to the antenna spacing of the terminal, a number of columns in a sixth reference signal matrix corresponding to the sixth reference signal is equal to a cardinality of a two-dimensional lattice ellipse corresponding to the terminal in a wavenumber spectrum support set, and a sixth reference signal sequence corresponding to the sixth reference signal is an orthogonal sequence or a quasi-orthogonal sequence.

In a fourth aspect, the present disclosure provides a signal processing method, applied to a network device, and the signal processing method includes:

receiving a third receive signal, where the third receive signal includes a fifth reference signal transmitted by a terminal, the fifth reference signal is determined by the terminal according to a fourth reference signal, and the fourth reference signal is determined by the network device according to antenna spacing of the terminal, the antenna spacing being less than or equal to half wavelength; and

determining, according to the third receive signal, a fourth receive signal, the fourth receive signal being used for channel estimation.

Optionally, the determining, according to the third receive signal, a fourth receive signal includes: preprocessing, based on a fourth matrix, the third receive signal to obtain a preprocessed third receive signal, the fourth matrix being a two-dimensional spatial-frequency Fourier harmonic matrix corresponding to the network device; and determining a receive signal including a preprocessed fifth reference signal extracted from the preprocessed third receive signal as the fourth receive signal.

Optionally, the fourth receive signal satisfies a following third formula:

$$\widehat{\boldsymbol{\Phi}}_r^{\mathrm{H}}\widehat{\mathbf{Y}} = \widehat{\boldsymbol{\Phi}}_r^{\mathrm{H}}\widehat{\mathbf{H}}\widehat{\boldsymbol{\Phi}}_s\widehat{\mathbf{P}} + \widehat{\boldsymbol{\Phi}}_r^{\mathrm{H}}\widehat{\mathbf{N}} \qquad \text{third formula}$$

where $\hat{\mathbf{H}}$ represents a channel matrix; $\hat{\boldsymbol{\Phi}}_s$ represents a third matrix, the third matrix being a two-dimensional spatial-frequency Fourier harmonic matrix corresponding to the terminal; $\hat{\boldsymbol{\Phi}}_r$ represents the fourth matrix; $\widehat{\boldsymbol{\Phi}}_r^{\mathrm{H}}$ represents a Hermitian transpose matrix of $\hat{\boldsymbol{\Phi}}_r$; $\hat{\mathbf{P}}$ represents a fourth reference signal matrix corresponding to the fourth reference signal; $\hat{\boldsymbol{\Phi}}_s\hat{\mathbf{P}}$ represents a fifth reference signal matrix corresponding to the fifth reference signal; $\widehat{\boldsymbol{\Phi}}_r^{\mathrm{H}}\widehat{\mathbf{Y}}$ represents the fourth receive signal; and $\hat{\mathbf{N}}$ represents Gaussian white noise of the network device.

Optionally, the fourth receive signal and the fourth reference signal matrix satisfy a following fourth formula:

$$\mathrm{vec}\left(\widehat{\boldsymbol{\Phi}}_r^{\mathrm{H}}\widehat{\mathbf{Y}}\right) = \widehat{\mathbf{P}}^{\mathrm{H}}\otimes\mathbf{I}_{n_r}\widehat{\boldsymbol{\Lambda}}^{\frac{1}{2}}\widehat{\mathbf{w}} + \mathrm{vec}\left(\widehat{\boldsymbol{\Phi}}_r^{\mathrm{H}}\widehat{\mathbf{N}}\right) \qquad \text{fourth formula}$$

where $\mathrm{vec}\left(\widehat{\boldsymbol{\Phi}}_r^{\mathrm{H}}\widehat{\mathbf{Y}}\right)$ represents vector expression of $\widehat{\boldsymbol{\Phi}}_r^{\mathrm{H}}\widehat{\mathbf{Y}}$; $\hat{\mathbf{P}}^{\mathrm{H}}$ represents a Hermitian transpose matrix of $\hat{\mathbf{P}}$; $\mathbf{I}_{n_r}$ represents an identity matrix of $n_r \times n_r$, $n_r$ representing a cardinality of a two-dimensional lattice ellipse corresponding to the network device in a wavenumber spectrum support set; $\hat{\Lambda}$ represents a diagonal matrix including an eigenvalue of a channel autocorrelation matrix, $\hat{\mathbf{w}}$ represents a complex Gaussian random vector with a mean of 0 and a variance of 1, $\widehat{\boldsymbol{\Lambda}}^{\frac{1}{2}}\widehat{\mathbf{w}}$ represents a sparse vector corresponding to the eigenvalue of the channel autocorrelation matrix, and the sparse vector is used for acquiring the channel matrix; and $\mathrm{vec}\left(\widehat{\boldsymbol{\Phi}}_r^{\mathrm{H}}\widehat{\mathbf{N}}\right)$ represents vector expression of $\widehat{\boldsymbol{\Phi}}_r^{\mathrm{H}}\widehat{\mathbf{N}}$.

Optionally, a number of non-zero eigenvalues of the channel autocorrelation matrix included in the diagonal matrix in a non-isotropic scattering environment is less than a number of non-zero eigenvalues of the channel autocorrelation matrix included in the diagonal matrix in an isotropic scattering environment.

Optionally, the fourth formula is used for acquiring the sparse vector.

Optionally, the fourth formula being used for acquiring the sparse vector includes: acquiring the sparse vector based on the fourth formula and using a compressed sensing recovery algorithm.

Optionally, an eigenvalue vector of a channel autocorrelation matrix corresponding to an isotropic scattering environment is obtained by using a matrix inversion algorithm.

In a fifth aspect, the present disclosure provides a signal processing apparatus, applied to a network device, and the signal processing apparatus includes a memory, a transceiver, and a processor:

> where the memory is configured to store a computer program;
> the transceiver is configured to transmit and receive data under control of the processor; and
> the processor is configured to read the computer program in the memory and execute following operations:

> > determining, according to antenna spacing, a first reference signal, the antenna spacing being less than or equal to half wavelength;
> > determining, according to the first reference signal, a second reference signal, where a dimension of a second reference signal matrix corresponding to the second reference signal is smaller than a dimension of a first reference signal matrix corresponding to the first reference signal, and the second reference signal is used for channel estimation; and
> > transmitting the second reference signal.

Optionally, the dimension of the first reference signal matrix and a first reference signal sequence corresponding to the first reference signal are both determined based on a channel sparsity characteristic and a compressed sensing principle.

Optionally, in a non-isotropic scattering environment, the dimension of the first reference signal matrix satisfies that a number of columns in the first reference signal matrix is greater than or equal to a non-linear multiple of a rank of a channel angle response matrix.

Optionally, the first reference signal sequence is a randomly selected row of an orthogonal matrix; or, the first reference signal sequence is a pseudo-random sequence.

Optionally, in a process of determining, according to the first reference signal, the second reference signal, the processor is configured to execute following operations: performing, based on a first matrix, rank reduction on the first reference signal to determine the second reference signal, the first matrix being a two-dimensional spatial-frequency Fourier harmonic matrix corresponding to the network device.

Optionally, the processor is further configured to execute following operations: determining a third reference signal applied in an isotropic scattering environment, where a number of columns in a third reference signal matrix corresponding to the third reference signal is equal to a cardinality of a two-dimensional lattice ellipse corresponding to the network device in a wavenumber spectrum support set, and a third reference signal sequence corresponding to the third reference signal is an orthogonal sequence or a quasi-orthogonal sequence.

In a sixth aspect, the present disclosure provides a signal processing apparatus, applied to a terminal, and the signal processing apparatus includes a memory, a transceiver, and a processor:

> where the memory is configured to store a computer program;
> the transceiver is configured to transmit and receive data under control of the processor; and
> the processor is configured to read the computer program in the memory and execute following operations:

> > receiving a first receive signal, where the first receive signal includes a second reference signal transmitted by a network device, the second reference signal is determined by the network device according to a first reference signal, and the first reference signal is determined by the network device according to antenna spacing, the antenna spacing being less than or equal to half wavelength; and
> > determining, according to the first receive signal, a second receive signal, the second receive signal being used for channel estimation.

Optionally, in a process of determining, according to the first receive signal, the second receive signal, the processor is configured to execute following operations: preprocessing, based on a second matrix, the first receive signal to obtain a preprocessed first receive signal, the second matrix being a two-dimensional spatial-frequency Fourier harmonic matrix corresponding to the terminal; and determining a receive signal including a preprocessed second reference signal extracted from the preprocessed first receive signal as the second receive signal.

Optionally, the second receive signal satisfies a following first formula:

$$\mathbf{\Phi}_r^{\mathrm{H}}\mathbf{Y} = \mathbf{\Phi}_r^{\mathrm{H}}\mathbf{H}\mathbf{\Phi}_s\mathbf{P} + \mathbf{\Phi}_r^{\mathrm{H}}\mathbf{N} \qquad \text{first formula}$$

where **H** represents a channel matrix; $\mathbf{\Phi}_s$ represents a first matrix, the first matrix being a two-dimensional spatial-frequency Fourier harmonic matrix corresponding to the network device; $\mathbf{\Phi}_r$ represents the second matrix; $\mathbf{\Phi}_r^{\mathrm{H}}$ represents a Hermitian transpose matrix of $\mathbf{\Phi}_r$; **P** represents a first reference signal matrix corresponding to the first reference signal; $\mathbf{\Phi}_s\mathbf{P}$ represents a second reference signal matrix corresponding to the second reference signal; $\mathbf{\Phi}_r^{\mathrm{H}}\mathbf{Y}$ represents the second receive signal; and **N** represents Gaussian white noise of the terminal.

Optionally, the second receive signal and the first reference signal matrix satisfy a following second formula:

$$\mathrm{vec}(\mathbf{\Phi}_r^{\mathrm{H}}\mathbf{Y}) = \mathbf{P}^{\mathrm{H}}\otimes\mathbf{I}_{n_r}\Lambda^{\frac{1}{2}}\widetilde{\mathbf{w}} + \mathrm{vec}(\mathbf{\Phi}_r^{\mathrm{H}}\mathbf{N}) \qquad \text{second formula}$$

where $\mathrm{vec}(\mathbf{\Phi}_r^{\mathrm{H}}\mathbf{Y})$ represents vector expression of $\mathbf{\Phi}_r^{\mathrm{H}}\mathbf{Y}$ ; $\mathbf{P}^{\mathrm{H}}$ represents a Hermitian transpose matrix of **P**; $\mathbf{I}_{n_r}$ represents an identity matrix of $n_r \times n_r$, $n_r$ representing a cardinality of a two-dimensional lattice ellipse corresponding to the terminal in a wavenumber spectrum support set; $\Lambda$ represents a diagonal matrix including an eigenvalue of a channel autocorrelation matrix, $\widetilde{\mathbf{w}}$ represents a complex Gaussian random vector with a mean of 0 and a variance of 1, $\Lambda^{\frac{1}{2}}\widetilde{\mathbf{w}}$ represents a sparse vector corresponding to the eigenvalue of the channel autocorrelation matrix, and the sparse vector is used for acquiring the channel matrix; and $\mathrm{vec}(\mathbf{\Phi}_r^{\mathrm{H}}\mathbf{N})$ represents vector expression of $\mathbf{\Phi}_r^{\mathrm{H}}\mathbf{N}$.

Optionally, a number of non-zero eigenvalues of the channel autocorrelation matrix included in the diagonal matrix in a non-isotropic scattering environment is less than a number of non-zero eigenvalues of the channel autocorrelation matrix included in the diagonal matrix in an isotropic scattering environment.

Optionally, the second formula is used for acquiring the sparse vector.

Optionally, in a process of using the second formula to acquire the sparse vector, the processor is configured to execute following operations: obtaining the sparse vector based on the second formula and using a compressed sensing recovery algorithm.

Optionally, an eigenvalue vector of a channel autocorrelation matrix corresponding to an isotropic scattering environment is obtained by using a matrix inversion algorithm.

In a seventh aspect, the present disclosure provides a signal processing apparatus, applied to a terminal, and the signal processing apparatus includes a memory, a transceiver, and a processor:

where the memory is configured to store a computer program;
the transceiver is configured to transmit and receive data under control of the processor; and
the processor is configured to read the computer program in the memory and execute following operations:

acquiring a fourth reference signal, where the fourth reference signal is determined by a network device according to antenna spacing of the terminal, and the antenna spacing is less than or equal to half wavelength;
determining, according to the fourth reference signal, a fifth reference signal, where a dimension of a fifth reference signal matrix corresponding to the fifth reference signal is smaller than a dimension of a fourth reference signal matrix corresponding to the fourth reference signal, and the fifth reference signal is used for channel estimation; and
transmitting the fifth reference signal.

Optionally, in a process of acquiring the fourth reference signal, the processor is configured to execute following operations: acquiring the fourth reference signal locally from the terminal, the fourth reference signal being pre-configured by the network device for the terminal; or, acquiring the fourth reference signal from the network device in a one-time manner via RRC signaling or MAC-CE signaling.

Optionally, the dimension of the fourth reference signal matrix and a fourth reference signal sequence corresponding to the fourth reference signal are both determined based on a channel sparsity characteristic and a compressed sensing principle.

Optionally, in a non-isotropic scattering environment, the dimension of the fourth reference signal matrix satisfies that a number of columns in the fourth reference signal matrix is greater than or equal to a non-linear multiple of a rank of a channel angle response matrix.

Optionally, the fourth reference signal sequence is a randomly selected row of an orthogonal matrix; or, the fourth reference signal sequence is a pseudo-random sequence.

Optionally, in a process of determining, according to the fourth reference signal, the fifth reference signal, the processor is configured to execute following operations: performing, based on a third matrix, rank reduction on the fourth reference signal to determine the fifth reference signal, the third matrix being a two-dimensional spatial-frequency Fourier harmonic matrix corresponding to the terminal.

Optionally, the processor is further configured to execute following operations: acquiring a sixth reference signal applied in an isotropic scattering environment, where the sixth reference signal is determined by the network device according to the antenna spacing of the terminal, a number of columns in a sixth reference signal matrix corresponding to the sixth reference signal is equal to a cardinality of a two-dimensional lattice ellipse corresponding to the terminal in a wavenumber spectrum support set, and a sixth reference signal sequence corresponding to the sixth reference signal is an orthogonal sequence or a quasi-orthogonal sequence.

In an eighth aspect, the present disclosure provides a signal processing apparatus, applied to a network device, and the signal processing apparatus includes a memory, a transceiver, and a processor:

where the memory is configured to store a computer program;

the transceiver is configured to transmit and receive data under control of the processor; and

the processor is configured to read the computer program in the memory and execute following operations:

receiving a third receive signal, where the third receive signal includes a fifth reference signal transmitted by a terminal, the fifth reference signal is determined by the terminal according to a fourth reference signal, and the fourth reference signal is determined by the network device according to antenna spacing of the terminal, the antenna spacing being less than or equal to half wavelength; and

determining, according to the third receive signal, a fourth receive signal, the fourth receive signal being used for channel estimation.

Optionally, in a process of determining, according to the third receive signal, the fourth receive signal, the processor is configured to execute following operations: preprocessing, based on a fourth matrix, the third receive signal to obtain a preprocessed third receive signal, the fourth matrix being a two-dimensional spatial-frequency Fourier harmonic matrix corresponding to the network device; and determining a receive signal including a preprocessed fifth reference signal extracted from the preprocessed third receive signal as the fourth receive signal.

Optionally, the fourth receive signal satisfies a following third formula:

$$\widehat{\mathbf{\Phi}}_r^{\mathrm{H}}\widehat{\mathbf{Y}} = \widehat{\mathbf{\Phi}}_r^{\mathrm{H}}\widehat{\mathbf{H}}\widehat{\mathbf{\Phi}}_s\widehat{\mathbf{P}} + \widehat{\mathbf{\Phi}}_r^{\mathrm{H}}\widehat{\mathbf{N}} \qquad \text{third formula}$$

where $\hat{\mathbf{H}}$ represents a channel matrix; $\hat{\mathbf{\Phi}}_s$ represents a third matrix, the third matrix being a two-dimensional spatial-frequency Fourier harmonic matrix corresponding to the terminal; $\hat{\mathbf{\Phi}}_r$ represents the fourth matrix; $\widehat{\mathbf{\Phi}}_r^{\mathrm{H}}$ represents a Hermitian transpose matrix of $\hat{\mathbf{\Phi}}_r$; $\hat{\mathbf{P}}$ represents a fourth reference signal matrix corresponding to the fourth reference signal; $\hat{\mathbf{\Phi}}_s\hat{\mathbf{P}}$ represents a fifth reference signal matrix corresponding to the fifth reference signal; $\widehat{\mathbf{\Phi}}_r^{\mathrm{H}}\widehat{\mathbf{Y}}$ represents the fourth receive signal; and $\hat{\mathbf{N}}$ represents Gaussian white noise of the network device.

Optionally, the fourth receive signal and the fourth reference signal matrix satisfy a following fourth formula:

$$\mathrm{vec}\left(\widehat{\mathbf{\Phi}}_r^{\mathrm{H}}\widehat{\mathbf{Y}}\right) = \widehat{\mathbf{P}}^{\mathrm{H}}\otimes\mathbf{I}_{n_r}\widehat{\mathbf{\Lambda}}^{\frac{1}{2}}\widehat{\mathbf{w}} + \mathrm{vec}\left(\widehat{\mathbf{\Phi}}_r^{\mathrm{H}}\widehat{\mathbf{N}}\right) \qquad \text{fourth formula}$$

where $\mathrm{vec}\left(\widehat{\mathbf{\Phi}}_r^{\mathrm{H}}\widehat{\mathbf{Y}}\right)$ represents vector expression of $\widehat{\mathbf{\Phi}}_r^{\mathrm{H}}\widehat{\mathbf{Y}}$; $\hat{\mathbf{P}}^{\mathrm{H}}$ represents a Hermitian transpose matrix of $\hat{\mathbf{P}}$; $\mathbf{I}_{n_r}$ represents an identity matrix of $n_r \times n_r$, $n_r$ representing a cardinality of a two-dimensional lattice ellipse corresponding to the network device in a wavenumber spectrum support set; $\hat{\Lambda}$ represents a diagonal matrix including an eigenvalue of a channel autocorrelation matrix, $\hat{\mathbf{w}}$ represents a complex Gaussian random vector with a mean of 0 and a variance of 1, $\widehat{\mathbf{\Lambda}}^{\frac{1}{2}}\widehat{\mathbf{w}}$ represents a sparse vector corresponding to the eigenvalue of the channel autocorrelation matrix, and the sparse vector is used for acquiring the channel matrix; and $\mathrm{vec}\left(\widehat{\mathbf{\Phi}}_r^{\mathrm{H}}\widehat{\mathbf{N}}\right)$ represents vector expression of $\widehat{\mathbf{\Phi}}_r^{\mathrm{H}}\widehat{\mathbf{N}}$.

Optionally, a number of non-zero eigenvalues of the channel autocorrelation matrix included in the diagonal matrix in a non-isotropic scattering environment is less than a number of non-zero eigenvalues of the channel autocorrelation matrix included in the diagonal matrix in an isotropic scattering environment.

Optionally, the fourth formula is used for acquiring the sparse vector.

Optionally, in a process of using the fourth formula to acquire the sparse vector, the processor is configured to execute following operations: acquiring the sparse vector based on the fourth formula and using a compressed sensing recovery algorithm.

Optionally, an eigenvalue vector of a channel autocorrelation matrix corresponding to an isotropic scattering environment is obtained by using a matrix inversion algorithm.

In a ninth aspect, the present disclosure provides a signal processing apparatus applied to a network device, and the signal processing apparatus includes:

a first determining unit, configured to determine, according to antenna spacing, a first reference signal, the antenna spacing being less than or equal to half wavelength;

a second determining unit, configured to determine, according to the first reference signal, a second reference signal, where a dimension of a second reference signal matrix corresponding to the second reference signal is smaller than a dimension of a first reference signal matrix corresponding to the first reference signal, and the second reference signal is used for channel estimation; and

a transmitting unit, configured to transmit the second reference signal.

Optionally, the dimension of the first reference signal matrix and a first reference signal sequence corresponding to the first reference signal are both determined based on a channel sparsity characteristic and a compressed sensing principle.

Optionally, in a non-isotropic scattering environment, the dimension of the first reference signal matrix satisfies that a number of columns in the first reference signal matrix is greater than or equal to a non-linear multiple of a rank of a channel angle response matrix.

Optionally, the first reference signal sequence is a randomly selected row of an orthogonal matrix; or, the first reference signal sequence is a pseudo-random sequence.

Optionally, the second determining unit is specifically configured to: perform, based on a first matrix, rank reduction on the first reference signal to determine the second reference signal, the first matrix being a two-dimensional spatial-frequency Fourier harmonic matrix corresponding to the network device.

Optionally, the first determining unit is further configured to: determine a third reference signal applied in an isotropic scattering environment, where a number of columns in a third reference signal matrix corresponding to the third reference signal is equal to a cardinality of a two-dimensional lattice ellipse corresponding to the network device in a wavenumber spectrum support set, and a third reference signal sequence corresponding to the third reference signal is an orthogonal sequence or a quasi-orthogonal sequence.

In a tenth aspect, the present disclosure provides a signal processing apparatus, applied to a terminal, and the signal processing apparatus includes:

a receiving unit, configured to receive a first receive signal, where the first receive signal includes a second reference signal transmitted by a network device, the second reference signal is determined by the network device according to a first reference signal, and the first reference signal is determined by the network device according to antenna spacing, the antenna spacing being less than or equal to half wavelength; and

a determining unit, configured to determine, according to the first receive signal, a second receive signal, the second receive signal being used for channel estimation.

Optionally, the determining unit is specifically configured to: preprocess, based on a second matrix, the first receive signal to obtain a preprocessed first receive signal, the second matrix being a two-dimensional spatial-frequency Fourier harmonic matrix corresponding to the terminal; and determine a receive signal including a preprocessed second reference signal extracted from the preprocessed first receive signal as the second receive signal.

Optionally, the second receive signal satisfies a following first formula:

$$\mathbf{\Phi}_r^{\mathrm{H}}\mathbf{Y} = \mathbf{\Phi}_r^{\mathrm{H}}\mathbf{H}\mathbf{\Phi}_s\mathbf{P} + \mathbf{\Phi}_r^{\mathrm{H}}\mathbf{N} \qquad \text{first formula}$$

where $\mathbf{H}$ represents a channel matrix; $\mathbf{\Phi}_s$ represents a first matrix, the first matrix being a two-dimensional spatial-frequency Fourier harmonic matrix corresponding to the network device; $\mathbf{\Phi}_r$ represents the second matrix; $\mathbf{\Phi}_r^{\mathrm{H}}$ represents a Hermitian transpose matrix of $\mathbf{\Phi}_r$; $\mathbf{P}$ represents a first reference signal matrix corresponding to the first reference signal; $\mathbf{\Phi}_s\mathbf{P}$ represents a second reference signal matrix corresponding to the second reference signal; $\mathbf{\Phi}_r^{\mathrm{H}}\mathbf{Y}$ represents the second receive signal; and $\mathbf{N}$ represents Gaussian white noise of the terminal.

Optionally, the second receive signal and the first reference signal matrix satisfy a following second formula:

$$\mathrm{vec}(\boldsymbol{\Phi}_r^{\mathrm{H}}\mathbf{Y}) = \mathbf{P}^{\mathrm{H}}\otimes\mathbf{I}_{n_r}\boldsymbol{\Lambda}^{\frac{1}{2}}\widetilde{\mathbf{w}} + \mathrm{vec}(\boldsymbol{\Phi}_r^{\mathrm{H}}\mathbf{N}) \qquad \text{second formula}$$

where $\mathrm{vec}(\boldsymbol{\Phi}_r^{\mathrm{H}}\mathbf{Y})$ represents vector expression of $\boldsymbol{\Phi}_r^{\mathrm{H}}\mathbf{Y}$; $\mathbf{P}^{\mathbf{H}}$ represents a Hermitian transpose matrix of $\mathbf{P}$; $\mathbf{I}_{n_r}$ represents an identity matrix of $n_r \times n_r$, $n_r$ representing a cardinality of a two-dimensional lattice ellipse corresponding to the terminal in a wavenumber spectrum support set; A represents a diagonal matrix including an eigenvalue of a channel autocorrelation matrix, $\tilde{\mathbf{w}}$ represents a complex Gaussian random vector with a mean of 0 and a variance of 1, $\boldsymbol{\Lambda}^{\frac{1}{2}}\widetilde{\mathbf{w}}$ represents a sparse vector corresponding to the eigenvalue of the channel autocorrelation matrix, and the sparse vector is used for acquiring the channel matrix; and $\mathrm{vec}(\boldsymbol{\Phi}_r^{\mathrm{H}}\mathbf{N})$ represents vector expression of $\boldsymbol{\Phi}_r^{\mathrm{H}}\mathbf{N}$.

Optionally, a number of non-zero eigenvalues of the channel autocorrelation matrix included in the diagonal matrix in a non-isotropic scattering environment is less than a number of non-zero eigenvalues of the channel autocorrelation matrix included in the diagonal matrix in an isotropic scattering environment.

Optionally, the second formula is used for acquiring the sparse vector.

Optionally, the signal processing apparatus further includes an acquiring unit, configured to: acquire the sparse vector based on the second formula and using a compressed sensing recovery algorithm.

Optionally, an eigenvalue vector of a channel autocorrelation matrix corresponding to an isotropic scattering environment is obtained by using a matrix inversion algorithm.

In an eleventh aspect, the present disclosure provides a signal processing apparatus, applied to a terminal, and the signal processing apparatus includes:

> an acquiring unit, configured to acquire a fourth reference signal, where the fourth reference signal is determined by a network device according to antenna spacing of the terminal, and the antenna spacing is less than or equal to half wavelength;
> a determining unit, configured to determine, according to the fourth reference signal, a fifth reference signal, where a dimension of a fifth reference signal matrix corresponding to the fifth reference signal is smaller than a dimension of a fourth reference signal matrix corresponding to the fourth reference signal, and the fifth reference signal is used for channel estimation; and
> a transmitting unit, configured to transmit the fifth reference signal.

Optionally, the acquiring unit is specifically configured to: acquire the fourth reference signal locally from the terminal, the fourth reference signal being pre-configured by the network device for the terminal; or, acquire the fourth reference signal from the network device in a one-time manner via RRC signaling or MAC-CE signaling.

Optionally, the dimension of the fourth reference signal matrix and a fourth reference signal sequence corresponding to the fourth reference signal are both determined based on a channel sparsity characteristic and a compressed sensing principle.

Optionally, in a non-isotropic scattering environment, the dimension of the fourth reference signal matrix satisfies that a number of columns in the fourth reference signal matrix is greater than or equal to a non-linear multiple of a rank of a channel angle response matrix.

Optionally, the fourth reference signal sequence is a randomly selected row of an orthogonal matrix; or, the fourth reference signal sequence is a pseudo-random sequence.

Optionally, the determining unit is specifically configured to: perform, based on a third matrix, rank reduction on the fourth reference signal to determine the fifth reference signal, the third matrix being a two-dimensional spatial-frequency Fourier harmonic matrix corresponding to the terminal.

Optionally, the acquiring unit is further configured to: acquire a sixth reference signal applied in an isotropic scattering environment, where the sixth reference signal is determined by the network device according to the antenna spacing of the terminal, a number of columns in a sixth reference signal matrix corresponding to the sixth reference signal is equal to a cardinality of a two-dimensional lattice ellipse corresponding to the terminal in a wavenumber spectrum support set, and a sixth reference signal sequence corresponding to the sixth reference signal is an orthogonal sequence or a quasi-orthogonal sequence.

In a twelfth aspect, the present disclosure provides a signal processing apparatus, applied to a network device, and the signal processing apparatus includes:

> a receiving unit, configured to receive a third receive signal, where the third receive signal includes a fifth reference signal transmitted by a terminal, the fifth reference signal is determined by the terminal according to a fourth reference signal, and the fourth reference signal is determined by the network device according to antenna spacing of the terminal, the antenna spacing being less than or equal to half wavelength; and

a determining unit, configured to determine, according to the third receive signal, a fourth receive signal, the fourth receive signal being used for channel estimation.

Optionally, the determining unit is specifically configured to: preprocess, based on a fourth matrix, the third receive signal to obtain a preprocessed third receive signal, the fourth matrix being a two-dimensional spatial-frequency Fourier harmonic matrix corresponding to the network device; and determine a receive signal including a preprocessed fifth reference signal extracted from the preprocessed third receive signal as the fourth receive signal.

Optionally, the fourth receive signal satisfies a following third formula:

$$\hat{\boldsymbol{\Phi}}_r^{\mathrm{H}}\hat{\mathbf{Y}} = \hat{\boldsymbol{\Phi}}_r^{\mathrm{H}}\hat{\mathbf{H}}\hat{\boldsymbol{\Phi}}_s\hat{\mathbf{P}} + \hat{\boldsymbol{\Phi}}_r^{\mathrm{H}}\hat{\mathbf{N}} \qquad \text{third formula}$$

where $\hat{\mathbf{H}}$ represents a channel matrix; $\hat{\boldsymbol{\Phi}}_s$ represents a third matrix, the third matrix being a two-dimensional spatial-frequency Fourier harmonic matrix corresponding to the terminal; $\hat{\boldsymbol{\Phi}}_r$ represents the fourth matrix; $\hat{\boldsymbol{\Phi}}_r^{\mathrm{H}}$ represents a Hermitian transpose matrix of $\hat{\boldsymbol{\Phi}}_r$; $\hat{\mathbf{P}}$ represents a fourth reference signal matrix corresponding to the fourth reference signal; $\hat{\boldsymbol{\Phi}}_s\hat{\mathbf{P}}$ represents a fifth reference signal matrix corresponding to the fifth reference signal; $\hat{\boldsymbol{\Phi}}_r^{\mathrm{H}}\hat{\mathbf{Y}}$ represents the fourth receive signal; and $\hat{\mathbf{N}}$ represents Gaussian white noise of the network device.

Optionally, the fourth receive signal and the fourth reference signal matrix satisfy a following fourth formula:

$$\mathrm{vec}\!\left(\hat{\boldsymbol{\Phi}}_r^{\mathrm{H}}\hat{\mathbf{Y}}\right) = \hat{\mathbf{P}}^{\mathrm{H}}\otimes\mathbf{I}_{n_r}\hat{\boldsymbol{\Lambda}}^{\frac{1}{2}}\hat{\mathbf{w}} + \mathrm{vec}\!\left(\hat{\boldsymbol{\Phi}}_r^{\mathrm{H}}\hat{\mathbf{N}}\right) \qquad \text{fourth formula}$$

where $\mathrm{vec}\!\left(\hat{\boldsymbol{\Phi}}_r^{\mathrm{H}}\hat{\mathbf{Y}}\right)$ represents vector expression of $\hat{\boldsymbol{\Phi}}_r^{\mathrm{H}}\hat{\mathbf{Y}}$; $\hat{\mathbf{P}}^{\mathrm{H}}$ represents a Hermitian transpose matrix of $\hat{\mathbf{P}}$; $\mathbf{I}_{n_r}$ represents an identity matrix of $n_r \times n_r$, $n_r$ representing a cardinality of a two-dimensional lattice ellipse corresponding to the network device in a wavenumber spectrum support set; $\hat{\boldsymbol{\Lambda}}$ represents a diagonal matrix including an eigenvalue of a channel autocorrelation matrix, $\hat{\mathbf{w}}$ represents a complex Gaussian random vector with a mean of 0 and a variance of 1, $\hat{\boldsymbol{\Lambda}}^{\frac{1}{2}}\hat{\mathbf{w}}$ represents a sparse vector corresponding to the eigenvalue of the channel autocorrelation matrix, and the sparse vector is used for acquiring the channel matrix; and $\mathrm{vec}\!\left(\hat{\boldsymbol{\Phi}}_r^{\mathrm{H}}\hat{\mathbf{N}}\right)$ represents vector expression of $\hat{\boldsymbol{\Phi}}_r^{\mathrm{H}}\hat{\mathbf{N}}$.

Optionally, a number of non-zero eigenvalues of the channel autocorrelation matrix included in the diagonal matrix in a non-isotropic scattering environment is less than a number of non-zero eigenvalues of the channel autocorrelation matrix included in the diagonal matrix in an isotropic scattering environment.

Optionally, the fourth formula is used for acquiring the sparse vector.

Optionally, the signal processing apparatus further includes an acquiring unit, configured to: acquire the sparse vector based on the fourth formula and using a compressed sensing recovery algorithm.

Optionally, an eigenvalue vector of a channel autocorrelation matrix corresponding to an isotropic scattering environment is obtained by using a matrix inversion algorithm.

In a thirteenth aspect, the present disclosure provides a processor readable storage medium, where the processor readable storage medium stores a computer program, and the computer program is used for causing a processor to execute the signal processing method provided in the first aspect, the second aspect, the third aspect, and/or the fourth aspect.

In a fourteenth aspect, the present disclosure provides a computer program product including an instruction which, when run on a computer, causes the computer to execute the signal processing method provided in the first aspect, the second aspect, the third aspect, and/or the fourth aspect.

In a fifteenth aspect, the present disclosure provides a communication system, including the network device described in any of the above and the terminal described in any of the above.

According to the signal processing method and apparatus, and the storage medium provided in the present disclosure, the network device determines, according to the antenna spacing, the first reference signal, the antenna spacing being less than or equal to the half wavelength; the network device determines, according to the first reference signal, the second reference signal, where the dimension of the second reference signal matrix corresponding to the second reference signal is less than the dimension of the first reference signal matrix corresponding to the first reference signal, so that the terminal receives the first receive signal including the second reference signal transmitted by the network device, determines, according to the first receive signal, the second receive signal, and uses the second receive signal for the channel estimation. Since the first reference signal is determined by considering the correlation between antennas when the antenna spacing is less than or equal to the half wavelength, and the dimension of the second reference signal matrix is less than the dimension of the first reference signal matrix, that is, a dimension of signal processing is reduced, the pilot overhead of holographic MIMO can be effectively reduced, and thereby complexity of channel estimation can be effectively reduced when the channel estimation is performed based on the second receive signal.

It should be understood that the content described in the above summary section is not intended to limit key or important features of the embodiments in the present disclosure, nor is it intended to limit the scope of the present disclosure. Other features of the present disclosure will become easily understood through following descriptions.

## BRIEF DESCRIPTION OF DRAWINGS

To more clearly illustrate the technical solutions in the embodiments of the present disclosure or in the prior art, the following will briefly introduce drawings needed in the description of the embodiments or the prior art. Obviously, the drawings in the following description are some embodiments of the present disclosure. For those of ordinary skill in the art, other drawings may be obtained according to these drawings without creative effort.

FIG. 1 is a diagram of an application scenario provided by an embodiment of the present disclosure.
FIG. 2 is a first flow diagram of a signal processing method provided by an embodiment of the present disclosure.
FIG. 3 is a second flow diagram of a signal processing method provided by an embodiment of the present disclosure.
FIG. 4 is a flow diagram of downlink pilot transmission and channel estimation in a non-isotropic scattering environment provided by an embodiment of the present disclosure.
FIG. 5 is a flow diagram of uplink pilot transmission and channel estimation in a non-isotropic scattering environment provided by an embodiment of the present disclosure.
FIG. 6 is a first structural diagram of a signal processing apparatus provided by an embodiment of the present disclosure.
FIG. 7 is a second structural diagram of a signal processing apparatus provided by an embodiment of the present disclosure.
FIG. 8 is a third structural diagram of a signal processing apparatus provided by an embodiment of the present disclosure.
FIG. 9 is a fourth structural diagram of a signal processing apparatus provided by an embodiment of the present disclosure.
FIG. 10 is a fifth structural diagram of a signal processing apparatus provided by an embodiment of the present disclosure.
FIG. 11 is a sixth structural diagram of a signal processing apparatus provided by an embodiment of the present disclosure.
FIG. 12 is a seventh structural diagram of a signal processing apparatus provided by an embodiment of the present disclosure.
FIG. 13 is an eighth structural diagram of a signal processing apparatus provided by an embodiment of the present disclosure.

## DESCRIPTION OF EMBODIMENTS

In the present disclosure, "at least one" refers to one or more, and "a plurality of" refers to two or more than two. "And/or" describes an association relationship of associated objects, indicating that there may be three relationships. For example, A and/or B may mean: A alone, both A and B, or B alone, where A and B may be singular or plural. The character "/" generally indicates that the associated objects before and after it are in an "or" relationship. "At least one item of the following" or similar expressions refer to any combination of these items, including single or multiple items. For example, at least one of a, b, or c may mean: a, b, c, a-b, a-c, b-c, or a-b-c, where a, b, and c may be single or multiple.

It can be understood that the steps or operations in the embodiments of the present disclosure are only examples, and other operations or variations of various operations may also be performed. Additionally, the steps may be executed in different orders than those presented in the embodiments of the present disclosure, and it may not be necessary to perform all operations in the embodiments of the present disclosure.

The following will describe the technical solutions in the embodiments of the present disclosure clearly and completely with reference to the drawings in the embodiments of the present disclosure. Obviously, the described embodiments are only a part of the embodiments of the present disclosure, not all of the embodiments. Based on the embodiments of the present disclosure, all other embodiments obtained by those of ordinary skill in the art without creative effort fall within the protection scope of the present disclosure.

It should be noted that user information (including but not limited to user equipment information, user personal information, etc.) and data (including but not limited to data for analysis, stored data, displayed data, etc.) involved in the present disclosure are authorized by users or fully authorized by parties, and the collection, use, and processing of related data must comply with relevant laws, regulations, and standards in the relevant countries and regions, and corresponding operation interfaces are provided to allow the users to choose whether to grant or deny authorization.

The technical solutions provided by the embodiments in the present disclosure may be applied to various systems, especially 5G systems. For example, an applicable system may be a global system of mobile communication (global system of mobile communication, GSM), a code division multiple access (code division multiple access, CDMA) system, a wideband code division multiple access (Wideband Code Division Multiple Access, WCDMA) general packet radio service (General Packet Radio Service, GPRS) system, a long term evolution (long term evolution, LTE) system, an LTE frequency division duplex (frequency division duplex, FDD) system, an LTE time division duplex (time division duplex, TDD) system, an long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system, etc. A terminal device and a network device are both included in each of the various systems. The systems may also include a core network part, for example, an evolved packet system (Evolved Packet System, EPS), a 5G system (5GS), etc.

A terminal involved in the embodiments of the present disclosure may refer to a device providing voice and/or data connectivity to a user, a handheld device with a wireless connectivity function, or other processing devices connected to a wireless modem. In different systems, names of terminals may be different. For example, in a 5G system, a terminal may be referred to as user equipment (User Equipment, UE). The terminal may communicate with one or more core networks (Core Network, CN) via a radio access network (Radio Access Network, RAN). The terminal may be a mobile terminal, such as a mobile phone (or referred to as "cellular" phone) and a computer with a mobile terminal, which may be, for example, a portable, pocket-sized, handheld, built-in (in a computer), or vehicle-mounted mobile apparatus that exchange voice and/or data with the radio access network. For example, a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA), and other devices. A wireless terminal may also be referred to as a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), a user device (user device), etc., which is not limited in the embodiments of the present disclosure.

A network device involved in the embodiments of the present disclosure may be a base station, and the base station may include a plurality of cells providing services to a terminal. Depending on a specific application scenario, the base station may also be referred to as an access point, or may be a device in an access network that communicates with a wireless terminal over one or more sectors on an air interface, or may have other names. The network device may be configured to interchange received over-the-air frames with Internet protocol (Internet Protocol, IP) packets, acting as a router between the wireless terminal and the remainder of the access network, where the remainder of the access network may include an Internet protocol (IP) communication network. The network device may also coordinate attribute management of the air interface. For example, the network device involved in the embodiments of the present disclosure may be a network device (Base Transceiver Station, BTS) in a global system for mobile communications (Global System for Mobile communications, GSM) or code division multiple access (Code Division Multiple Access, CDMA), or a network device (Node B) in wide-band code division multiple access (Wide-band Code Division Multiple Access, WCDMA), or a evolutional network device (evolutional Node B, eNB or e-Node B) in a long term evolution (long term evolution, LTE) system, a 5G base station (gNB) in a 5G network architecture (next generation system), or a home evolved base station (Home evolved Node B, HeNB), a relay node (relay node), a home base station (femto), a pico base station (pico), etc., which is not limited in the embodiments of the present disclosure. In some network structures, the network device may include a centralized unit (centralized unit, CU) node and a distributed unit (distributed unit, DU) node, and a centralized unit and a distributed unit may also be arranged separately in terms of geography.

MIMO transmissions may be performed between a network device and a terminal each using one or more antennas, and the MIMO transmissions may be either single user MIMO (Single User MIMO, SU-MIMO) or multiple user MIMO (Multiple User MIMO, MU-MIMO). Depending on a form and the number of antenna combinations, the MIMO transmissions may be 2D-MIMO, 3D-MIMO, FD-MIMO, or massive-MIMO, or may be diversity transmission or precoding transmission or beamforming transmission, etc.

For a clearer understanding of the present disclosure, brief description is performed first for some symbols and some technical terms involved in the embodiments of the present disclosure, a channel model on which the embodiments of the present disclosure are based, and problems existing in the prior art, and details are as follows.

I. Some symbols

Bold letters represent vectors or matrices; script letters represent sets; $\mathbb{E}\{\cdot\}$ represents an expectation operation; $n \sim \mathcal{N}_{\mathbb{C}}(0, \sigma^2)$ represents a circularly symmetric complex Gaussian random variable with a mean of 0 and a variance of $\sigma^2$; a superscript $[\cdot]^T$ represents a transpose; a superscript $[\cdot]^H$ represents a Hermitian transpose (Hermitian transpose); $\mathbf{A} \odot \mathbf{B}$ represents the Hadamard (Hadamard) product of matrices; $\mathbf{A} \otimes \mathbf{B}$ represents the Kronecker (Kronecker) product of matrices; $\mathbf{I}_N$ represents an identity matrix of $N \times N$; diag($\mathbf{a}$) represents a diagonal matrix with the elements of vector $\mathbf{a}$ on the diagonal; $\mathbb{R}^n$ represents an n-dimensional real Euclidean space (Euclidean space); $\mathbb{C}^n$ represents an n-dimensional complex Euclidean space, where $\mathbb{R}^3$ represents three-dimensional space, and any point in the three-dimensional space can be represented as $\mathbf{r} = x\hat{\mathbf{x}} + y\hat{\mathbf{y}} + z\hat{\mathbf{z}}$, where $\hat{\mathbf{x}}$, $\hat{\mathbf{y}}$, and $\hat{\mathbf{z}}$ respectively represent the three standard orthogonal vectors, ($x,y,z$) are Cartesian coordinates (Cartesian coordinates), and the length of $\mathbf{r}$ is represented as $\|\mathbf{r}\| = \sqrt{x^2 + y^2 + z^2}$, and $\hat{\mathbf{r}} = \mathbf{r}/\|\mathbf{r}\|$ is the unit vector of $\mathbf{r}$.

II. Some technical terms

An isotropic scattering environment refers to that the spectral factor of a channel is constant, that is, energy propagation in the channel is uniformly distributed in all directions.

A non-isotropic scattering environment refers to that the spectral factor of the channel may vary arbitrarily, and the bandwidth of the channel is determined by a support set of the channel power spectral density, that is, the energy propagation in the channel is non-uniformly distributed in various directions.

III. Channel model

Assuming that a transmitting antenna array has $N_s$ antennas (i.e., $N_s$ represents the number of transmitting antennas), the length and width of the transmitting antenna array are $L_{S,x}$ and $L_{S,y}$, respectively, a receiving antenna array has $N_r$ antennas (i.e., $N_r$ represents the number of receiving antennas), the length and width of the receiving antenna array are $L_{R,x}$ and $L_{R,y}$, respectively, and antenna spacing is less than or equal to half wavelength, a receive signal satisfies formula 1 as follows:

$$\mathbf{y} = \mathbf{H}\mathbf{x} + \mathbf{n} \qquad\qquad \text{formula 1}$$

where $\mathbf{y}$ represents the receive signal, $\mathbf{y} \in \mathbb{C}^{N_r}$, $\mathbf{y}$ is an $N_r \times 1$ complex vector, $\mathbb{C}$ represents complex numbers; $\mathbf{x}$ represents a transmit signal, $\mathbf{x} \in \mathbb{C}^{N_s}$, $\mathbf{x}$ is an $N_s \times 1$ complex vector; $\mathbf{n} \in \mathbb{C}^{N_r}$, $\mathbf{n}$ represents complex Gaussian random noise with a mean of 0 and a variance of $\sigma_n^2$, i.e., $\mathbf{n} \sim \mathcal{N}_{\mathbb{C}}(\mathbf{0}, \sigma_n^2 \mathbf{I}_{N_r})$; $\mathbf{H}$ represents a channel matrix (i.e., the original channel matrix), $\mathbf{H} \in \mathbb{C}^{N_r \times N_s}$, $\mathbf{H}$ is a complex correlated Rayleigh fading channel with a dimension of $N_r \times N_s$, where $[\mathbf{H}]_{ij}$ represents a propagation coefficient from a $j$-th transmitting antenna at point $\mathbf{s}_j = [s_{x_j}, s_{y_j}, s_z]$ in a three-dimensional Euclidean space to an $i$-th receiving antenna at point $\mathbf{r}_i = [r_{x_i}, r_{y_i}, r_z]$, and $[\mathbf{H}]_{ij} = h(\mathbf{r}_i, \mathbf{s}_j)$, where $h(\mathbf{r}_i, \mathbf{s}_j)$ represents a channel impulse response between the transmitting antenna at point $\mathbf{s}_j$ and the receiving antenna at point $\mathbf{r}_i$. A Fourier plane wave expression of a general (i.e., without subscripts) channel impulse response $h(\mathbf{r}, \mathbf{s})$ is formula 2 as follows:

$$h(\mathbf{r}, \mathbf{s}) = \frac{1}{(2\pi)^2} \int \int \int \int_{\mathcal{D} \times \mathcal{D}} a_r(\mathbf{k}, \mathbf{r}) H_a(k_x, k_y, \kappa_x, \kappa_y) a_s(\boldsymbol{\kappa}, \mathbf{s}) \, dk_x dk_y \, d\kappa_x d\kappa_y$$

formula 2

where $\kappa$ represents a transmitting wave vector, $\kappa_x$ represents the x-coordinate of $\kappa$, $\kappa_y$ represents the y-coordinate of $\kappa$; $\mathbf{k}$ represents a receiving wave vector, $k_x$ represents the x-coordinate of $\mathbf{k}$, $k_y$ represents the y-coordinate of $\mathbf{k}$; $a_s(\kappa, \mathbf{s})$ represents a source response that maps impulse excitation current at point $\mathbf{s}$ to the incident field source propagation direction $\hat{\kappa} = \kappa/\|\kappa\|$, $\hat{\kappa}$ represents a standard orthogonal vector of the transmitting wave vector, and the expression of $a_s(\kappa, \mathbf{s})$ is formula 3 as follows:

$$a_s(\boldsymbol{\kappa}, \boldsymbol{s}) = e^{-j\kappa^T s} = e^{-j(\kappa_x s_x + \kappa_y s_y + \gamma(\kappa_x, \kappa_y)s_z)} \qquad \text{formula 3}$$

$a_r(\boldsymbol{k}, \boldsymbol{r})$ represents a receiving response that maps induced current at point $\boldsymbol{r}$ to a receiving propagation direction of a receiving field $\hat{\boldsymbol{k}} = \boldsymbol{k}/\|\boldsymbol{k}\|$, $\hat{\boldsymbol{k}}$ represents a standard orthogonal vector of the receiving wave vector, and the expression of $a_r(\boldsymbol{k}, \boldsymbol{r})$ is formula 4 as follows:

$$a_r(\boldsymbol{k}, \boldsymbol{r}) = e^{-jk^T r} = e^{-j(k_x r_x + k_y r_y + \gamma(k_x, k_y)r_z)} \qquad \text{formula 4}$$

where j in the exponent represents an imaginary unit and satisfies $j^2 = -1$, $\kappa = \kappa_x \hat{\boldsymbol{x}} + \kappa_y \hat{\boldsymbol{y}} + \gamma(\kappa_x, \kappa_y)\hat{\boldsymbol{z}}$ and $k = k_x \hat{\boldsymbol{x}} + k_y \hat{\boldsymbol{y}} + \gamma(k_x, k_y)\hat{\boldsymbol{z}}$ are the corresponding transmit wave vector and receive wave vector, $\hat{\boldsymbol{x}}$ represents a standard orthogonal vector of the x-axis, $\hat{\boldsymbol{y}}$ represents a standard orthogonal vector of the y-axis, $\hat{\boldsymbol{y}}$ represents a standard orthogonal vector of the z-axis, and the projection $\gamma(\cdot, \cdot)$ of the transmitting wave vector or the receiving wave vector on the z-axis is defined as formula 5 as follows:

$$\gamma(\kappa_x, \kappa_y) = \sqrt{\vartheta^2 - \kappa_x^2 - \kappa_y^2} \qquad \text{formula 5}$$

where $\vartheta$ represents the wave number of carrier waves, $\vartheta = \dfrac{2\pi}{\lambda}$, $\lambda$ represents the wavelength of the carrier waves, and the integration region is limited to a support set shown in formula 6 as follows:

$$\mathcal{D} = \left\{ (k_x, k_y) \in \mathbb{R}^2 : k_x^2 + k_y^2 \le \kappa^2 \right\} \qquad \text{formula 6}$$

where $H_a(k_x, k_y, \kappa_x, \kappa_y)$ represents an angular response mapping from each incident direction $\hat{\kappa}$ to a receiving direction $\boldsymbol{k}$, and $H_a(k_x, k_y, \kappa_x, \kappa_y)$ is non-zero only within a support set $(k_x, k_y, \kappa_x, \kappa_y) \in \mathcal{D} \times \mathcal{D}$ of wavenumber spectrum; and $\mathbb{R}^2$ represents a two-dimensional real Euclidean space.

By spatially sampling the Fourier plane wave expression, a following approximate expansion of the Karhunen-Loeve (Karhunen-Loeve) transform shown in formula 7 as follows can be obtained:

$$\mathbf{H} = \sqrt{N_r N_s} \sum_{\{\ell_x, \ell_y\}} \sum_{\{m_x, m_y\}} \tilde{H}(\ell_x, \ell_y, m_x, m_y; r_z, s_z) \boldsymbol{\phi}_r(\ell_x, \ell_y) \boldsymbol{\phi}_s^H(m_x, m_y)$$

formula 7

where $m_x$ and $m_y$ respectively represent subscripts after discretely sampling $(\kappa_x, \kappa_y)$ of the wave vector $\kappa = \kappa_x \hat{\boldsymbol{x}} + \kappa_y \hat{\boldsymbol{y}} + \gamma(\kappa_x, \kappa_y)\hat{\boldsymbol{z}}$ in a transmitting electromagnetic wave propagation direction at $\left( \dfrac{2\pi m_x}{L_{S,x}}, \dfrac{2\pi m_y}{L_{S,y}} \right)$; $\ell_x$ and $\ell_y$ respectively represent subscripts after discretely sampling $(k_x, k_y)$ of the wave vector $\boldsymbol{k} = k_x \hat{\boldsymbol{x}} + k_y \hat{\boldsymbol{y}} + \gamma(k_x, k_y)\hat{\boldsymbol{z}}$ in a receiving electromagnetic wave propagation direction at $\left( \dfrac{2\pi \ell_x}{L_{R,x}}, \dfrac{2\pi \ell_y}{L_{R,y}} \right)$.

Since $H_a(k_x, k_y, \kappa_x, \kappa_y)$ is non-zero only within the support set $(k_x, k_y, \kappa_x, \kappa_y) \in \mathcal{D} \times \mathcal{D}$ of the wavenumber spectrum, after the discrete sampling, the support set of the wavenumber spectrum is transformed into a two-dimensional lattice ellipse corresponding to a receiving end as shown in formula 8 below and a two-dimensional lattice ellipse corresponding to a transmitting end as shown in formula 9 below:

$$\mathcal{E}_r = \left\{ (m_x, m_y) \in \mathbb{Z}^2 : \left( \frac{m_x \lambda}{L_{S,x}} \right)^2 + \left( \frac{m_y \lambda}{L_{S,y}} \right)^2 \le 1 \right\} \qquad \text{formula 8}$$

$$\mathcal{E}_s = \left\{ (\ell_x, \ell_y) \in \mathbb{Z}^2 : \left( \frac{\ell_x \lambda}{L_{R,x}} \right)^2 + \left( \frac{\ell_y \lambda}{L_{R,y}} \right)^2 \le 1 \right\} \qquad \text{formula 9}$$

where $\varepsilon_r$ represents the two-dimensional lattice ellipse corresponding to the receiving end; $\varepsilon_s$ represents the two-dimensional lattice ellipse corresponding to the transmitting end; $\mathbb{Z}^2$ represents a two-dimensional integer Euclidean space, and $\mathbb{Z}$ represents integers, let $n_s = |\varepsilon_s|$ and $n_r = |\varepsilon_r|$ represent cardinalities (cardinalities) of sets, i.e., $n_s$ represents a cardinality of the two-dimensional lattice ellipse corresponding to the transmitting end in the support set of the wavenumber spectrum, and satisfies formula 10 as follows; and $n_r$ represents a cardinality of the two-dimensional lattice ellipse corresponding to the receiving end in the support set of the wavenumber spectrum, and satisfies formula 11 as follows:

$$n_s = \left[\frac{\pi}{\lambda^2} L_{S,x} L_{S,y}\right] + o\left(\frac{L_{S,x} L_{S,y}}{\lambda^2}\right) \qquad \text{formula 10}$$

$$n_r = \left[\frac{\pi}{\lambda^2} L_{R,x} L_{R,y}\right] + o\left(\frac{L_{R,x} L_{R,y}}{\lambda^2}\right) \qquad \text{formula 11}$$

where $o(\cdot)$ represents negligible items.

$\tilde{H}(\ell_x, \ell_y, m_x, m_y; r_z, s_z)$ represents coefficients of an asymptotic Karhunen-Loeve expansion of a spatially stationary random electromagnetic field, and an expression thereof is shown in formula 12 as follows:

$$\tilde{H}(\ell_x, \ell_y, m_x, m_y; r_z, s_z) = H_a(\ell_x, \ell_y, m_x, m_y) e^{-j\gamma_s(m_x, m_y)s_z} e^{-j\gamma_r(\ell_x, \ell_y)r_z}$$

formula 12

Since the projection $\gamma_s(m_x, m_y) = \gamma\left(\frac{2\pi m_x}{L_{S,x}}, \frac{2\pi m_y}{L_{S,y}}\right)$ of the transmitting wave vector on the z-axis and the projection $\gamma_r(\ell_x, \ell_y) = \gamma\left(\frac{2\pi \ell_x}{L_{R,x}}, \frac{2\pi \ell_y}{L_{R,y}}\right)$ of the receiving wave vector on the z-axis are deterministic, $\tilde{H}(\ell_x, \ell_y, m_x, m_y; r_z, s_z)$ is statistically equivalent to $H_a(\ell_x, \ell_y, m_x, m_y)$, where $H_a(\ell_x, \ell_y, m_x, m_y) \sim \mathcal{N}_{\mathbb{C}}\left(0, \sigma^2(\ell_x, \ell_y, m_x, m_y)\right)$ is a statistically independent and circularly symmetric complex Gaussian random variable; the vector $\boldsymbol{\phi}_s(m_x, m_y) \in \mathbb{C}^{N_s}$, where a j-th element is a two-dimensional spatial-frequency Fourier harmonic, and an expression thereof is formula 13 as follows:

$$\left[\boldsymbol{\phi}_s(m_x, m_y)\right]_j = \frac{1}{\sqrt{N_s}} \phi_s\left(m_x, m_y, s_{x_j}, s_{y_j}\right) = \frac{1}{\sqrt{N_s}} e^{j\left(\frac{2\pi}{L_{S,x}} m_x s_{x_j} + \frac{2\pi}{L_{S,y}} m_y s_{y_j}\right)}$$

formula 13

the vector $\boldsymbol{\phi}_r(\ell_x, \ell_y) \in \mathbb{C}^{N_r}$, where an i-th element is a two-dimensional spatial-frequency Fourier harmonic, and an expression thereof is formula 14 as follows:

$$\left[\boldsymbol{\phi}_r(\ell_x, \ell_y)\right]_i = \frac{1}{\sqrt{N_s}} \phi_r(\ell_x, \ell_y, r_{x_i}, r_{y_i}) = \frac{1}{\sqrt{N_r}} e^{j\left(\frac{2\pi}{L_{R,x}} \ell_x r_{x_i} + \frac{2\pi}{L_{R,y}} \ell_y r_{y_i}\right)}$$

formula 14

Furthermore, the channel matrix H may be transformed into a matrix form shown in formula 15 as follows:

$$\mathbf{H} = \boldsymbol{\Phi}_r \tilde{\mathbf{H}} \boldsymbol{\Phi}_s^{\mathrm{H}} \qquad \text{formula 15}$$

where $\Phi_r$ is a two-dimensional spatial-frequency Fourier harmonic matrix of the receiving end composed of $n_r$ vectors $\phi_r(\ell_x, \ell_y)$, and is a deterministic matrix; $\Phi_s$ is a two-dimensional spatial-frequency Fourier harmonic matrix of the transmitting end composed of $n_s$ vectors $\phi_s(m_x, m_y)$, and is a deterministic matrix, and $\Phi_s$ and $\Phi_r$ are semi-unitary matrices, i.e., $\mathbf{\Phi}_s^H \mathbf{\Phi}_s = \mathbf{I}_{n_s}$ and $\mathbf{\Phi}_r^H \mathbf{\Phi}_r = \mathbf{I}_{n_r}$, through uniform sampling, the semi-unitary matrices $\Phi_s$ and $\Phi_r$ are transformed into two-dimensional inverse discrete Fourier transform (Inverse Discrete Fourier Transform, IDFT) matrices; $\tilde{H} = e^{j\Gamma_r} H_a e^{-j\Gamma_s}$, where diagonal matrices $e^{j\Gamma_r}$ and $e^{-j\Gamma_s}$ are filter matrices, representing propagation effects of electromagnetic waves on the z-axis, where $\Gamma_r = \mathrm{diag}(\gamma_r r_z)$ represents a receiving filter matrix, $\Gamma_s = \mathrm{diag}(\gamma_s s_z)$ represents a transmitting filter matrix, $\gamma_r$ is an $n_r \times 1$ column vector with elements $\gamma_r(\ell_x, \ell_y)$, and $\gamma_s$ is an $n_s \times 1$ column vector with elements $\gamma_s(m_x, m_y)$; and $\mathbf{H}_a$ represents an angular domain random matrix, $\mathbf{H}_a \in \mathbb{C}^{n_r \times n_s}$, and an expression of $\mathbf{H}_a$ is shown in formula 16 as follows:

$$\mathbf{H}_a = \mathbf{\Sigma} \odot \mathbf{W} \qquad \text{formula 16}$$

where $\mathbf{\Sigma} \in \mathbb{R}_+^{n_r \times n_s}$ represents $n_r n_s$ proportionally enlarged standard deviations $\left\{ \sqrt{N_r N_s} \sigma(\ell_x, \ell_y, m_x, m_y) \right\}$, and $\odot$ is the Hadamard product; and $\mathbf{W} \in \mathbb{C}^{n_r \times n_s}$ represents a matrix composed of independent and identically distributed circularly symmetric complex Gaussian random variables.

Therefore, the matrix expression of the channel matrix $\mathbf{H}$ indicates that the angular domain matrix $\mathbf{H}_a$ is semi-unitarily equivalent to the channel matrix $\mathbf{H}$, that is, when a spatial basis matrix determined solely by the array geometry of the transmitting end and the receiving end is fixed, the matrix $\mathbf{H}_a$ can be regarded as a low-rank approximation of the channel matrix $\mathbf{H}$, where the array geometry is a deterministic effect, determined solely by the shape of the antenna array, transforming a signal from the spatial domain to the angular domain, and may be executed by a two-dimensional discrete spatial Fourier transform. The above-mentioned low-rank characteristic is more pronounced in a non-isotropic environment. Using $n_s' \leq n_s$ and $n_r' \leq n_r$ to represent the number of rows that are not entirely zero and the number of columns that are not entirely zero in the matrix $\mathbf{H}_a$, and using $\mathrm{rank}(\mathbf{H}_a)$ to represent the degrees of freedom of the channel in a non-isotropic scattering environment, $\mathrm{rank}(\mathbf{H}_a)$ satisfies formula 17 as follows:

$$\mathrm{rank}(\mathbf{H}_a) = \min(n_s', n_r') \leq \min(n_s, n_r) \qquad \text{formula 17}$$

A channel autocorrelation matrix is formula 18 as follows:

$$\mathbf{R} = \mathbb{E}\{\mathrm{vec}(\mathbf{H})\mathrm{vec}(\mathbf{H})^H\} \qquad \text{formula 18}$$

where $\mathrm{vec}(\mathbf{H})$ represents a column vector formed by writing the channel matrix $\mathbf{H}$ column-wise, i.e., the matrix expression of the channel matrix after vectorization, $\mathrm{vec}(\mathbf{H}) \in \mathbb{C}^{N_r N_s \times 1}$; and eigenvalue decomposition may be performed on R to obtain the expression shown in formula 19 as follows:

$$\mathbf{R} = \mathbf{U}\mathbf{\Lambda}\mathbf{U}^H \qquad \text{formula 19}$$

where the matrix U includes an eigenvector of the channel autocorrelation matrix R, and the eigenvector matrix $\mathbf{U} = \mathbf{\Phi}_s \otimes \mathbf{\Phi}_r \in \mathbb{C}^{N_r N_s \times n_r n_s}$, U is a semi-unitary matrix determined by the array geometry, and satisfies $\mathbf{U}^H\mathbf{U} = \mathbf{I}_{n_r n_s}$, where $\otimes$ represents the Kronecker product; $\Lambda$ represents a diagonal matrix including an eigenvalue of the channel autocorrelation matrix, $\mathbf{\Lambda} = \mathrm{diag}\big(\mathrm{vec}(\mathbf{\Sigma} \odot \mathbf{\Sigma})\big) \in \mathbb{C}^{n_r n_s \times n_r n_s}$, $\Lambda$ includes an eigenvalue of the channel autocorrelation matrix $\mathbf{R}$, and $\mathbf{\Sigma} \in \mathbb{R}_+^{n_r \times n_s}$, representing $n_r n_s$ proportionally enlarged standard deviations $\left\{ \sqrt{N_r N_s} \sigma(\ell_x, \ell_y, m_x, m_y) \right\}$, where the standard deviation $\sigma(\ell_x, \ell_y, m_x, m_y)$ is a standard deviation of the matrix $H_a$ in above formula 16.

Based on the eigenvalue decomposition of the channel autocorrelation matrix, the channel matrix H satisfies formula 20 as follows:

$$\mathrm{vec}(\mathbf{H}) = \mathbf{U}\boldsymbol{\Lambda}^{\frac{1}{2}}\widetilde{\mathbf{w}} \qquad\qquad \text{formula 20}$$

where $\tilde{\mathbf{w}}$ represents a complex Gaussian random vector with a mean of 0 and a variance of 1, $\widetilde{\mathbf{w}} \sim \mathcal{N}_{\mathbb{C}}(0, \mathbf{I}_{n_r n_s})$ is an $n_r n_s \times 1$ vector whose elements are complex Gaussian random variables with a mean of 0 and a variance of 1, $\mathcal{N}_{\mathbb{C}}$ represents a complex Gaussian random process; $\boldsymbol{\Lambda}^{\frac{1}{2}}\widetilde{\mathbf{w}}$ represents a sparse vector corresponding to the eigenvalue of the channel autocorrelation matrix, and the sparse vector may be used for acquiring the channel matrix $\mathbf{H}$.

The above-mentioned channel model may be understood as an electromagnetic wave channel model.

IV. Technical problems

Since antenna spacing in holographic MIMO is less than half wavelength, the number of antennas in holographic MIMO within a same area is much larger than the number of antennas with antenna spacing being the half wavelength. This poses a significant challenge to the pilot design of holographic MIMO, i.e., the pilot overhead increases sharply, leading to increased complexity in channel estimation. Therefore, how to reduce the pilot overhead of holographic MIMO has become an urgent problem to be solved.

Currently, a pilot design method for holographic RIS may be used for reducing the pilot overhead of holographic MIMO. Specifically, a pilot design for holographic RIS follows a special codeword (Unique Word, UW) designed for orthogonal frequency division multiplexing (Orthogonal Frequency Division Multiplexing, OFDM), UW symbols are inserted before OFDM data transmission symbols in the time domain, and different users occupy different UW symbols; and furthermore, based on the dual sparsity characteristics of the angular domain and the delay domain, an angle of arrival (Angle of Arrival, AoD) of a channel is grouped in a horizontal direction and a vertical direction, and a group including a line-of-sight path is determined to estimate the angle of arrival of the channel, thereby reducing the pilot overhead. However, the pilot design method for holographic RIS only considers using different symbols to distinguish different users, but the pilot sequence is still assumed to be constant, a value thereof is determined by transmit power and occupied symbols, there is no pilot sequence design to improve channel estimation performance, and during channel estimation, the sparsity and correlation between antennas brought by the characteristic of antenna spacing in holographic MIMO/RIS being less than half wavelength are not utilized. As a result, the pilot overhead of holographic MIMO remains high, and the complexity of the channel estimation is still high. Additionally, the following method may be used for channel modeling and channel estimation in holographic MIMO: utilizing the geometric characteristics, such as size and position, of a transmitting antenna array and a receiving antenna array without relying on a user-specific channel statistical characteristic (such as a channel autocorrelation matrix), i.e., reducing an original high-dimensional channel to a low-dimensional channel for estimation. However, using the above-mentioned method for the channel modeling and the channel estimation in holographic MIMO has following drawbacks: in the above-mentioned method, although the complexity of the channel estimation can be reduced by the dimension of the channel to be estimated, this method essentially only considers the statistical characteristic of a channel in an isotropic scattering environment in holographic MIMO, but fails to exploit and utilize the characteristic of holographic MIMO that a channel is sparser in a non-isotropic scattering environment than in an isotropic scattering environment, and the complexity of the channel estimation thereof remains relatively high.

To solve the above problem, the embodiments of the present disclosure provide a signal processing method and apparatus, and a storage medium. In the present disclosure, the correlation between antennas when antenna spacing in holographic MIMO is less than half wavelength and the characteristic that a channel is sparser in a non-isotropic scattering environment are fully utilized, and by designing a pilot sequence and performing channel estimation based on a compressed sensing principle, the pilot overhead of holographic MIMO can be effectively reduced, thereby reducing the complexity of channel estimation.

The method and the apparatus provided in the embodiments of the present disclosure are based on a same inventive concept. Since the principles of problem-solving for the method and the apparatus are similar, the implementation of the apparatus and the method may be cross-referenced, and repeated content will be omitted herein.

It should be noted that the theoretical basis of the embodiments of the present disclosure is as follows: based on the above-mentioned formula 20, it can be determined that the number of eigenvalues in an isotropic scattering environment is $n_r \times n_s$, i.e., there are only $n_r \times n_s$ non-zero elements in the diagonal matrix, a dimension of vec(H) is $N_r N_s \times 1$, and the matrix U is determined by the array geometry and is known. The basic idea of the compressed sensing principle is as follows: if an unknown signal is sparse or compressible in a known orthogonal basis or an overcomplete orthogonal basis (e.g., a Fourier transform basis and a wavelet basis, etc.), then an original signal can be accurately recovered using a small number of linear and non-adaptive random measurements. Therefore, according to the compressed sensing principle, a measurement matrix of a signal is U, $\mathbf{\Lambda}^{\frac{1}{2}}\widetilde{\mathbf{w}}$ is a dimension-reduced vector with a dimension of $n_r \times n_s$, then a ratio of the reduced dimension $n_r \times n_s$ to a dimension $N_r \times N_s$ of an original channel vec($\mathbf{H}$) is $\frac{n_r n_s}{N_r N_s}$. And then, based on the above-mentioned formulas 10 and 11, $N_s = \frac{L_{S,x}}{\Delta_{S,x}}\frac{L_{S,y}}{\Delta_{S,y}}$, and $N_r = \frac{L_{R,x}}{\Delta_{R,x}}\frac{L_{R,y}}{R_{S,y}}$, where $\Delta_{S,x}$ represents antenna spacing between transmitting antennas in the x-axis, $\Delta_{S,y}$ represents antenna spacing between the transmitting antennas in the y-axis, $\Delta_{R,x}$ represents antenna spacing between receiving antennas in the x-axis, and $\Delta_{R,y}$ represents antenna spacing between the receiving antennas in the y-axis, following formula 21 as follows can be obtained:

$$\frac{n_r n_s}{N_r N_s} = \frac{\pi\Delta_{S,x}\Delta_{S,y}}{\lambda^2}\frac{\pi\Delta_{R,x}\Delta_{R,y}}{\lambda^2} \qquad \text{formula 21}$$

Therefore, according to the above-mentioned formula 21, it can be determined that: the smaller the antenna spacing is, the more dimensions of the channel vec($\mathbf{H}$) can be reduced relative to its own dimension $N_r \times N_s$.

In the following, an application scenario of the solutions provided by the present disclosure will be illustrated first with examples.

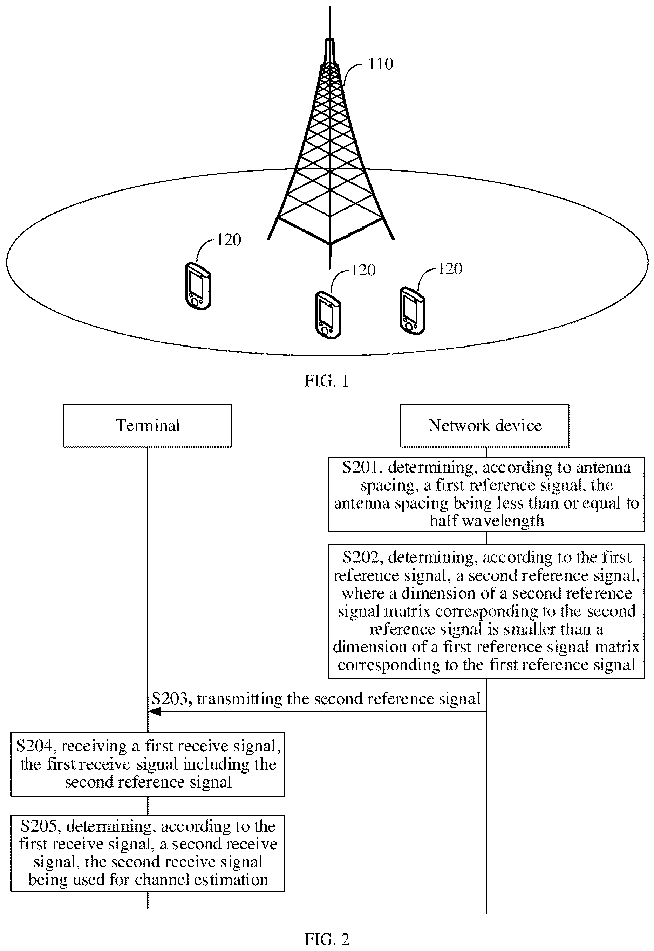

FIG. 1 is a diagram of an application scenario provided by an embodiment of the present disclosure. As shown in FIG. 1, the present embodiment provides a communication system, and the communication system includes a network device 110 and a plurality of terminals 120 where three terminals 120 are shown as an example in the present embodiment. The network device 110 transmits data to the terminals 120 through one or more downlink physical channels, where the data includes pilot data. After receiving the data transmitted by the network device 110, the terminals 120 extract the pilot data from the data, perform channel estimation according to the pilot data, and then demodulate the received data based on an estimated channel.

It should be noted that FIG. 1 is only a diagram of an application scenario provided by the embodiment of the present disclosure. In the embodiments of the present disclosure, the devices included in FIG. 1 are not limited, nor are the positional relationships between the devices in FIG. 1 limited.

For example, an execution subject of method embodiments in the present disclosure may be a terminal or a network device.

The following will describe the technical solutions of the embodiments in the present disclosure and how the technical solutions of the embodiments in the present disclosure solve the above-mentioned technical problems in detail with specific embodiments. The following specific embodiments may be implemented independently or in combination, and same or similar concepts or processes may not be repeated in some embodiments.

FIG. 2 is a first flow diagram of a signal processing method provided by an embodiment of the present disclosure, where a network device serves as a transmitting end, and a terminal serves as a receiving end. As shown in FIG. 2, the signal processing method in the embodiment of the present disclosure includes the following.

S201, determining, by the network device and according to antenna spacing, a first reference signal, the antenna spacing being less than or equal to half wavelength.

In the embodiment of the present disclosure, the first reference signal may be understood as a pilot signal. Referring to the above-mentioned formula 21, considering that the antenna spacing is less than or equal to the half wavelength, and the smaller the antenna spacing is, the stronger the correlation between antennas is, the network device may determine the first reference signal according to the antenna spacing.

Optionally, a dimension of a first reference signal matrix corresponding to the first reference signal and a first reference signal sequence corresponding to the first reference signal are both determined based on a channel sparsity characteristic and a compressed sensing principle.

For example, the first reference signal is a pilot signal, then the first reference signal matrix is a pilot matrix, and the first reference signal sequence is a pilot sequence. Compared to an isotropic scattering environment, a non-isotropic scattering environment has a characteristic of a channel being sparser. On the basis of the antenna spacing being less than or equal to the half wavelength and considering a channel sparsity characteristic in the isotropic scattering environment or in the non-isotropic scattering environment, a dimension of the pilot matrix and the pilot sequence may be determined based on the compressed sensing principle. Specifically, for example, the dimension of the pilot matrix may be determined based on a condition that the number of columns in the pilot matrix must satisfy; and the pilot sequence may be determined based on an orthogonal matrix. For specific details on how to determine the dimension of the first reference signal matrix and the first reference signal sequence, reference may be made to following embodiments.

S202, determining, by the network device and according to the first reference signal, a second reference signal, where a dimension of a second reference signal matrix corresponding to the second reference signal is smaller than the dimension of the first reference signal matrix corresponding to the first reference signal, and the second reference signal is used for channel estimation.

For example, referring to the above-mentioned channel model, since the matrix $H_a$ is a low-rank approximation of the channel matrix $H$, $\Phi_s$, $\Phi_r$, $e^{j\Gamma_r}$, and $e^{-j\Gamma_s}$ all depend only on factors such as antenna geometry and wavelength, etc., and $e^{j\Gamma_r}$ and $e^{-j\Gamma_s}$ may be regarded as filters, the dimensionality and complexity of signal processing can be reduced through low-rank approximation.

Optionally, the determining, according to the first reference signal, a second reference signal may include: performing, based on a first matrix, rank reduction on the first reference signal to determine the second reference signal, the first matrix being a two-dimensional spatial-frequency Fourier harmonic matrix corresponding to the network device.

For example, referring to the above-mentioned channel model, the network device is the transmitting end, and the first matrix is the two-dimensional spatial-frequency Fourier harmonic matrix $\Phi_s$ of the transmitting end. Multiplying $\Phi_s$ by the first reference signal implements the rank reduction on the first reference signal, to obtain the second reference signal. This step may be understood as preprocessing the first reference signal at the transmitting end, and the dimension of the second reference signal matrix corresponding to the second reference signal obtained after the preprocessing is smaller than the dimension of the first reference signal matrix. $\Phi_s$ may be regarded as a preprocessing matrix.

S203, transmitting, by the network device, the second reference signal.

In this step, after determining the second reference signal, the network device transmits the second reference signal, to cause the terminal to receive the second reference signal.

S204, receiving, by the terminal, a first receive signal, the first receive signal including the second reference signal transmitted by the network device.

The second reference signal is determined by the network device according to the first reference signal, and the first reference signal is determined by the network device according to the antenna spacing, the antenna spacing being less than or equal to the half wavelength.

It can be understood that the first receive signal received by the terminal may further include service data transmitted by the network device, in addition to the second reference signal transmitted by the network device.

S205, determining, by the terminal and according to the first receive signal, a second receive signal, the second receive signal being used for the channel estimation.

In this step, after receiving the first receive signal including the second reference signal transmitted by the network device, the terminal may determine the second receive signal according to the first receive signal.

Further, optionally, the determining, according to the first receive signal, a second receive signal may include: preprocessing, based on a second matrix, the first receive signal to obtain a preprocessed first receive signal, the second matrix being a two-dimensional spatial-frequency Fourier harmonic matrix corresponding to the terminal; and determining a receive signal including a preprocessed second reference signal extracted from the preprocessed first receive signal as the second receive signal.

For example, referring to the above-mentioned channel model, the terminal is the receiving end, and the second matrix is the two-dimensional spatial-frequency Fourier harmonic matrix $\Phi_r$ of the receiving end. Multiplying $\Phi_r$ by the first receive signal implements the preprocessing on the first receive signal, to obtain the preprocessed first receive signal. $\Phi_r$ may be regarded as a preprocessing matrix. The first reference signal sequence is the pilot sequence, and a receive signal of the preprocessed second reference signal may be extracted from the preprocessed first receive signal according to a time-frequency resource where the first reference signal sequence is located, to serve as the second receive signal.

In the embodiment of the present disclosure, the network device determines, according to the antenna spacing, the first reference signal, the antenna spacing being less than or equal to the half wavelength; the network device determines, according to the first reference signal, the second reference signal, the dimension of the second reference signal matrix corresponding to the second reference signal being smaller than the dimension of the first reference signal matrix corresponding to the first reference signal, to cause the terminal to receive the first receive signal including the second reference signal transmitted by the network device, determine, according to the first receive signal, the second receive signal, and use the second receive signal for channel estimation. Since the correlation between antennas when the antenna spacing is less than or equal to the half wavelength is considered to determine the first reference signal, and the dimension of the second reference signal matrix is smaller than the dimension of the first reference signal matrix, that is, the dimensionality of signal processing is reduced, the pilot overhead of holographic MIMO can be effectively reduced, and the complexity of the channel estimation can be effectively lowered when the channel estimation is performed based on the second receive signal.

On the basis of the above-mentioned embodiment shown in FIG. 2, referring to the above-mentioned channel model, in some embodiments, the second receive signal satisfies formula 22 as follows (i.e., the first formula):

$$\Phi_r^H Y = \Phi_r^H H \Phi_s P + \Phi_r^H N \qquad \text{formula 22}$$

where H is the channel matrix, $\mathbf{H} \in \mathbb{C}^{N_r \times N_s}$; $\Phi_s$ is the first matrix; $\Phi_r$ is the second matrix; $\boldsymbol{\Phi}_r^H$ represents a Hermitian

transpose matrix of $\Phi_r$; **P** represents the first reference signal matrix, $\mathbf{P} \in \mathbb{C}^{n_s \times \mathrm{m}}$, where m represents the number of time slots and/or resource blocks (Resource Blocks, RBs) occupied by the first reference signal (i.e., the pilot signal) in the time domain and/or frequency domain; $\Phi_s\mathbf{P}$ represents the second reference signal matrix; $\Phi_r^H\mathbf{Y}$ represents the second receive signal, $\mathbf{Y} \in \mathbb{C}^{N_r \times \mathrm{m}}$; and **N** represents Gaussian white noise at the terminal, $\mathbf{N} \in \mathbb{C}^{N_r \times \mathrm{m}}$, i.e., $\mathbf{N} \sim \mathcal{N}_{\mathbb{C}}(0, \sigma_N^2 \mathbf{I}_{N_r \times \mathrm{m}})$.

The above-mentioned formula 22 may be understood as a system model of a preprocessed transmitted pilot. By applying a vectorization operator vec(·) operation to the above-mentioned formula 22, formula 23 as follows can be obtained:

$$\mathrm{vec}(\Phi_r^H\mathbf{Y}) = \mathrm{vec}(\Phi_r^H\mathbf{H}\Phi_s\mathbf{P}) + \mathrm{vec}(\Phi_r^H\mathbf{N}) \qquad \text{formula 23}$$

According to the property vec(ABC) = ($\mathbf{C}^H \otimes \mathbf{A}$)vec(**B**) of the vectorization operator, formula 24 as follows can be obtained:

$$\mathrm{vec}(\Phi_r^H\mathbf{H}\Phi_s\mathbf{P}) = ((\Phi_s\mathbf{P})^H \otimes \Phi_r^H) \, \mathrm{vec}(\mathbf{H}) \qquad \text{formula 24}$$

By substituting the above-mentioned formula 20 into the above-mentioned formula 24, formula 25 as follows can be obtained:

$$\mathrm{vec}(\Phi_r^H\mathbf{H}\Phi_s\mathbf{P}) = ((\Phi_s\mathbf{P})^H \otimes \Phi_r^H)\mathbf{U}\Lambda^{1/2}\widetilde{\mathbf{w}} = ((\Phi_s\mathbf{P})^H \otimes \Phi_r^H)\Phi_s \otimes \Phi_r\Lambda^{1/2}\widetilde{\mathbf{w}}$$

formula 25

According to the property $(\mathbf{A} \otimes \mathbf{B})(\mathbf{C} \otimes \mathbf{D}) = \mathbf{AC} \otimes \mathbf{BD}$ of the vectorization operator, the above-mentioned formula 25 can be further transformed into formula 26 as follows:

$$\mathrm{vec}(\Phi_r^H\mathbf{H}\Phi_s\mathbf{P}) = ((\Phi_s\mathbf{P})^H\Phi_s) \otimes (\Phi_r^H\Phi_r)\Lambda^{\frac{1}{2}}\widetilde{\mathbf{w}} = \left(\mathbf{P}^H\mathbf{I}_{n_s}\right) \otimes \mathbf{I}_{n_r}\Lambda^{\frac{1}{2}}\widetilde{\mathbf{w}} =$$

$$\mathbf{P}^H \otimes \mathbf{I}_{n_r}\Lambda^{\frac{1}{2}}\widetilde{\mathbf{w}} \qquad \text{formula 26}$$

By substituting the above-mentioned formula 26 into the above-mentioned formula 23, formula 27 (i.e., the second formula) as follows can be obtained:

$$\mathrm{vec}(\Phi_r^H\mathbf{Y}) = \mathbf{P}^H \otimes \mathbf{I}_{n_r}\Lambda^{\frac{1}{2}}\widetilde{\mathbf{w}} + \mathrm{vec}(\Phi_r^H\mathbf{N}) \qquad \text{formula 27}$$

where $\mathrm{vec}(\Phi_r^H\mathbf{Y})$ represents vector expression of $\Phi_r^H\mathbf{Y}$; $\mathbf{P}^H$ represents a Hermitian transpose matrix of **P**; $\mathbf{I}_{n_r}$ represents an identity matrix of $n_r \times n_r$, and $n_r$ represents a cardinality of a two-dimensional lattice ellipse corresponding to the terminal in a wavenumber spectrum support set; $\Lambda$ represents a diagonal matrix including an eigenvalue of a channel autocorrelation matrix; $\widetilde{\mathbf{w}}$ is a complex Gaussian random vector with a mean of 0 and a variance of 1; $\Lambda^{\frac{1}{2}}\widetilde{\mathbf{w}}$ is a sparse vector corresponding to the eigenvalue of the channel autocorrelation matrix, the sparse vector being used for acquiring the channel matrix; and $\mathrm{vec}(\Phi_r^H\mathbf{N})$ represents vector expression of $\Phi_r^H\mathbf{N}$.

It can be understood that the receive signal including the preprocessed second reference signal and the first reference signal matrix satisfy the above-mentioned formula 27.

In some embodiments, the above-mentioned formula 27 (i.e., the second formula) may be used for acquiring the sparse vector.

Since $\Lambda^{\frac{1}{2}}\widetilde{\mathbf{w}}$ is the only unknown in the above-mentioned formula 27, the sparse vector $\Lambda^{\frac{1}{2}}\widetilde{\mathbf{w}}$ can be acquired through the above-mentioned formula 27.

Optionally, the second formula being used for acquiring the sparse vector may include: obtaining, based on the second formula and using a compressed sensing recovery algorithm, the sparse vector.

For example, the compressed sensing recovery algorithm may be an orthogonal matching pursuit algorithm (Orthogonal Matching Pursuit, OMP) algorithm. Based on the above-mentioned formula 27, the sparse vector can be obtained using the OMP algorithm. The OMP algorithm may refer to existing related technologies and will not be repeated here.

Furthermore, $\mathbf{P}^{\mathrm{H}} \otimes \mathbf{I}_{n_r} \in \mathbb{C}^{mn_r \times n_r n_s}$ in the above-mentioned formula 27 can be expanded into formula 28 as follows:

$$\mathbf{P}^{\mathrm{H}} \otimes \mathbf{I}_{n_r} = \begin{bmatrix} p_{11}\mathbf{I}_{n_r} & p_{21}\mathbf{I}_{n_r} & \cdots & p_{n_s1}\mathbf{I}_{n_r} \\ p_{12}\mathbf{I}_{n_r} & p_{22}\mathbf{I}_{n_r} & \cdots & p_{n_s2}\mathbf{I}_{n_r} \\ \vdots & \vdots & \cdots & \vdots \\ p_{1m}\mathbf{I}_{n_r} & p_{2m}\mathbf{I}_{n_r} & \cdots & p_{n_sm}\mathbf{I}_{n_r} \end{bmatrix} \qquad \text{formula 28}$$

To clearly express the format of the pilot signal, the above-mentioned formula 28 can be further expanded into formula 29 as follows:

$$\mathbf{P}^{\mathrm{H}} \otimes \mathbf{I}_{n_r} = \begin{bmatrix} p_{11} & \square & \square & \square & p_{21} & \square & \square & \square & & p_{n_s1} & \square & \square & \square \\ \square & p_{11} & \square & \square & \square & p_{21} & \square & \square & & \square & p_{n_s1} & \square & \square \\ \square & \square & \ddots & \square & \square & \square & \ddots & \square & & \square & \square & \ddots & \square \\ \square & \square & \square & p_{11} & \square & \square & \square & p_{21} & & \square & \square & \square & p_{n_s1} \\ p_{12} & \square & \square & \square & p_{22} & \square & \square & \square & \cdots & p_{n_s2} & \square & \square & \square \\ \square & p_{12} & \square & \square & \square & p_{22} & \square & \square & \cdots & \square & p_{n_s2} & \square & \square \\ \square & \square & \ddots & \square & \square & \square & \ddots & \square & \cdots & \square & \square & \ddots & \square \\ \square & \square & \square & p_{12} & \square & \square & \square & p_{22} & \cdots & \square & \square & \square & p_{n_s2} \\ & \vdots & & & & \vdots & & & & & \vdots & & \\ p_{1m} & \square & \square & \square & p_{2m} & \square & \square & \square & & p_{n_sm} & \square & \square & \square \\ \square & p_{1m} & \square & \square & \square & p_{2m} & \square & \square & & \square & p_{n_sm} & \square & \square \\ \square & \square & \ddots & \square & \square & \square & \ddots & \square & & \square & \square & \ddots & \square \\ \square & \square & \square & p_{1m} & \square & \square & \square & p_{2m} & & \square & \square & \square & p_{n_sm} \end{bmatrix}$$

Based on the above-mentioned embodiments, optionally, the number of non-zero eigenvalues of the channel autocorrelation matrix included in the diagonal matrix in a non-isotropic scattering environment is less than the number of non-zero eigenvalues of the channel autocorrelation matrix included in the diagonal matrix in an isotropic scattering environment.

For example, in the above-mentioned formula 27, only $\mathbf{\Lambda}^{\frac{1}{2}} \widetilde{\mathbf{W}} \in \mathbb{C}^{n_r n_s \times 1}$ is the unknown, and the number of equations is $m \times n_r$. The number of the non-zero eigenvalues of the channel autocorrelation matrix included in the diagonal matrix in the non-isotropic scattering environment is less than the number of the non-zero eigenvalues of the channel autocorrelation matrix included in the diagonal matrix in the isotropic scattering environment, i.e., $n'_s \times n'_r < n_r \times n_s$, then the number of equations $m \times n_r$ may be less than $n_r \times n_s$, that is, the above-mentioned formula 27 becomes an underdetermined equation, and $\mathbf{\Lambda}^{\frac{1}{2}} \widetilde{\mathbf{W}}$ is a sparse vector of $n'_s \times n'_r$.

Based on the above-mentioned formula 27, in a possible implementation, in the non-isotropic scattering environment, the dimension of the first reference signal matrix satisfies that the number of columns in the first reference signal matrix is greater than or equal to a non-linear multiple of a rank of a channel angle response matrix.

For example, in the non-isotropic scattering environment, since the above-mentioned formula 27 is an under-determined equation and $\mathbf{\Lambda}^{\frac{1}{2}} \widetilde{\mathbf{W}}$ is the sparse vector of $n'_s \times n'_r$, a recovery algorithm in the compressed sensing principle, such as the OMP algorithm, may be used to solve the above-mentioned formula 27 and obtain $\mathbf{\Lambda}^{\frac{1}{2}} \widetilde{\mathbf{W}}$. . According to the compressed sensing principle, the number of measurements M should satisfy a condition of $M \geq cK\log_2$

(*N/K*), where K represents the number of non-zero values in a sparse vector of length N, then the number of the columns in the first reference signal matrix should satisfy a condition of $n_s > m \geq c\frac{n'_s n'_r}{n_r}\log_2\left(\frac{n_r n_s}{n'_s n'_r}\right)$, that is, the number of the columns in the first reference signal matrix should be greater than or equal to a non-linear multiple of a rank $n'_s$ of the channel angle response matrix in the non-isotropic scattering environment, where *c* is an empirical constant, e.g., taking a value of 1.7.

Optionally, the first reference signal sequence is a randomly selected row of an orthogonal matrix; or, the first reference signal sequence is a pseudo-random sequence.

For example, in the non-isotropic scattering environment, the first reference signal matrix **P** is a matrix with fewer rows than columns. According to the compressed sensing principle, a measurement matrix should satisfy restricted isometry property, that is, the correlation between any two columns is small. According to the above-mentioned formula 29, it can be known that columns $1 + kn_r$ to $(k + 1) n_r$ of the matrix $\mathbf{P}^H \otimes \mathbf{I}_{n_r}$ are mutually orthogonal, where k = 0,1, ..., m, because the positions of non-zero elements therein are different; and columns with higher correlation are columns separated by integer multiples of $n_r$, because the positions of non-zero elements therein are the same, and the correlation between these columns becomes the correlation between different rows of the first reference signal matrix **P**. Therefore, if the correlation between rows of the first reference signal matrix **P** is small, the restricted isometry property of the measurement matrix is satisfied. According to the compressed sensing principle, a matrix obtained by randomly selecting rows from an orthogonal matrix can satisfy the restricted isometry property of the measurement matrix. Therefore, m rows may be randomly selected from an orthogonal matrix formed by cyclically shifted Zadoff-Chu sequences (a type of sequence transmitted in a communication signal) or discrete Fourier transform (Discrete Fourier Transform, DFT) sequences, to be m columns in the first reference signal matrix **P,** ensuring that the restricted isometry property of the measurement matrix is satisfied. Additionally, according to the compressed sensing principle, a random matrix has a high probability of satisfying the restricted isometry property. Therefore, the first reference signal sequence may also be designed as a pseudo-random sequence, for example, an m-sequence or a gold sequence. In summary, in the non-isotropic scattering environment, a randomly selected row of an orthogonal matrix or a pseudo-random sequence should be selected as the first reference signal sequence.

In some implementations, for the isotropic scattering environment, a third reference signal applied to the isotropic scattering environment may be determined, the number of columns in a third reference signal matrix corresponding to the third reference signal is equal to a cardinality of a two-dimensional lattice ellipse corresponding to the network device in the wavenumber spectrum support set, and a third reference signal sequence corresponding to the third reference signal is an orthogonal sequence or a quasi-orthogonal sequence.

The third reference signal may be understood as a pilot signal, then the third reference signal matrix corresponding to the third reference signal is a pilot matrix, and the third reference signal sequence corresponding to the third reference signal is a pilot sequence. For example, referring to the above-mentioned formula 27, only $\mathbf{\Lambda}^{\frac{1}{2}}\widetilde{\mathbf{w}} \in \mathbb{C}^{n_r n_s \times 1}$ is the unknown, and the number of equations is $m \times n_r$. In the isotropic scattering environment, the number of the non-zero eigenvalues of the channel autocorrelation matrix included in the diagonal matrix is $n_r \times n_s$, then the number of equations m $\times n_r$ equals $n_r \times n_s$, i.e., $m = n_s$. It can be determined that the third reference signal matrix is a square matrix, i.e., the number of columns m in the third reference signal matrix equals a cardinality $n_s$ of a two-dimensional lattice ellipse corresponding to the transmitting end in the wavenumber spectrum support set, and thereby it can be determined that the above-mentioned formular 27 is a positive definite equation.

Optionally, an eigenvalue vector of a channel autocorrelation matrix corresponding to an isotropic scattering environment is obtained by using a matrix inversion algorithm.

For example, in the isotropic scattering environment, since the above-mentioned formular 27 is a positive definite equation, the above-mentioned formular 27 may be solved by the matrix inversion algorithm, to obtain the eigenvalue vector of the channel autocorrelation matrix corresponding to the isotropic scattering environment, that is:

$$\mathbf{\Lambda}^{\frac{1}{2}}\widetilde{\mathbf{w}} = \left(\mathbf{P}^H \otimes \mathbf{I}_{n_r}\right)^{-1}\text{vec}(\mathbf{\Phi}_r^H \mathbf{Y})$$

In the isotropic scattering environment, the third reference signal matrix is a square matrix. Further, to ensure a unique solution for the unknown $\mathbf{\Lambda}^{\frac{1}{2}}\widetilde{\mathbf{W}}$, a rank of the third reference signal matrix should equal $n_s$. To simplify calculations, the third reference signal matrix is generally chosen to be an orthogonal matrix, so $P^{-1} = \mathbf{P}^H$. Therefore, the third reference signal sequence may be designed as an orthogonal sequence, such as a Zadoff-Chu sequence or a DFT sequence. However, a cyclically shifted Zadoff-Chu sequence is only orthogonal when a length thereof is a prime number, which is not conducive to reducing the pilot overhead. Therefore, in practice, the DFT sequence is more practical. Additionally, the third reference signal sequence may also be designed as a quasi-orthogonal sequence, such as an m-sequence (i.e., a longest linear feedback shift register sequence) or a Gold sequence (a sequence constructed by modulo-2 addition of cyclic shifts of preferred pairs of m-sequences), but this increases the complexity of the channel estimation. In summary, in the isotropic scattering environment, an orthogonal sequence or a quasi-orthogonal sequence should be selected as the pilot sequence.

Based on the above-mentioned embodiments, after $\Lambda^{\frac{1}{2}}\widetilde{\mathbf{w}}$ is obtained, the channel estimation may be performed based on the above-mentioned formula 20. In an example, in the isotropic scattering environment, if the pilot matrix **P** is an orthogonal matrix, a channel estimation expression based on a least squares algorithm (Least Square, LS) is derived as follows, where an expression of the unknown $\Lambda^{\frac{1}{2}}\widetilde{\mathbf{w}}$ is formula 30 as follows:

$$\Lambda^{\frac{1}{2}}\widetilde{\mathbf{w}} = \left(\mathbf{P}^H \otimes \mathbf{I}_{n_r}\right)^{-1} \mathrm{vec}(\mathbf{\Phi}_r^H \mathbf{Y}) = \left(\mathbf{P} \otimes \mathbf{I}_{n_r}\right)(\mathbf{I} \otimes \mathbf{\Phi}_r^H)\mathrm{vec}(\mathbf{Y}) = (\mathbf{P} \otimes \mathbf{\Phi}_r^H)\mathrm{vec}(\mathbf{Y})$$

formula 30

By substituting the above-mentioned formula 30 into the above-mentioned formula 20, formula 31 as follows can be obtained:

$$\mathrm{vec}(\mathbf{H}) = \mathbf{U}(\mathbf{P} \otimes \mathbf{\Phi}_r^H)\mathrm{vec}(\mathbf{Y}) = (\mathbf{\Phi}_s \otimes \mathbf{\Phi}_r)(\mathbf{P} \otimes \mathbf{\Phi}_r^H)\mathrm{vec}(\mathbf{Y}) =$$

$$(\mathbf{\Phi}_s \mathbf{P}) \otimes (\mathbf{\Phi}_r \mathbf{\Phi}_r^H)\ \mathrm{vec}(\mathbf{Y}) \qquad \text{formula 30}$$

In another example, in the non-isotropic scattering environment, the channel estimation requires deriving the solution according to the compressed sensing recovery algorithm, where a corresponding measurement matrix is **A** = $\mathbf{P}^H \otimes \mathbf{I}_{n_r}$, then recover may be performed according to an OMP algorithm or a basis pursuit (Basis Pursuit, BP) algorithm in compressed sensing, to obtain the sparse vector $\Lambda^{\frac{1}{2}}\widetilde{\mathbf{w}}$; and then based on the above-mentioned formula 20, the vector expression of the channel matrix **H** can be obtained, i.e., $\mathrm{vec}(\mathbf{H}) = \mathbf{U}\Lambda^{\frac{1}{2}}\widetilde{\mathbf{w}}$, where $\mathbf{U} = \mathbf{\Phi}_s \otimes \mathbf{\Phi}_r \in \mathbb{C}^{N_r N_s \times n_r n_s}$.

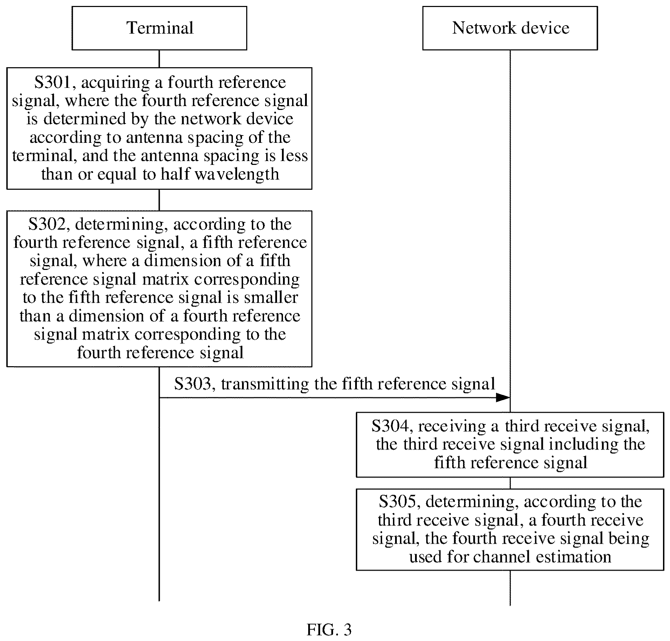

Based on the above-mentioned embodiments, FIG. 3 is a second flow diagram of a signal processing method provided by an embodiment of the present disclosure, where a terminal serves as a transmitting end and a network device serves as a receiving end. As shown in FIG. 3, the signal processing method of the embodiment in the present disclosure includes the following.

S301, acquiring, by the terminal, a fourth reference signal, where the fourth reference signal is determined by the network device according to antenna spacing of the terminal, and the antenna spacing is less than or equal to half wavelength.

In the present embodiment, the fourth reference signal may be understood as a pilot signal. Optionally, the acquiring, by the terminal, a fourth reference signal may include: acquiring the fourth reference signal locally from the terminal, the fourth reference signal being pre-configured by the network device for the terminal; or, acquiring the fourth reference signal from the network device in a one-time manner via RRC signaling or MAC-CE signaling.

In an example, the network device determines the fourth reference signal according to the antenna spacing of the terminal, where the antenna spacing is less than or equal to the half wavelength. The fourth reference signal may be pre-configured to the terminal in a pre-configured manner and stored locally in the terminal, and thus the terminal can acquire the fourth reference signal locally. In another example, after the network device determines the fourth reference signal according to the antenna spacing of the terminal, the fourth reference signal may be acquired from the network device via the RRC signaling or the MAC-CE signaling in a one-time manner, that is, only one-time transmission is needed.

Optionally, a dimension of a fourth reference signal matrix corresponding to the fourth reference signal and a fourth reference signal sequence corresponding to the fourth reference signal are both determined based on a channel sparsity characteristic and a compressed sensing principle.

Optionally, in a non-isotropic scattering environment, the dimension of the fourth reference signal matrix satisfies that the number of columns in the fourth reference signal matrix is greater than or equal to a non-linear multiple of a rank of a channel angle response matrix.

Optionally, the fourth reference signal sequence is a randomly selected row of an orthogonal matrix; or, the fourth reference signal sequence is a pseudo-random sequence.

In this step, implementation principles and technical effects of the fourth reference signal may be referred to the first reference signal in the above-mentioned embodiments, and will not be repeated here.

S302, determining, by the terminal and according to the fourth reference signal, a fifth reference signal, where a dimension of a fifth reference signal matrix corresponding to the fifth reference signal is smaller than the dimension of the fourth reference signal matrix corresponding to the fourth reference signal, and the fifth reference signal is used for channel estimation.

Further, optionally, the determining, according to the fourth reference signal, a fifth reference signal may include: performing, based on a third matrix, rank reduction on the fourth reference signal to determine the fifth reference signal, the third matrix being a two-dimensional spatial-frequency Fourier harmonic matrix corresponding to the terminal.

For example, referring to the above-mentioned channel model, the terminal is the transmitting end, and the third matrix is a two-dimensional spatial-frequency Fourier harmonic matrix of the transmitting end. Multiplying the fourth reference signal by the third matrix implements the rank reduction on the fourth reference signal, to obtain the fifth reference signal.

In this step, implementation principles and technical effects of the fifth reference signal may be referred to the second reference signal in the above-mentioned embodiments, and will not be repeated here.

S303, transmitting, by the terminal, the fifth reference signal.

S304, receiving, by the network device, a third receive signal, the third receive signal including the fifth reference signal transmitted by the terminal.

The fifth reference signal is determined by the terminal according to the fourth reference signal, and the fourth reference signal is determined by the network device according to the antenna spacing of the terminal, the antenna spacing being less than or equal to the half wavelength.

In this step, implementation principles and technical effects of the third receive signal may be referred to the first receive signal in the above-mentioned embodiments, and will not be repeated here.

S305, determining, by the network device and according to the third receive signal, a fourth receive signal, the fourth receive signal being used for channel estimation.

In this step, after receiving the third receive signal, the network device may determine the fourth receive signal according to the third receive signal. Further, optionally, the determining, according to the third receive signal, a fourth receive signal may include: preprocessing, based on a fourth matrix, the third receive signal to obtain a preprocessed third receive signal, the fourth matrix being a two-dimensional spatial-frequency Fourier harmonic matrix corresponding to the network device; and determining a receive signal including a preprocessed fifth reference signal extracted from the preprocessed third receive signal as the fourth receive signal.

Optionally, the fourth receive signal satisfies formula 32 as follows (i.e., the third formula):

$$\widehat{\boldsymbol{\Phi}}_r^{\mathrm{H}}\widehat{\boldsymbol{Y}} = \widehat{\boldsymbol{\Phi}}_r^{\mathrm{H}}\widehat{\boldsymbol{H}}\widehat{\boldsymbol{\Phi}}_s\widehat{\boldsymbol{P}} + \widehat{\boldsymbol{\Phi}}_r^{\mathrm{H}}\widehat{\boldsymbol{N}} \qquad \text{formula } 32$$

where H represents a channel matrix; $\hat{\boldsymbol{\Phi}}_s$ represents the third matrix, the third matrix being the two-dimensional spatial-frequency Fourier harmonic matrix corresponding to the terminal; $\hat{\boldsymbol{\Phi}}_r$ represents the fourth matrix; $\widehat{\boldsymbol{\Phi}}_r^{\mathrm{H}}$ represents a Hermitian transpose matrix of $\hat{\boldsymbol{\Phi}}_r$; $\hat{\boldsymbol{P}}$ represents the fourth reference signal matrix corresponding to the fourth reference signal; $\hat{\boldsymbol{\Phi}}_s\hat{\boldsymbol{P}}$ represents the fifth reference signal matrix corresponding to the fifth reference signal; $\widehat{\boldsymbol{\Phi}}_r^{\mathrm{H}}\widehat{\boldsymbol{Y}}$ represents the fourth receive signal; and $\hat{\boldsymbol{N}}$ represents Gaussian white noise of the network device.

Optionally, the fourth receive signal and the fourth reference signal matrix satisfy formula 33 as follows (i.e., the fourth formula):

$$\mathrm{vec}\!\left(\widehat{\boldsymbol{\Phi}}_r^{\mathrm{H}}\widehat{\boldsymbol{Y}}\right) = \widehat{\boldsymbol{P}}^{\mathrm{H}}\!\otimes\!\mathbf{I}_{n_r}\widehat{\boldsymbol{\Lambda}}^{\frac{1}{2}}\widehat{\boldsymbol{w}} + \mathrm{vec}\!\left(\widehat{\boldsymbol{\Phi}}_r^{\mathrm{H}}\widehat{\boldsymbol{N}}\right) \qquad \text{formula } 33$$

where $\mathrm{vec}\!\left(\widehat{\boldsymbol{\Phi}}_r^{\mathrm{H}}\widehat{\boldsymbol{Y}}\right)$ represents vector expression of $\widehat{\boldsymbol{\Phi}}_r^{\mathrm{H}}\widehat{\boldsymbol{Y}}$; $\hat{\boldsymbol{P}}^{\mathrm{H}}$ represents a Hermitian transpose matrix of $\hat{\boldsymbol{P}}$; $\mathbf{I}_{n_r}$ represents an identity matrix of $n_r \times n_r$, $n_r$ representing a cardinality of a two-dimensional lattice ellipse corresponding to the network device in a wavenumber spectrum support set; $\hat{\Lambda}$ represents a diagonal matrix including an eigenvalue of a channel autocorrelation matrix, $\hat{\boldsymbol{w}}$ represents a complex Gaussian random vector with a mean of 0 and a variance of 1, $\widehat{\boldsymbol{\Lambda}}^{\frac{1}{2}}\widehat{\boldsymbol{w}}$ represents a sparse vector corresponding to the eigenvalue of the channel autocorrelation matrix, and the sparse vector is used for acquiring the channel matrix; and $\mathrm{vec}\!\left(\widehat{\boldsymbol{\Phi}}_r^{\mathrm{H}}\widehat{\boldsymbol{N}}\right)$ represents vector expression of $\widehat{\boldsymbol{\Phi}}_r^{\mathrm{H}}\widehat{\boldsymbol{N}}$.

Optionally, the fourth formula is used for acquiring the sparse vector.

Further, optionally, the fourth formula being used for acquiring the sparse vector may include: obtain the sparse vector based on the fourth formula and using a compressed sensing recovery algorithm.

Optionally, an eigenvalue vector of a channel autocorrelation matrix corresponding to the isotropic scattering environment is obtained by using a matrix inversion algorithm.

In this step, implementation principles and technical effects of the fourth receive signal may be referred to the second receive signal in the above-mentioned embodiments, and will not be repeated here.

In the embodiment of the present disclosure, the terminal acquires the fourth reference signal, where the fourth reference signal is determined by the network device according to the antenna spacing of the terminal, the antenna spacing being less than or equal to the half wavelength; the terminal determines, according to the fourth reference signal, the fifth reference signal, the dimension of the fifth reference signal matrix corresponding to the fifth reference signal is smaller than the dimension of the fourth reference signal matrix corresponding to the fourth reference signal, and the terminal transmits the fifth reference signal; the network device receives the third receive signal including the fifth reference signal transmitted by the terminal and determines, according to the third receive signal, the fourth receive signal, the fourth receive signal being used for the channel estimation. Since the correlation between antennas when the antenna spacing is less than or equal to the half wavelength is considered to determine the fourth reference signal, and the dimension of the fifth reference signal matrix is smaller than the dimension of the fourth reference signal matrix, that is, the dimensionality of signal processing is reduced, the pilot overhead of holographic MIMO can be effectively reduced, and the complexity of the channel estimation can be effectively lowered when the channel estimation is performed based on the fourth receive signal.

On the basis of the above-mentioned embodiment shown in FIG. 3, in some embodiments, for the isotropic scattering environment, the terminal may acquire a sixth reference signal applied to the isotropic scattering environment, where the sixth reference signal is determined by the network device according to the antenna spacing of the terminal, the number of columns in a sixth reference signal matrix corresponding to the sixth reference signal is equal to a cardinality of a two-dimensional lattice ellipse corresponding to the terminal in the wavenumber spectrum support set, and a sixth reference signal sequence corresponding to the sixth reference signal is an orthogonal sequence or a quasi-orthogonal sequence.

It can be understood that after determining the sixth reference signal according to the antenna spacing of the terminal, the network device may pre-configure the sixth reference signal to the terminal, to enable the terminal to acquire the sixth reference signal locally; or, the terminal acquires the sixth reference signal from the network device via RRC signaling or MAC-CE signaling in a one-time manner. Implementation principles and technical effects of the sixth reference signal may be referred to the third reference signal in the above-mentioned embodiments, and will not be repeated here.

On the basis of the above-mentioned embodiments, taking the network device being a base station as an example, the signal processing method provided by the embodiments of the present disclosure is further explained with signaling interaction between the base station and the terminal. In the embodiments of the present disclosure, the preprocessing matrix $\hat{\Phi}_s$ of the transmitting end and the preprocessing matrix $\Phi_r$ of the receiving end both depend on their respective array geometries. According to the above-mentioned formulas 13 and 14, it can be determined that the preprocessing matrix $\Phi_s$ of the transmitting end depends on position information $(s_{x_j}, s_{y_j})$ of antennas of the transmitting end on the x-axis and y-axis in a Cartesian coordinate system, and the preprocessing matrix $\Phi_r$ of the receiving end depends on position information $(r_{x_i}, r_{y_i})$ of antennas of the receiving end on the x-axis and y-axis. Specifically, the signaling interaction between the base station and the terminal includes two scenarios: downlink communication and uplink communication.

(1) Downlink communication: referring to the embodiment shown in FIG. 2, the base station is the transmitting end, and the terminal is the receiving end; since a position of the base station is generally fixed and known, the preprocessing matrix $\Phi_s$ of the base station is fixed and known, and position information of the terminal needs to be determined by interaction with the base station for positioning or by global positioning system (Global Positioning System, GPS) positioning, that is, the preprocessing matrix $\Phi_r$ of the terminal needs to be determined according to positioning information of the terminal;

when channel estimation is performed using LS in the isotropic scattering environment, according to the above-mentioned formula 31, the base station needs to transmits the preprocessing matrix $\Phi_s$ thereof to the terminal; when channel estimation is performed using the compressed sensing recovery algorithm in a non-isotropic scattering environment, according to the above-mentioned formula 27, the sparse vector $\Lambda^{\frac{1}{2}}\widetilde{\mathbf{w}}$ can be obtained, then, based on the above-mentioned formula 20, the vector expression of the channel matrix **H** can be obtained, i.e., $\mathrm{vec}(\mathbf{H}) = \mathbf{U}\Lambda^{\frac{1}{2}}\widetilde{\mathbf{w}}$, where $\mathbf{U} = \Phi_s \otimes \Phi_r \in \mathbb{C}^{N_r N_s \times n_r n_s}$; therefore, the base station also needs to notify the terminal of the preprocessing matrix $\Phi_s$, however, since the position of the base station is generally fixed and known, i.e., the preprocessing matrix $\Phi_s$ is generally constant, thus, the preprocessing matrix $\Phi_s$ may be pre-configured in the terminal, or notified to the terminal in a pre-configured manner, or the base station may transmit the preprocessing matrix $\Phi_s$ via RRC signaling. It should be noted that transmission of the base station only needs to be performed once, and after storage of the terminal, the transmission to the terminal is no longer needed.

(2) Uplink communication: referring to the embodiment shown in FIG. 3, the terminal is the transmitting end, and the base station is the receiving end; since the position of the base station is generally fixed and known, the preprocessing matrix $\Phi_r$ of the base station is fixed and known, and the position information of the terminal needs to be determined by interaction with the base station for positioning or by GPS satellite positioning, that is, the preprocessing matrix $\Phi_s$ of the terminal needs to be determined according to the positioning information of the terminal;

when channel estimation is performed using LS in the isotropic scattering environment, according to the above-mentioned formula 31, the terminal needs to transmit the preprocessing matrix $\Phi_s$ thereof to the base station, or the base station determines the position of the terminal by a positioning method to further determine $\Phi_s$;

when channel estimation is performed using the compressed sensing recovery algorithm in the non-isotropic scattering environment, according to the above-mentioned formula 27, the sparse vector $\Lambda^{\frac{1}{2}}\widetilde{\mathbf{w}}$ can be obtained, and then, based on the above-mentioned formula 20, the vector expression of the channel matrix $\mathbf{H}$ can be obtained, i.e., $\mathrm{vec}(\mathbf{H}) = \mathbf{U}\Lambda^{\frac{1}{2}}\widetilde{\mathbf{w}}$, where $\mathbf{U} = \Phi_s \otimes \Phi_r \in \mathbb{C}^{N_r N_s \times n_r n_s}$; therefore, the terminal also needs to notify the base station of the preprocessing matrix $\Phi_s$ and since the position of the terminal may change, the terminal needs to transmit the preprocessing matrix $\Phi_s$ to the base station each time; or by acquiring the position information of the terminal (or the terminal reporting the position information thereof to the base station), the base station determines the preprocessing matrix $\Phi_s$ according to the position information of the terminal; or, after acquiring the position information of the terminal (or the terminal reports the position information thereof to the base station), the base station determines the preprocessing matrix $\Phi_s$, establishes a mapping table between the position information of the terminal and the preprocessing matrix $\Phi_s$, and stores the mapping table, to facilitate the base station to acquire the preprocessing matrix $\Phi_s$ of the terminal by acquiring the position information of the terminal (or the terminal reporting the position information thereof to the base station).

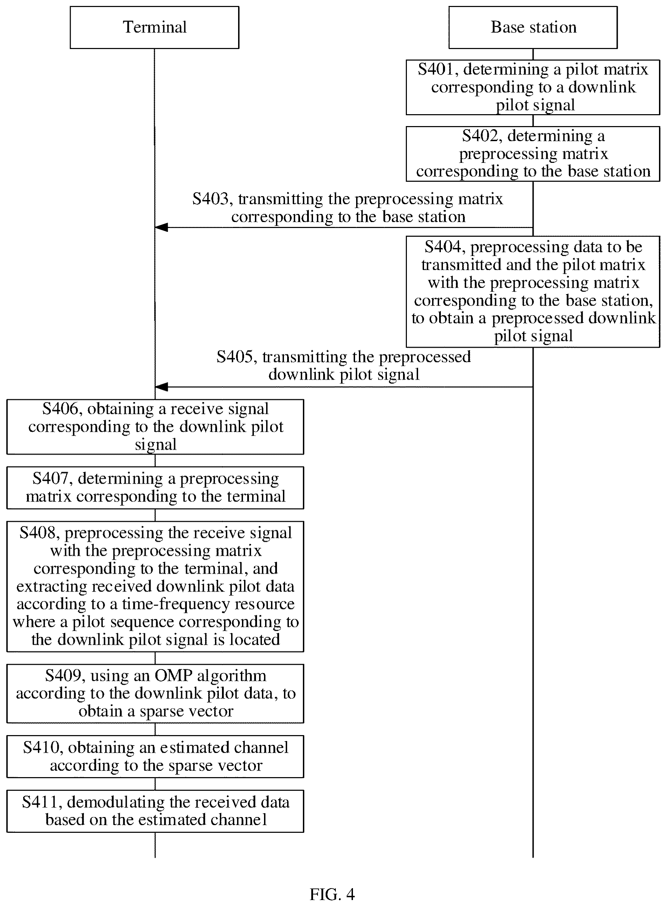

On the basis of the above-mentioned embodiments, in an example, FIG. 4 is a flow diagram of downlink pilot transmission and channel estimation in a non-isotropic scattering environment provided by an embodiment of the present disclosure, where the base station is the transmitting end and the terminal is the receiving end. As shown in FIG. 4, the present embodiment may include following steps.

S401, randomly selecting, by the base station, m rows from an orthogonal matrix formed by cyclically shifted DFT sequences of length $n_s$ as m columns of a pilot matrix $\mathbf{P}$ corresponding to a downlink pilot signal, thereby determining the pilot matrix $\mathbf{P}$, where m satisfies a condition: $n_s > m \geq c\,\dfrac{n_s' n_r'}{n_r}\log_2\left(\dfrac{n_r n_s}{n_s' n_r'}\right)$,

S402, determining, by the base station, the preprocessing matrix $\Phi_s$ corresponding to the base station, where $\Phi_s$ is a deterministic matrix composed of $n_s$ vectors $\phi_s(m_x, m_y)$, and an expression of a $j$-th element of $\phi_s(m_x, m_y)$ is shown in the above-mentioned formula 13.

S403, transmitting, by the base station, the preprocessing matrix $\Phi_s$ to the terminal via RRC signaling.

It should be noted that the base station only needs to transmit $\Phi_s$ to the terminal once, and after the terminal stores $\Phi_s$, the base station no longer needs to transmit $\Phi_s$ to the terminal.

S404, preprocessing, by the base station, data $\mathbf{X}$ to be transmitted and the pilot matrix $\mathbf{P}$, that is, multiplying the preprocessing matrix $\hat{\Phi}_s$ corresponding to the base station by the data to be transmitted and the pilot matrix $\mathbf{P}$, to obtain a preprocessed downlink pilot signal $\Phi_s(\mathbf{X} + \mathbf{P})$.

S405, transmitting, by the base station, the preprocessed downlink pilot signal $\Phi_s(\mathbf{X} + \mathbf{P})$ to the terminal.

S406, receiving, by the terminal, the preprocessed downlink pilot signal transmitted by the base station, to obtain a corresponding receive signal $\mathbf{Y}_t = \mathbf{H}\Phi_s(\mathbf{X} + \mathbf{P}) + \mathbf{N}$.

S407, determining, by the terminal, the preprocessing matrix $\Phi_r$ corresponding to the terminal, where $\Phi_r$ is a deterministic matrix composed of $n_r$ vectors $\phi_r(\ell_x, \ell_y)$, and an expression of an $i$-th element of $\phi_r(\ell_x, \ell_y)$ is shown in the above-mentioned formula 14.

S408, preprocessing, by the terminal, the receive signal, that is, multiplying the matrix $\Phi_r^{\mathrm{H}}$ by the receive signal $\mathbf{Y}_t$, and extracting received downlink pilot data according to a time-frequency resource where a pilot sequence corresponding to the downlink pilot signal is located, to obtain $\boldsymbol{\Phi}_r^H \mathbf{Y} = \boldsymbol{\Phi}_r^H \mathbf{H} \boldsymbol{\Phi}_s \mathbf{P} + \boldsymbol{\Phi}_r^H \mathbf{N}$ .

S409, using, by the terminal, an OMP algorithm based on the above-mentioned formula 27 and according to the extracted downlink pilot data, to obtain the sparse vector $\Lambda^{\frac{1}{2}} \widetilde{\mathbf{w}}$.

S410, obtaining, by the terminal, the vector expression of the channel matrix **H** based on the above-mentioned formula 20 and according to the sparse vector $\Lambda^{\frac{1}{2}} \widetilde{\mathbf{w}}$, i.e., $\mathrm{vec}(\mathbf{H}) = \mathbf{U}\Lambda^{\frac{1}{2}} \widetilde{\mathbf{w}}$, where $\mathbf{U} = \boldsymbol{\Phi}_s \otimes \boldsymbol{\Phi}_r \in \mathbb{C}^{N_r N_s \times n_r n_s}$, where $\Phi_s$ is transmitted to the terminal by the base station via RRC signaling and stored by the terminal.

It can be understood that obtaining the vector expression of the channel matrix **H** means obtaining an estimated channel.

S411, demodulating, by the terminal, the received data based on the estimated channel.

Based on the embodiment shown in FIG. 4, for the non-isotropic scattering environment, the downlink pilot overhead of holographic MIMO can be effectively reduced, thereby reducing the complexity of downlink channel estimation.

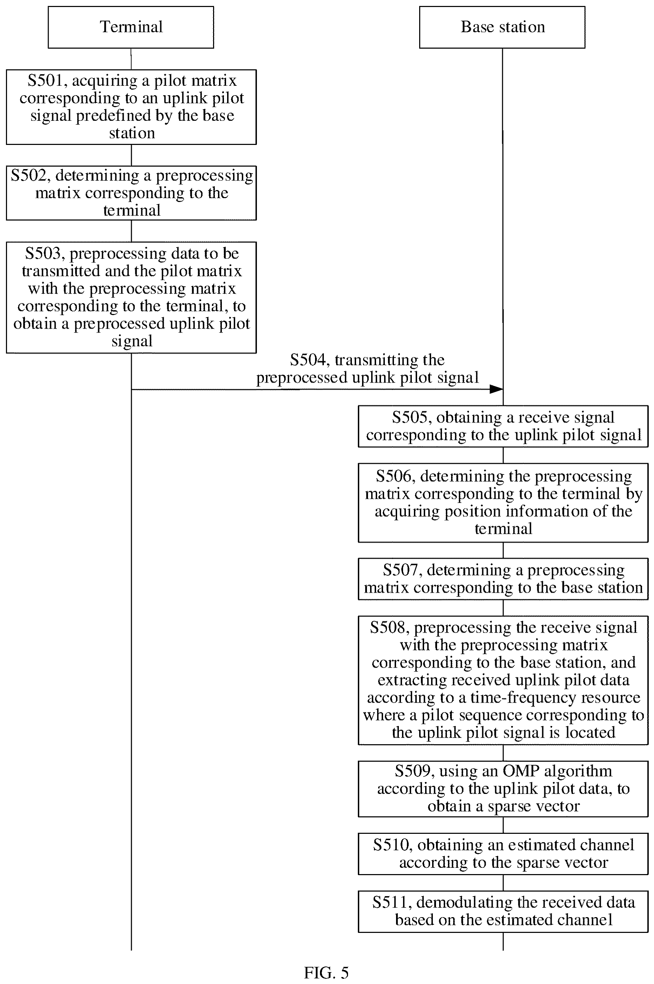

In another example, FIG. 5 is a flow diagram of uplink pilot transmission and channel estimation in a non-isotropic scattering environment provided by an embodiment of the present disclosure, where the terminal is the transmitting end and the base station is the receiving end. As shown in FIG. 5, the present embodiment may include following steps.

S501, acquiring, by the terminal, a pilot matrix **P** corresponding to an uplink pilot signal predefined by the base station, where the pilot matrix **P** is obtained as follows: randomly selecting $\hat{m}$ rows from an orthogonal matrix formed by cyclically shifted DFT sequences of length $\hat{n}_s$ as the $\hat{m}$ columns in the pilot matrix $\hat{\mathbf{P}}$, thereby obtaining the pilot matrix $\hat{\mathbf{P}}$, where $\hat{m}$ satisfies a following condition: $\hat{n}_s > \hat{m} \geq c\frac{\hat{n}_s'\hat{n}_r'}{\hat{n}_r}\log_2\left(\frac{\hat{n}_r\hat{n}_s}{\hat{n}_s'\hat{n}_r'}\right)$, and implementation principles and technical effects of parameters in this condition are similar to those of m in step S401 and will not be repeated here.

It should be noted that in the embodiment shown in FIG. 5, the symbol $\widehat{\vdots}$ indicates that the terminal is the transmitting end and the base station is the receiving end, and the physical meaning represented by this symbol is the same as the meaning in the embodiment shown in FIG. 4, where the base station is the transmitting end and the terminal is the receiving end, except that the roles of the transmitting end and the receiving end are swapped.

For example, the base station may pre-configure the pilot matrix **P** corresponding to the uplink pilot signal to the terminal or transmit the pilot matrix **P** to the terminal via RRC signaling or MAC-CE signaling in a one-time manner.

S502, determining, by the terminal, a preprocessing matrix $\hat{\Phi}_s$ corresponding to the terminal, where $\hat{\Phi}_s$ is a deterministic matrix composed of $\hat{n}_s$ vectors $\hat{\phi}_s(\hat{m}_x, \hat{m}_y)$, and an expression of a $\hat{j}$-th element of $\hat{\phi}_s(\hat{m}_x, \hat{m}_y)$ satisfies formula 34 as follows:

$$\left[\hat{\boldsymbol{\phi}}_s(\hat{m}_x, \hat{m}_y)\right]_{\hat{j}} = \frac{1}{\sqrt{\hat{N}_s}} \hat{\phi}_s\left(\hat{m}_x, \hat{m}_y, \hat{s}_{x_{\hat{j}}}, \hat{s}_{y_{\hat{j}}}\right) = \frac{1}{\sqrt{\hat{N}_s}} e^{j\left(\frac{2\pi}{\hat{L}_{s,x}}\hat{m}_x\hat{s}_{x_{\hat{j}}} + \frac{2\pi}{L_{s,y}}\hat{m}_y\hat{s}_{y_{\hat{j}}}\right)}$$

formula 34

Implementation principles and technical effects of parameters in formula 34 are similar to those in the above-mentioned formula 13 and will not be repeated here.

S503, preprocessing, by the terminal, data $\hat{\mathbf{X}}$ to be transmitted and the pilot matrix $\hat{\mathbf{P}}$, that is, multiplying the preprocessing matrix $\hat{\Phi}_s$ corresponding to the terminal by the data to be transmitted and the pilot matrix $\hat{\mathbf{P}}$, to obtain a preprocessed uplink pilot signal $\hat{\Phi}_s(\hat{\mathbf{X}} + \hat{\mathbf{P}})$.

S504, transmitting, by the terminal, the preprocessed uplink pilot signal $\hat{\Phi}_s(\hat{\mathbf{X}} + \hat{\mathbf{P}})$ to the base station.

S505, receiving, by the base station, the preprocessed uplink pilot signal transmitted by the terminal, to obtain a corresponding receive signal $\hat{\mathbf{Y}}_t = \hat{\mathbf{H}}\hat{\Phi}_s(\hat{\mathbf{X}} + \hat{\mathbf{P}}) + \hat{\mathbf{N}}$.

Implementation principles and technical effects of parameters in this step are similar to those in step S406 and will not be repeated here.

S506, determining, by the base station, the preprocessing matrix $\hat{\Phi}_s$ corresponding to the terminal by acquiring position information of the terminal.

For example, if the base station has established a mapping table between the position information of the terminal and the preprocessing matrix of the terminal transmitting end, a corresponding preprocessing matrix of the terminal transmitting end may be directly searched for according to the position information of the terminal.

S507, determining, by the base station, a preprocessing matrix $\hat{\Phi}_r$ corresponding to the base station, where $\hat{\Phi}_r$ is a deterministic matrix composed of $\hat{n}_r$ vectors $\hat{\phi}_r(\hat{\ell}_x, \hat{\ell}_y)$, and an expression of an $i$-th element of $\hat{\phi}_r(\hat{\ell}_x, \hat{\ell}_y)$ satisfies formula 35 as follows:

$$\left[\hat{\phi}_r\left(\hat{\ell}_x, \hat{\ell}_y\right)\right]_i = \frac{1}{\sqrt{N_s}} \hat{\phi}_r\left(\hat{\ell}_x, \hat{\ell}_y, \hat{r}_{x_i}, \hat{r}_{y_i}\right) = \frac{1}{\sqrt{\hat{N}_r}} e^{j\left(\frac{2\pi}{L_{R,x}} \hat{\ell}_x \hat{r}_{x_i} + \frac{2\pi}{L_{R,y}} \hat{\ell}_y \hat{r}_{y_i}\right)} \quad \text{formula 35}$$

Implementation principles and technical effects of parameters in formula 35 are similar to those in the above-mentioned formula 14 and will not be repeated here.

S508, preprocessing, by the base station, the receive signal, that is, multiplying the matrix $\hat{\Phi}_r^H$ by the receive signal $\hat{Y}_t$, and extracting received uplink pilot data according to a time-frequency resource where a pilot sequence corresponding to the uplink pilot signal is located, to obtain $\hat{\Phi}_r^H \hat{Y} = \hat{\Phi}_r^H \hat{H} \hat{\Phi}_s \hat{P} + \hat{\Phi}_r^H \hat{N}$ (i.e., formula 32).

S509, using, by the base station, an OMP algorithm based on the above-mentioned formula 33 and according to the extracted uplink pilot data, to obtain the sparse vector $\hat{\Lambda}^{\frac{1}{2}} \hat{w}$.

S510, obtaining, by the base station, the vector expression of the channel matrix $\hat{H}$ based on formula 36 as follows and according to the sparse vector $\hat{\Lambda}^{\frac{1}{2}} \hat{w}$:

$$\text{vec}(\hat{H}) = \hat{U} \hat{\Lambda}^{\frac{1}{2}} \hat{w} \quad \text{formula 36}$$

where $\hat{U} = \hat{\Phi}_s \otimes \hat{\Phi}_r \in \mathbb{C}^{\hat{N}_r \hat{N}_s \times \hat{n}_r \hat{n}_s}$, and $\hat{\Phi}_s$ is obtained by the base station by acquiring the position information of the terminal.

Implementation principles and technical effects of parameters in formula 36 are similar to those in the above-mentioned formula 20 and will not be repeated here. It can be understood that obtaining the vector expression of the channel matrix $\hat{H}$ means obtaining an estimated channel.

S511, demodulating, by the base station, the received data based on the estimated channel.

Based on the embodiment shown in FIG. 5, for the non-isotropic scattering environment, the uplink pilot overhead of holographic MIMO can be effectively reduced, thereby reducing the complexity of uplink channel estimation.

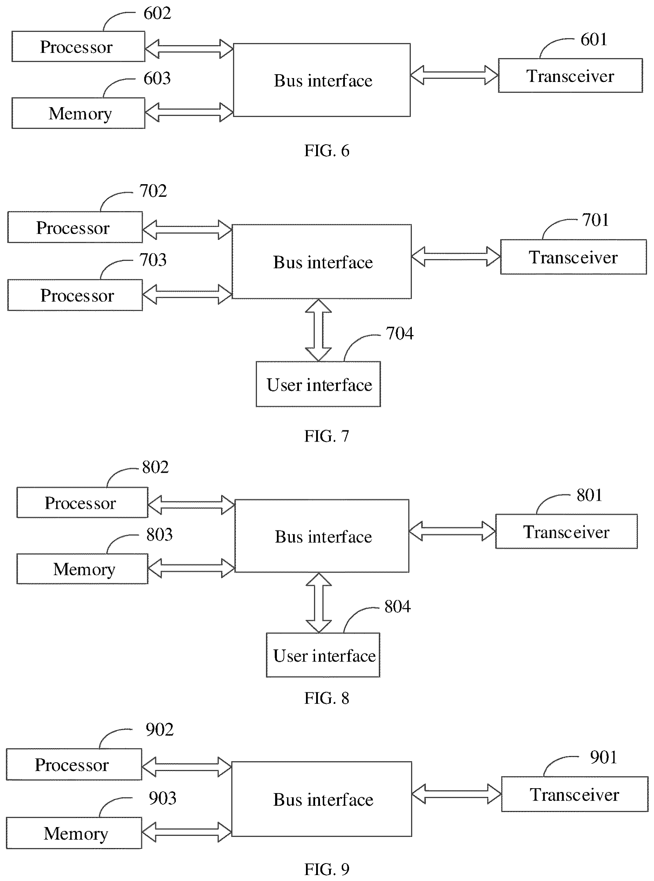

On a network side, an embodiment of the present disclosure provides a signal processing apparatus, and the signal processing apparatus in the present embodiment may be a network device. As shown in FIG. 6, the signal processing apparatus may include a transceiver 601, a processor 602, and a memory 603.

The transceiver 601 is configured to receive and transmit data under control of the processor 602.

In FIG. 6, a bus architecture may include any number of interconnected buses and bridges, through which various circuits, specifically one or more processors represented by the processor 602 and a memory represented by the memory 603, are linked together. The bus architecture may further link together various other circuits such as a peripheral, a voltage regulator, and a power management circuit, etc., which are all well known in the art and therefore will not be further described herein. A bus interface provides an interface. The transceiver 601 may be a plurality of elements, i.e., including a transmitting end and a receiving end, providing units for communicating with a variety of other apparatuses on transmission media, these transmission media including, these transmission media including a wireless channel, a wired channel, a fiber optic cable, and other transmission media. The processor 602 is responsible for managing the bus architecture and usual processing, and the memory 603 may store data used by the processor 602 when executing operations.

Optionally, the processor 602 may be a central processing unit (central processing unit, CPU), an application specific integrated circuit (Application Specific Integrated Circuit, ASIC), a field-programmable gate array (Field-Programmable Gate Array, FPGA), or a complex programmable logic device (Complex Programmable Logic Device, CPLD), and the processor 602 may also have a multi-core architecture.

By invoking a computer program stored in the memory 603, the processor 602 is configured to execute any signal processing method related to a terminal or a network device provided in the embodiments of the present disclosure in accordance with an obtained executable instruction. The processor 602 and the memory 603 may also be physically arranged separately.

Specifically, when executing the computer program stored in the memory 603, the processor 602 implements following operations: determining, according to antenna spacing, a first reference signal, the antenna spacing being less than or equal to half wavelength; determining, according to the first reference signal, a second reference signal, where a dimension of a second reference signal matrix corresponding to the second reference signal is smaller than a dimension of a first reference signal matrix corresponding to the first reference signal, and the second reference signal is used for channel estimation; and transmitting the second reference signal.

Optionally, the dimension of the first reference signal matrix and a first reference signal sequence corresponding to the first reference signal are both determined based on a channel sparsity characteristic and a compressed sensing principle.

Optionally, in a non-isotropic scattering environment, the dimension of the first reference signal matrix satisfies that the number of columns in the first reference signal matrix is greater than or equal to a non-linear multiple of a rank of a channel angle response matrix.

Optionally, the first reference signal sequence is a randomly selected row of an orthogonal matrix; or, the first reference signal sequence is a pseudo-random sequence.

Optionally, in a process of determining, according to the first reference signal, the second reference signal, the processor 602 is configured to execute following operations: performing, based on a first matrix, rank reduction on the first reference signal to determine the second reference signal, the first matrix being a two-dimensional spatial-frequency Fourier harmonic matrix corresponding to the network device.

Optionally, the processor 602 is further configured to execute following operations: determining a third reference signal applied in an isotropic scattering environment, where the number of columns in a third reference signal matrix corresponding to the third reference signal is equal to a cardinality of a two-dimensional lattice ellipse corresponding to the network device in a wavenumber spectrum support set, and a third reference signal sequence corresponding to the third reference signal is an orthogonal sequence or a quasi-orthogonal sequence.

It should be noted herein that the above-mentioned apparatus provided by the present disclosure is capable of implementing all the method steps implemented by the network device as a transmitting end in the above-mentioned method embodiments and is capable of achieving a same technical effect, and same parts of the present embodiment as the method embodiments and beneficial effects will not be specifically repeated herein.

On a terminal side, an embodiment of the present disclosure provides a signal processing apparatus, and the signal processing apparatus in the present embodiment may be a terminal. As shown in FIG. 7, the signal processing apparatus may include a transceiver 701, a processor 702, and a memory 703.

The transceiver 701 is configured to receive and transmit data under control of the processor 702.

In FIG. 7, a bus architecture may include any number of interconnected buses and bridges, through which various circuits, specifically one or more processors represented by the processor 702 and a memory represented by the memory 703, are linked together. The bus architecture may further link together various other circuits such as a peripheral, a voltage regulator, and a power management circuit, etc., which are all well known in the art and therefore will not be further described herein. A bus interface provides an interface. The transceiver 701 may be a plurality of elements, i.e., including a transmitting end and a receiving end, providing units for communicating with a variety of other apparatuses on transmission media, these transmission media including, these transmission media including a wireless channel, a wired channel, a fiber optic cable, and other transmission media. Optionally, the signal processing apparatus further includes a user interface 704. For different user devices, the user interface 704 may also be an interface capable of externally or internally connecting a required device, and a connected device includes but is not limited to a keypad, a display, a speaker, a microphone, a joystick, etc.

The processor 702 is responsible for managing the bus architecture and usual processing, and the memory 703 may store data used by the processor 702 when executing operations.

Optionally, the processor 702 may be a CPU, an ASIC, an FPGA, or a CPLD, and the processor 702 may also have a multi-core architecture.

By invoking a computer program stored in the memory 703, the processor 702 is configured to execute any signal processing method related to a terminal or a network device provided in the embodiments of the present disclosure in accordance with an obtained executable instruction. The processor 702 and the memory 703 may also be physically arranged separately.

Specifically, when executing the computer program stored in the memory 703, the processor 702 implements following operations: receiving a first receive signal, where the first receive signal includes a second reference signal transmitted by a network device, the second reference signal is determined by the network device according to a first reference signal, and the first reference signal is determined by the network device according to antenna spacing, the antenna spacing being less than or equal to half wavelength; and determining, according to the first receive signal, a second receive signal, the second receive signal being used for channel estimation.

Optionally, in a process of determining, according to the first receive signal, the second receive signal, the processor is configured to execute following operations: preprocessing, based on a second matrix, the first receive signal to obtain a preprocessed first receive signal, the second matrix being a two-dimensional spatial-frequency Fourier harmonic matrix corresponding to the terminal; and determining a receive signal including a preprocessed second reference signal extracted from the preprocessed first receive signal as the second receive signal.

Optionally, the second receive signal satisfies a following first formula:

$$\boldsymbol{\Phi}_r^{\mathrm{H}}\mathbf{Y} = \boldsymbol{\Phi}_r^{\mathrm{H}}\mathbf{H}\boldsymbol{\Phi}_s\mathbf{P} + \boldsymbol{\Phi}_r^{\mathrm{H}}\mathbf{N} \quad \text{first formula}$$

where H represents a channel matrix; $\Phi_s$ represents a first matrix, the first matrix being a two-dimensional spatial-frequency Fourier harmonic matrix corresponding to the network device; $\Phi_r$ represents the second matrix; $\boldsymbol{\Phi}_r^{\mathrm{H}}$ represents a Hermitian transpose matrix of $\Phi_r$; P represents a first reference signal matrix corresponding to the first reference signal; $\Phi_s\mathbf{P}$ represents a second reference signal matrix corresponding to the second reference signal; $\boldsymbol{\Phi}_r^{\mathrm{H}}\mathbf{Y}$ represents the second receive signal; and N represents Gaussian white noise of the terminal.

Optionally, the second receive signal and the first reference signal matrix satisfy a following second formula:

$$\mathrm{vec}(\boldsymbol{\Phi}_r^{\mathrm{H}}\mathbf{Y}) = \mathbf{P}^{\mathrm{H}}\otimes\mathbf{I}_{n_r}\Lambda^{\frac{1}{2}}\widetilde{\mathbf{w}} + \mathrm{vec}(\boldsymbol{\Phi}_r^{\mathrm{H}}\mathbf{N}) \quad \text{second formula}$$

where $\mathrm{vec}(\boldsymbol{\Phi}_r^{\mathrm{H}}\mathbf{Y})$ represents vector expression of $\boldsymbol{\Phi}_r^{\mathrm{H}}\mathbf{Y}$; $\mathbf{P}^{\mathrm{H}}$ represents a Hermitian transpose matrix of $\mathbf{P}$; $\mathbf{I}_{n_r}$ represents an identity matrix of $n_r \times n_r$, $n_r$ representing a cardinality of a two-dimensional lattice ellipse corresponding to the terminal in a wavenumber spectrum support set; $\Lambda$ represents a diagonal matrix including an eigenvalue of a channel autocorrelation matrix, $\tilde{\mathbf{w}}$ represents a complex Gaussian random vector with a mean of 0 and a variance of 1, $\Lambda^{\frac{1}{2}}\widetilde{\mathbf{w}}$ represents a sparse vector corresponding to the eigenvalue of the channel autocorrelation matrix, and the sparse vector is used for acquiring the channel matrix; and $\mathrm{vec}(\boldsymbol{\Phi}_r^{\mathrm{H}}\mathbf{N})$ represents vector expression of $\boldsymbol{\Phi}_r^{\mathrm{H}}\mathbf{N}$.

Optionally, the number of non-zero eigenvalues of the channel autocorrelation matrix included in the diagonal matrix in a non-isotropic scattering environment is less than the number of non-zero eigenvalues of the channel autocorrelation matrix included in the diagonal matrix in an isotropic scattering environment.

Optionally, the second formula is used for acquiring the sparse vector.

Optionally, in a process of using the second formula to acquire the sparse vector, the processor 702 is configured to execute following operations: obtaining the sparse vector based on the second formula and using a compressed sensing recovery algorithm.

Optionally, an eigenvalue vector of a channel autocorrelation matrix corresponding to an isotropic scattering environment is obtained by using a matrix inversion algorithm.

It should be noted herein that the above-mentioned apparatus provided by the present disclosure is capable of implementing all the method steps implemented by the terminal as a receiving end in the above-mentioned method embodiments and is capable of achieving a same technical effect, and same parts of the present embodiment as the method embodiments and beneficial effects will not be specifically repeated herein.

On the terminal side, an embodiment of the present disclosure provides a signal processing apparatus, and the signal processing apparatus in the present embodiment may be a terminal. As shown in FIG. 8, the signal processing apparatus may include a transceiver 801, a processor 802, and a memory 803.

The transceiver 801 is configured to receive and transmit data under control of the processor 802.

In FIG. 8, a bus architecture may include any number of interconnected buses and bridges, through which various circuits, specifically one or more processors represented by the processor 802 and a memory represented by the memory 803, are linked together. The bus architecture may further link together various other circuits such as a peripheral, a voltage regulator, and a power management circuit, etc., which are all well known in the art and therefore will not be further described herein. A bus interface provides an interface. The transceiver 801 may be a plurality of elements, i.e., including a transmitting end and a receiving end, providing units for communicating with a variety of other apparatuses on transmission media, these transmission media including, these transmission media including a wireless channel, a wired channel, a fiber optic cable, and other transmission media. Optionally, the signal processing apparatus further includes a user interface 804. For different user devices, the user interface 804 may also be an interface capable of externally or internally connecting a required device, and a connected device includes but is not limited to a keypad, a display, a speaker, a microphone, a joystick, etc.

The processor 802 is responsible for managing the bus architecture and usual processing, and the memory 803 may store data used by the processor 802 when executing operations.

Optionally, the processor 802 may be a CPU, an ASIC, an FPGA, or a CPLD, and the processor 802 may also have a multi-core architecture.

By invoking a computer program stored in the memory 803, the processor 802 is configured to execute any signal processing method related to a terminal or a network device provided in the embodiments of the present disclosure in accordance with an obtained executable instruction. The processor 802 and the memory 803 may also be physically arranged separately.

Specifically, when executing the computer program stored in the memory 803, the processor 802 implements following operations: acquiring a fourth reference signal, where the fourth reference signal is determined by a network device according to antenna spacing of the terminal, and the antenna spacing is less than or equal to half wavelength; determining, according to the fourth reference signal, a fifth reference signal, where a dimension of a fifth reference signal matrix corresponding to the fifth reference signal is smaller than a dimension of a fourth reference signal matrix corresponding to the fourth reference signal, and the fifth reference signal is used for channel estimation; and transmitting the fifth reference signal.

Optionally, in a process of acquiring the fourth reference signal, the processor 802 is configured to execute following operations: acquiring the fourth reference signal locally from the terminal, the fourth reference signal being pre-configured by the network device for the terminal; or, acquiring the fourth reference signal from the network device in a one-time manner via RRC signaling or MAC-CE signaling.

Optionally, the dimension of the fourth reference signal matrix and a fourth reference signal sequence corresponding to the fourth reference signal are both determined based on a channel sparsity characteristic and a compressed sensing principle.

Optionally, in a non-isotropic scattering environment, the dimension of the fourth reference signal matrix satisfies that the number of columns in the fourth reference signal matrix is greater than or equal to a non-linear multiple of a rank of a channel angle response matrix.

Optionally, the fourth reference signal sequence is a randomly selected row of an orthogonal matrix; or, the fourth reference signal sequence is a pseudo-random sequence.

Optionally, in a process of determining, according to the fourth reference signal, the fifth reference signal, the processor 802 is configured to execute following operations: performing, based on a third matrix, rank reduction on the fourth reference signal to determine the fifth reference signal, the third matrix being a two-dimensional spatial-frequency Fourier harmonic matrix corresponding to the terminal.

Optionally, the processor 802 is further configured to execute following operations: acquiring a sixth reference signal applied in an isotropic scattering environment, where the sixth reference signal is determined by the network device according to the antenna spacing of the terminal, the number of columns in a sixth reference signal matrix corresponding to the sixth reference signal is equal to a cardinality of a two-dimensional lattice ellipse corresponding to the terminal in a wavenumber spectrum support set, and a sixth reference signal sequence corresponding to the sixth reference signal is an orthogonal sequence or a quasi-orthogonal sequence.

It should be noted herein that the above-mentioned apparatus provided by the present disclosure is capable of implementing all the method steps implemented by the terminal as a transmitting end in the above-mentioned method embodiments and is capable of achieving a same technical effect, and same parts of the present embodiment as the method embodiments and beneficial effects will not be specifically repeated herein.

On the network side, an embodiment of the present disclosure provides a signal processing apparatus, and the signal processing apparatus in the present embodiment may be a network device. As shown in FIG. 9, the signal processing apparatus may include a transceiver 901, a processor 902, and a memory 903.

The transceiver 901 is configured to receive and transmit data under control of the processor 902.

In FIG. 9, a bus architecture may include any number of interconnected buses and bridges, through which various circuits, specifically one or more processors represented by the processor 902 and a memory represented by the memory 903, are linked together. The bus architecture may further link together various other circuits such as a peripheral, a voltage regulator, and a power management circuit, etc., which are all well known in the art and therefore will not be further described herein. A bus interface provides an interface. The transceiver 901 may be a plurality of elements, i.e., including a transmitting end and a receiving end, providing units for communicating with a variety of other apparatuses on transmission media, these transmission media including, these transmission media including a wireless channel, a wired channel, a fiber optic cable, and other transmission media. The processor 902 is responsible for managing the bus architecture and usual processing, and the memory 903 may store data used by the processor 902 when executing operations.

Optionally, the processor 902 may be a CPU, an ASIC, an FPGA, or a CPLD, and the processor 902 may also have a multi-core architecture.

By invoking a computer program stored in the memory 903, the processor 902 is configured to execute any signal processing method related to a terminal or a network device provided in the embodiments of the present disclosure in accordance with an obtained executable instruction. The processor 902 and the memory 903 may also be physically arranged separately.

Specifically, when executing the computer program stored in the memory 903, the processor 902 implements following operations: receiving a third receive signal, where the third receive signal includes a fifth reference signal transmitted by a terminal, the fifth reference signal is determined by the terminal according to a fourth reference signal, and the fourth reference signal is determined by the network device according to antenna spacing of the terminal, the antenna spacing being less than or equal to half wavelength; and determining, according to the third receive signal, a fourth receive signal, the fourth receive signal being used for channel estimation.

Optionally, in a process of determining, according to the third receive signal, the fourth receive signal, the processor 902 is configured to execute following operations: preprocessing, based on a fourth matrix, the third receive signal to obtain a preprocessed third receive signal, the fourth matrix being a two-dimensional spatial-frequency Fourier harmonic matrix corresponding to the network device; and determining a receive signal including a preprocessed fifth reference signal extracted from the preprocessed third receive signal as the fourth receive signal.

Optionally, the fourth receive signal satisfies a following third formula:

$$\widehat{\mathbf{\Phi}}_r^{\mathrm{H}}\widehat{\mathbf{Y}} = \widehat{\mathbf{\Phi}}_r^{\mathrm{H}}\widehat{\mathbf{H}}\widehat{\mathbf{\Phi}}_s\widehat{\mathbf{P}} + \widehat{\mathbf{\Phi}}_r^{\mathrm{H}}\widehat{\mathbf{N}} \qquad \text{third formula}$$

where $\tilde{\mathbf{H}}$ represents a channel matrix; $\hat{\mathbf{\Phi}}_s$ represents a third matrix, the third matrix being a two-dimensional spatial-frequency Fourier harmonic matrix corresponding to the terminal; $\tilde{\mathbf{\Phi}}_r$ represents the fourth matrix; $\widehat{\mathbf{\Phi}}_r^{\mathrm{H}}$ represents a Hermitian transpose matrix of $\hat{\mathbf{\Phi}}_r$; $\hat{\mathbf{P}}$ represents a fourth reference signal matrix corresponding to the fourth reference signal; $\hat{\mathbf{\Phi}}_s\hat{\mathbf{P}}$ represents a fifth reference signal matrix corresponding to the fifth reference signal; $\widehat{\mathbf{\Phi}}_r^{\mathrm{H}}\widehat{\mathbf{Y}}$ represents the fourth receive signal; and $\hat{\mathbf{N}}$ represents Gaussian white noise of the network device.

Optionally, the fourth receive signal and the fourth reference signal matrix satisfy a following fourth formula:

$$\mathrm{vec}\big(\widehat{\mathbf{\Phi}}_r^{\mathrm{H}}\widehat{\mathbf{Y}}\big) = \hat{\mathbf{P}}^{\mathrm{H}}\otimes\mathbf{I}_{n_r}\widehat{\mathbf{\Lambda}}^{\frac{1}{2}}\widehat{\mathbf{w}} + \mathrm{vec}\big(\widehat{\mathbf{\Phi}}_r^{\mathrm{H}}\widehat{\mathbf{N}}\big) \qquad \text{fourth formula}$$

where $\mathrm{vec}\big(\widehat{\mathbf{\Phi}}_r^{\mathrm{H}}\widehat{\mathbf{Y}}\big)$ represents vector expression of $\widehat{\mathbf{\Phi}}_r^{\mathrm{H}}\widehat{\mathbf{Y}}$; $\hat{\mathbf{P}}^{\mathbf{H}}$ represents a Hermitian transpose matrix of $\hat{\mathbf{P}}$; $\mathbf{I}_{n_r}$ represents an identity matrix of $n_r \times n_r$, $n_r$ representing a cardinality of a two-dimensional lattice ellipse corresponding to the network device in a wavenumber spectrum support set; $\hat{\Lambda}$ represents a diagonal matrix including an eigenvalue of a channel autocorrelation matrix, $\hat{\mathbf{w}}$ represents a complex Gaussian random vector with a mean of 0 and a variance of 1, $\widehat{\mathbf{\Lambda}}^{\frac{1}{2}}\widehat{\mathbf{w}}$ represents a sparse vector corresponding to the eigenvalue of the channel autocorrelation matrix, and the sparse vector is used for acquiring the channel matrix; and $\mathrm{vec}\big(\widehat{\mathbf{\Phi}}_r^{\mathrm{H}}\widehat{\mathbf{N}}\big)$ represents vector expression of $\widehat{\mathbf{\Phi}}_r^{\mathrm{H}}\widehat{\mathbf{N}}$.

Optionally, the number of non-zero eigenvalues of the channel autocorrelation matrix included in the diagonal matrix in a non-isotropic scattering environment is less than the number of non-zero eigenvalues of the channel autocorrelation matrix included in the diagonal matrix in an isotropic scattering environment.

Optionally, the fourth formula is used for acquiring the sparse vector.

Optionally, in a process of using the fourth formula to acquire the sparse vector, the processor 902 is configured to execute following operations: acquiring the sparse vector based on the fourth formula and using a compressed sensing recovery algorithm.

Optionally, an eigenvalue vector of a channel autocorrelation matrix corresponding to an isotropic scattering environment is obtained by using a matrix inversion algorithm.

It should be noted herein that the above-mentioned apparatus provided by the present disclosure is capable of implementing all the method steps implemented by the network device as a receiving end in the above-mentioned method embodiments and is capable of achieving a same technical effect, and same parts of the present embodiment as the method embodiments and beneficial effects will not be specifically repeated herein.

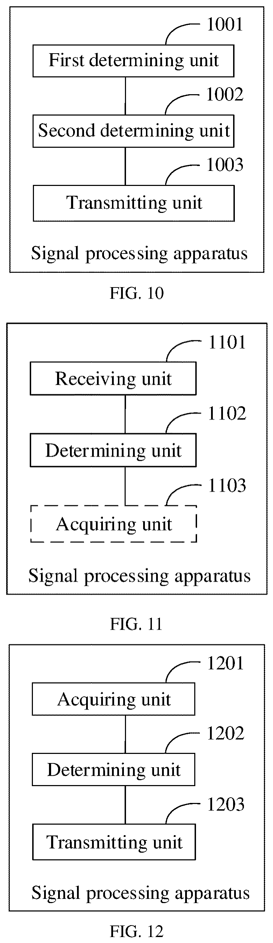

On the network side, an embodiment of the present disclosure further provides a signal processing apparatus, and the signal apparatus may be a network device. As shown in FIG. 10, the signal processing apparatus includes: a first determining unit 1001, a second determining unit 1002, and a transmitting unit 1003, where:

the first determining unit 1001 is configured to determine, according to antenna spacing, a first reference signal, the antenna spacing being less than or equal to half wavelength;

the second determining unit 1002 is configured to determine, according to the first reference signal, a second reference signal, where a dimension of a second reference signal matrix corresponding to the second reference signal is smaller than a dimension of a first reference signal matrix corresponding to the first reference signal, and the second reference signal is used for channel estimation; and

the transmitting unit 1003 is configured to transmit the second reference signal.

In some embodiments, the dimension of the first reference signal matrix and a first reference signal sequence corresponding to the first reference signal are both determined based on a channel sparsity characteristic and a compressed sensing principle.

In some embodiments, in a non-isotropic scattering environment, the dimension of the first reference signal matrix satisfies that the number of columns in the first reference signal matrix is greater than or equal to a non-linear multiple of a rank of a channel angle response matrix.

In some embodiments, the first reference signal sequence is a randomly selected row of an orthogonal matrix; or, the first reference signal sequence is a pseudo-random sequence.

In some embodiments, the second determining unit 1002 may be specifically configured to: perform, based on a first matrix, rank reduction on the first reference signal to determine the second reference signal, the first matrix being a two-dimensional spatial-frequency Fourier harmonic matrix corresponding to the network device.

In some embodiments, the first determining unit 1001 may be further configured to: determine a third reference signal applied in an isotropic scattering environment, where the number of columns in a third reference signal matrix corresponding to the third reference signal is equal to a cardinality of a two-dimensional lattice ellipse corresponding to the network device in a wavenumber spectrum support set, and a third reference signal sequence corresponding to the third reference signal is an orthogonal sequence or a quasi-orthogonal sequence.

It should be noted herein that the above-mentioned apparatus provided by the present disclosure is capable of implementing all the method steps implemented by the network device as a transmitting end in the above-mentioned method embodiments and is capable of achieving a same technical effect, and same parts of the present embodiment as the method embodiments and beneficial effects will not be specifically repeated herein.

On the terminal side, an embodiment of the present disclosure further provides a signal processing apparatus, and the signal apparatus in the present embodiment may be a terminal. As shown in FIG. 11, the signal processing apparatus includes: a receiving unit 1101 and a determining unit 1102, where:

the receiving unit 1101 is configured to receive a first receive signal, where the first receive signal includes a second reference signal transmitted by a network device, the second reference signal is determined by the network device according to a first reference signal, and the first reference signal is determined by the network device according to antenna spacing, the antenna spacing being less than or equal to half wavelength; and
the determining unit 1102 is configured to determine, according to the first receive signal, a second receive signal, the second receive signal being used for channel estimation.

In some embodiments, the determining unit 1102 may be specifically configured to: preprocess, based on a second matrix, the first receive signal to obtain a preprocessed first receive signal, the second matrix being a two-dimensional spatial-frequency Fourier harmonic matrix corresponding to the terminal; and determine a receive signal including a preprocessed second reference signal extracted from the preprocessed first receive signal as the second receive signal.

In some embodiments, the second receive signal satisfies a following first formula:

$$\mathbf{\Phi}_r^{\mathrm{H}}\mathbf{Y} = \mathbf{\Phi}_r^{\mathrm{H}}\mathbf{H}\mathbf{\Phi}_{\mathrm{s}}\mathbf{P} + \mathbf{\Phi}_r^{\mathrm{H}}\mathbf{N} \quad \text{first formula}$$

where $\mathbf{H}$ represents a channel matrix; $\mathbf{\Phi}_{\mathrm{s}}$ represents a first matrix, the first matrix being a two-dimensional spatial-frequency Fourier harmonic matrix corresponding to the network device; $\mathbf{\Phi}_r$ represents the second matrix; $\mathbf{\Phi}_r^{\mathrm{H}}$ represents a Hermitian transpose matrix of $\mathbf{\Phi}_r$; $\mathbf{P}$ represents a first reference signal matrix corresponding to the first reference signal; $\mathbf{\Phi}_{\mathrm{s}}\mathbf{P}$ represents a second reference signal matrix corresponding to the second reference signal; $\mathbf{\Phi}_r^{\mathrm{H}}\mathbf{Y}$ represents the second receive signal; and $\mathbf{N}$ represents Gaussian white noise of the terminal.

In some embodiments, the second receive signal and the first reference signal matrix satisfy a following second formula:

$$\mathrm{vec}(\mathbf{\Phi}_r^{\mathrm{H}}\mathbf{Y}) = \mathbf{P}^{\mathrm{H}} \otimes \mathbf{I}_{n_r} \mathbf{\Lambda}^{\frac{1}{2}} \widetilde{\mathbf{w}} + \mathrm{vec}(\mathbf{\Phi}_r^{\mathrm{H}}\mathbf{N}) \quad \text{second formula}$$

where $\mathrm{vec}(\mathbf{\Phi}_r^{\mathrm{H}}\mathbf{Y})$ represents vector expression of $\mathbf{\Phi}_r^{\mathrm{H}}\mathbf{Y}$; $\mathbf{P}^{\mathrm{H}}$ represents a Hermitian transpose matrix of $\mathbf{P}$; $\mathbf{I}_{n_r}$ represents an identity matrix of $n_r \times n_r$, $n_r$ representing a cardinality of a two-dimensional lattice ellipse corresponding to the terminal in a wavenumber spectrum support set; $\mathbf{\Lambda}$ represents a diagonal matrix including an eigenvalue of a channel autocorrelation matrix, $\widetilde{\mathbf{w}}$ represents a complex Gaussian random vector with a mean of 0 and a variance of 1, $\mathbf{\Lambda}^{\frac{1}{2}}\widetilde{\mathbf{w}}$ represents a sparse vector corresponding to the eigenvalue of the channel autocorrelation matrix, and the sparse vector is used for acquiring the channel matrix; and $vec(\mathbf{\Phi}_r^H \mathbf{N})$ represents vector expression of $\mathbf{\Phi}_r^H \mathbf{N}$.

In some embodiments, the number of non-zero eigenvalues of the channel autocorrelation matrix included in the diagonal matrix in a non-isotropic scattering environment is less than the number of non-zero eigenvalues of the channel autocorrelation matrix included in the diagonal matrix in an isotropic scattering environment.

In some embodiments, the second formula is used for acquiring the sparse vector.

In some embodiments, the signal processing apparatus further includes an acquiring unit 1103, configured to: acquire the sparse vector based on the second formula and using a compressed sensing recovery algorithm.

In some embodiments, an eigenvalue vector of a channel autocorrelation matrix corresponding to an isotropic scattering environment is obtained by using a matrix inversion algorithm.

It should be noted herein that the above-mentioned apparatus provided by the present disclosure is capable of implementing all the method steps implemented by the terminal as a receiving end in the above-mentioned method embodiments and is capable of achieving a same technical effect, and same parts of the present embodiment as the method embodiments and beneficial effects will not be specifically repeated herein.

On the terminal side, an embodiment of the present disclosure further provides a signal processing apparatus, and the signal apparatus in the present embodiment may be a terminal. As shown in FIG. 12, the signal processing apparatus includes: an acquiring unit 1201, a determining unit 1202, and a transmitting unit 1203, where:

the acquiring unit 1201 is configured to acquire a fourth reference signal, where the fourth reference signal is determined by a network device according to antenna spacing of the terminal, and the antenna spacing is less than or equal to half wavelength;

the determining unit 1202 is configured to determine, according to the fourth reference signal, a fifth reference signal, where a dimension of a fifth reference signal matrix corresponding to the fifth reference signal is smaller than a dimension of a fourth reference signal matrix corresponding to the fourth reference signal, and the fifth reference signal is used for channel estimation; and

the transmitting unit 1203 is configured to transmit the fifth reference signal.

In some embodiments, the acquiring unit 1201 may be specifically configured to: acquire the fourth reference signal locally from the terminal, the fourth reference signal being pre-configured by the network device for the terminal; or, acquire the fourth reference signal from the network device in a one-time manner via RRC signaling or MAC-CE signaling.

In some embodiments, the dimension of the fourth reference signal matrix and a fourth reference signal sequence corresponding to the fourth reference signal are both determined based on a channel sparsity characteristic and a compressed sensing principle.

In some embodiments, in a non-isotropic scattering environment, the dimension of the fourth reference signal matrix satisfies that the number of columns in the fourth reference signal matrix is greater than or equal to a non-linear multiple of a rank of a channel angle response matrix.

In some embodiments, the fourth reference signal sequence is a randomly selected row of an orthogonal matrix; or, the fourth reference signal sequence is a pseudo-random sequence.

In some embodiments, the determining unit 1202 may be specifically configured to: perform, based on a third matrix, rank reduction on the fourth reference signal to determine the fifth reference signal, the third matrix being a two-dimensional spatial-frequency Fourier harmonic matrix corresponding to the terminal.

In some embodiments, the acquiring unit 1201 may be further configured to: acquire a sixth reference signal applied in an isotropic scattering environment, where the sixth reference signal is determined by the network device according to the antenna spacing of the terminal, the number of columns in a sixth reference signal matrix corresponding to the sixth reference signal is equal to a cardinality of a two-dimensional lattice ellipse corresponding to the terminal in a wavenumber spectrum support set, and a sixth reference signal sequence corresponding to the sixth reference signal is an orthogonal sequence or a quasi-orthogonal sequence.

It should be noted herein that the above-mentioned apparatus provided by the present disclosure is capable of implementing all the method steps implemented by the terminal as a transmitting end in the above-mentioned method embodiments and is capable of achieving a same technical effect, and same parts of the present embodiment as the method embodiments and beneficial effects will not be specifically repeated herein.

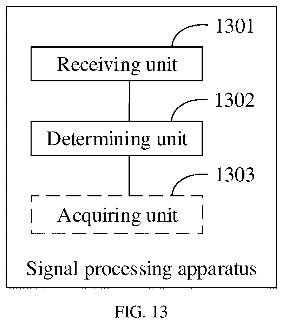

On the network side, an embodiment of the present disclosure further provides a signal processing apparatus, and the signal apparatus in the present embodiment may be a network device. As shown in FIG. 13, the signal processing apparatus includes: a receiving unit 1301 and a determining unit 1302, where:

the receiving unit 1301 is configured to receive a third receive signal, where the third receive signal includes a fifth reference signal transmitted by a terminal, the fifth reference signal is determined by the terminal according to a fourth reference signal, and the fourth reference signal is determined by the network device according to antenna spacing of the terminal, the antenna spacing being less than or equal to half wavelength; and
the determining unit 1302 is configured to determine, according to the third receive signal, a fourth receive signal, the fourth receive signal being used for channel estimation.

In some embodiments, the determining unit 1302 may be specifically configured to: preprocess, based on a fourth matrix, the third receive signal to obtain a preprocessed third receive signal, the fourth matrix being a two-dimensional spatial-frequency Fourier harmonic matrix corresponding to the network device; and determine a receive signal including a preprocessed fifth reference signal extracted from the preprocessed third receive signal as the fourth receive signal.

In some embodiments, the fourth receive signal satisfies a following third formula:

$$\hat{\boldsymbol{\Phi}}_r^{\mathrm{H}}\hat{\mathbf{Y}} = \hat{\boldsymbol{\Phi}}_r^{\mathrm{H}}\hat{\mathbf{H}}\hat{\boldsymbol{\Phi}}_s\hat{\mathbf{P}} + \hat{\boldsymbol{\Phi}}_r^{\mathrm{H}}\hat{\mathbf{N}} \qquad \text{third formula}$$

where $\hat{\mathbf{H}}$ represents a channel matrix; $\hat{\boldsymbol{\Phi}}_s$ represents a third matrix, the third matrix being a two-dimensional spatial-frequency Fourier harmonic matrix corresponding to the terminal; $\hat{\boldsymbol{\Phi}}_r$ represents the fourth matrix; $\hat{\boldsymbol{\Phi}}_r^{\mathrm{H}}$ represents a Hermitian transpose matrix of $\hat{\boldsymbol{\Phi}}_r$; $\hat{\mathbf{P}}$ represents a fourth reference signal matrix corresponding to the fourth reference signal; $\hat{\boldsymbol{\Phi}}_s\hat{\mathbf{P}}$ represents a fifth reference signal matrix corresponding to the fifth reference signal; $\hat{\boldsymbol{\Phi}}_r^{\mathrm{H}}\hat{\mathbf{Y}}$ represents the fourth receive signal; and $\hat{\mathbf{N}}$ represents Gaussian white noise of the network device.

In some embodiments, the fourth receive signal and the fourth reference signal matrix satisfy a following fourth formula:

$$\mathrm{vec}\left(\hat{\boldsymbol{\Phi}}_r^{\mathrm{H}}\hat{\mathbf{Y}}\right) = \hat{\mathbf{P}}^{\mathrm{H}}\otimes\mathbf{I}_{n_r}\hat{\boldsymbol{\Lambda}}^{\frac{1}{2}}\hat{\mathbf{w}} + \mathrm{vec}\left(\hat{\boldsymbol{\Phi}}_r^{\mathrm{H}}\hat{\mathbf{N}}\right) \qquad \text{fourth formula}$$

where $\mathrm{vec}\left(\hat{\boldsymbol{\Phi}}_r^{\mathrm{H}}\hat{\mathbf{Y}}\right)$ represents vector expression of $\hat{\boldsymbol{\Phi}}_r^{\mathrm{H}}\hat{\mathbf{Y}}$; $\hat{\mathbf{P}}^{\mathrm{H}}$ represents a Hermitian transpose matrix of $\hat{\mathbf{P}}$; $\mathbf{I}_{n_r}$ represents an identity matrix of $n_r \times n_r$, $n_r$ representing a cardinality of a two-dimensional lattice ellipse corresponding to the network device in a wavenumber spectrum support set; $\hat{\boldsymbol{\Lambda}}$ represents a diagonal matrix including an eigenvalue of a channel autocorrelation matrix, $\hat{\mathbf{w}}$ represents a complex Gaussian random vector with a mean of 0 and a variance of 1, $\hat{\boldsymbol{\Lambda}}^{\frac{1}{2}}\hat{\mathbf{w}}$ represents a sparse vector corresponding to the eigenvalue of the channel autocorrelation matrix, and the sparse vector is used for acquiring the channel matrix; and $\mathrm{vec}\left(\hat{\boldsymbol{\Phi}}_r^{\mathrm{H}}\hat{\mathbf{N}}\right)$ represents vector expression of $\hat{\boldsymbol{\Phi}}_r^{\mathrm{H}}\hat{\mathbf{N}}$.

In some embodiments, the number of non-zero eigenvalues of the channel autocorrelation matrix included in the diagonal matrix in a non-isotropic scattering environment is less than the number of non-zero eigenvalues of the channel autocorrelation matrix included in the diagonal matrix in an isotropic scattering environment.

In some embodiments, the fourth formula is used for acquiring the sparse vector.

In some embodiments, the signal processing apparatus further includes an acquiring unit 1303, configured to: acquire the sparse vector based on the fourth formula and using a compressed sensing recovery algorithm.

In some embodiments, an eigenvalue vector of a channel autocorrelation matrix corresponding to an isotropic scattering environment is obtained by using a matrix inversion algorithm.

It should be noted herein that the above-mentioned apparatus provided by the present disclosure is capable of implementing all the method steps implemented by the network device as a receiving end in the above-mentioned method embodiments and is capable of achieving a same technical effect, and same parts of the present embodiment as the method embodiments and beneficial effects will not be specifically repeated herein.

It should be noted that division of units in the embodiments of the present disclosure is illustrative, merely representing logical functional division, and alternative division methods may be employed in actual implementations. Additionally, functional units in various embodiments of the present disclosure may be integrated into one processing unit, or each unit may exist physically alone, or two or more units may be integrated into one unit. The integrated unit may be implemented in a form of hardware or in a form of a software functional unit.

If implemented as a software functional unit and sold or used as a standalone product, the integrated unit may be stored in a processor-readable storage medium. Based on this understanding, the technical solution of the present disclosure, in essence, or a part contributing to the prior art, or all or part of the technical solution, may be embodied in a form of a software product, and the computer software product is stored in a storage medium and includes instructions to cause a computer device (which may be a personal computer, a server, or a network device, etc.) or a processor (processor) to execute all or part of the steps of the signal processing methods described in the various embodiments of the present disclosure. The aforementioned storage medium includes: a USB flash drive, a portable hard drive, a read-only memory (Read-Only Memory, ROM), a random access memory (Random Access Memory, RAM), a magnetic disk, an optical disk, or other media that can store program codes.

On the network side, an embodiment of the present disclosure provides a processor readable storage medium. The processor readable storage medium stores a computer program, and the computer program is used for causing a processor to execute any of the signal processing methods related to the network device provided by the embodiments of the present disclosure, to enable a processor to implement all the method steps implemented by the terminal in the above-mentioned method embodiments and achieve same technical effects, and same parts of the present embodiment as the method embodiments and beneficial effects will not be specifically repeated herein.

On the terminal side, an embodiment of the present disclosure provides a processor readable storage medium. The processor readable storage medium stores a computer program, and the computer program is used for causing a processor to execute any of the signal processing methods related to the terminal provided by the embodiments of the present disclosure, to enable a processor to implement all the method steps implemented by the network device in the above-mentioned method embodiments and achieve same technical effects, and same parts of the present embodiment as the method embodiments and beneficial effects will not be specifically repeated herein.

The processor readable storage medium may be any available medium or data storage device that a processor can access, including but not limited to a magnetic storage (e.g., a floppy disk, a hard disk, a magnetic tape, a magneto-optical disk (MO), etc.), an optical storage (e.g., a CD, a DVD, a BD, an HVD, etc.), and a semiconductor storage (e.g., a ROM, an EPROM, an EEPROM, a non-volatile memory (NAND FLASH), a solid-state drive (SSD)), etc.

On the terminal side, an embodiment of the present disclosure provides a computer program product including an instruction which, when run on a computer, causes a computer to execute all the method steps implemented by the terminal in the above-mentioned method embodiments and achieve same technical effects, and same parts of the present embodiment as the method embodiments and beneficial effects will not be specifically repeated herein.

On the network side, an embodiment of the present disclosure provides a computer program product including an instruction which, when run on a computer, causes a computer to execute all the method steps implemented by the network device in the above-mentioned method embodiments and achieve same technical effects, and same parts of the present embodiment as the method embodiments and beneficial effects will not be specifically repeated herein.

Those skilled in the art should understand that the embodiments of the present disclosure may be provided as methods, systems, or computer program products. Accordingly, the present disclosure may take a form of a fully hardware embodiment, a fully software embodiment, or an embodiment that combines software and hardware aspects. Further, the present disclosure may take a form of a computer program product implemented on one or more computer-usable storage media (including, but not limited to, a disk storage and an optical storage, etc.) that include computer-usable program codes therein.

The present disclosure is described with reference to flow diagrams and/or block diagrams of the methods, the apparatuses, and the computer program products according to the embodiments of the present disclosure. It should be understood that each of processes and/or blocks in the flow diagrams and/or the block diagrams, and a combination of the processes and/or the blocks in the flow diagrams and/or the block diagrams may be implemented by computer executable instructions. These computer executable instructions may be provided to a general-purpose computer, a dedicated computer, an embedded processor, or a processor of other programmable data-processing devices to produce a machine such that instructions executed by a computer or the processor of the other programmable data-processing devices produce an apparatus configured to implement functions specified in one or more processes in a flow diagram and/or one or more blocks in a block diagram.

These processor executable instructions may also be stored in a processor readable memory capable of directing the computer or the other programmable data-processing devices to operate in a particular manner, such that instructions stored in that processor readable memory produce a manufacture including an instruction apparatus that implements functions specified in one or more processes in a flow diagram and/or one or more blocks in a block diagram.

These processor executable instructions may also be loaded onto the computer or the other programmable data-processing devices such that a series of operational steps are performed on the computer or other programmable devices to produce computer-implemented processing, such that instructions executed on the computer or other programmable devices provide steps for implementing functions specified in one or more processes in a flow diagram and/or one or more blocks in a block diagram.

Obviously, those skilled in the art may make various changes and variations to the present disclosure without departing from the spirit and scope of the present disclosure. Thus, if these changes and variations of the present disclosure are within the scope of claims in the present disclosure and technical equivalents thereof, the present disclosure is intended to encompass those changes and variations as well.

**Claims**

1. A signal processing method, applied to a network device, **characterised in that** the signal processing method comprises:

   determining, according to antenna spacing, a first reference signal, the antenna spacing being less than or equal to half wavelength; and
   determining, according to the first reference signal, a second reference signal, wherein a dimension of a second reference signal matrix corresponding to the second reference signal is smaller than a dimension of a first reference signal matrix corresponding to the first reference signal, and the second reference signal is used for channel estimation.

2. The signal processing method according to claim 1, wherein the dimension of the first reference signal matrix and a first reference signal sequence corresponding to the first reference signal are both determined based on a channel sparsity characteristic and a compressed sensing principle.

3. The signal processing method according to claim 1 or 2, wherein in a non-isotropic scattering environment, the dimension of the first reference signal matrix satisfies that a number of columns in the first reference signal matrix is greater than or equal to a non-linear multiple of a rank of a channel angle response matrix.

4. The signal processing method according to claim 1 or 2, wherein the first reference signal sequence is a randomly selected row of an orthogonal matrix;
   or, the first reference signal sequence is a pseudo-random sequence.

5. The signal processing method according to claim 1 or 2, wherein the determining, according to the first reference signal, a second reference signal comprises:
   performing, based on a first matrix, rank reduction on the first reference signal to determine the second reference signal, the first matrix being a two-dimensional spatial-frequency Fourier harmonic matrix corresponding to the network device.

6. The signal processing method according to claim 1, further comprising:
   determining a third reference signal applied in an isotropic scattering environment, wherein a number of columns in a third reference signal matrix corresponding to the third reference signal is equal to a cardinality of a two-dimensional lattice ellipse corresponding to the network device in a wavenumber spectrum support set, and a third reference signal sequence corresponding to the third reference signal is an orthogonal sequence or a quasi-orthogonal sequence.

7. A signal processing method, applied to a terminal, **characterised in that** the signal processing method comprises:

   receiving a first receive signal, wherein the first receive signal comprises a second reference signal transmitted by a network device, the second reference signal is determined by the network device according to a first reference signal, and the first reference signal is determined by the network device according to antenna spacing, the antenna spacing being less than or equal to half wavelength; and
   determining, according to the first receive signal, a second receive signal, the second receive signal being used for channel estimation.

8. The signal processing method according to claim 7, wherein the determining, according to the first receive signal, a second receive signal comprises:

   preprocessing, based on a second matrix, the first receive signal to obtain a preprocessed first receive signal, the second matrix being a two-dimensional spatial-frequency Fourier harmonic matrix corresponding to the terminal; and
   determining a receive signal comprising a preprocessed second reference signal extracted from the preprocessed first receive signal as the second receive signal.

9. The signal processing method according to claim 8, wherein the second receive signal satisfies a following first formula:

$$\mathbf{\Phi}_r^{\mathrm{H}}\mathbf{Y} = \mathbf{\Phi}_r^{\mathrm{H}}\mathbf{H}\mathbf{\Phi}_s\mathbf{P} + \mathbf{\Phi}_r^{\mathrm{H}}\mathbf{N} \qquad \text{first formula}$$

wherein $\mathbf{H}$ represents a channel matrix; $\mathbf{\Phi}_s$ represents a first matrix, the first matrix being a two-dimensional spatial-frequency Fourier harmonic matrix corresponding to the network device; $\mathbf{\Phi}_r$ represents the second matrix; $\mathbf{\Phi}_r^{\mathrm{H}}$ represents a Hermitian transpose matrix of $\mathbf{\Phi}_r$; $\mathbf{P}$ represents a first reference signal matrix corresponding to the first reference signal; $\mathbf{\Phi}_s\mathbf{P}$ represents a second reference signal matrix corresponding to the second reference signal; $\mathbf{\Phi}_r^{\mathrm{H}}\mathbf{Y}$ represents the second receive signal; and $\mathbf{N}$ represents Gaussian white noise of the terminal.

10. The signal processing method according to claim 9, wherein the second receive signal and the first reference signal matrix satisfy a following second formula:

$$\mathrm{vec}(\mathbf{\Phi}_r^{\mathrm{H}}\mathbf{Y}) = \mathbf{P}^{\mathrm{H}}\otimes\mathbf{I}_{n_r}\mathbf{\Lambda}^{\frac{1}{2}}\widetilde{\mathbf{w}} + \mathrm{vec}(\mathbf{\Phi}_r^{\mathrm{H}}\mathbf{N}) \qquad \text{second formula}$$

wherein $\mathrm{vec}(\mathbf{\Phi}_r^{\mathrm{H}}\mathbf{Y})$ represents vector expression of $\mathbf{\Phi}_r^{\mathrm{H}}\mathbf{Y}$; $\mathbf{P}^{\mathrm{H}}$ represents a Hermitian transpose matrix of $\mathbf{P}$; $\mathbf{I}_{n_r}$ represents an identity matrix of $n_r \times n_r$, $n_r$ representing a cardinality of a two-dimensional lattice ellipse corresponding to the terminal in a wavenumber spectrum support set; represents a diagonal matrix comprising an eigenvalue of a channel autocorrelation matrix, $\widetilde{\mathbf{w}}$ represents a complex Gaussian random vector with a mean of 0 and a variance of 1, $\mathbf{\Lambda}^{\frac{1}{2}}\widetilde{\mathbf{w}}$ represents a sparse vector corresponding to the eigenvalue of the channel autocorrelation matrix, and the sparse vector is used for acquiring the channel matrix; and $\mathrm{vec}(\mathbf{\Phi}_r^{\mathrm{H}}\mathbf{N})$ represents vector expression of $\mathbf{\Phi}_r^{\mathrm{H}}\mathbf{N}$.

11. The signal processing method according to claim 10, wherein a number of non-zero eigenvalues of the channel autocorrelation matrix comprised in the diagonal matrix in a non-isotropic scattering environment is less than a number of non-zero eigenvalues of the channel autocorrelation matrix comprised in the diagonal matrix in an isotropic scattering environment.

12. The signal processing method according to claim 10, wherein the second formula is used for acquiring the sparse vector.

13. The signal processing method according to claim 12, wherein the second formula being used for acquiring the sparse vector comprises:
obtaining the sparse vector based on the second formula and using a compressed sensing recovery algorithm.

14. The signal processing method according to any one of claims 7 to 10, wherein an eigenvalue vector of a channel autocorrelation matrix corresponding to an isotropic scattering environment is obtained by using a matrix inversion algorithm.

15. A signal processing method, applied to a terminal, **characterised in that** the signal processing method comprises:

acquiring a fourth reference signal, wherein the fourth reference signal is determined by a network device according to antenna spacing of the terminal, and the antenna spacing is less than or equal to half wavelength; and
determining, according to the fourth reference signal, a fifth reference signal, wherein a dimension of a fifth reference signal matrix corresponding to the fifth reference signal is smaller than a dimension of a fourth reference signal matrix corresponding to the fourth reference signal, and the fifth reference signal is used for channel estimation.

16. The signal processing method according to claim 15, wherein the acquiring a fourth reference signal comprises:

acquiring the fourth reference signal locally from the terminal, the fourth reference signal being pre-configured by the network device for the terminal;
or, acquiring the fourth reference signal from the network device in a one-time manner via radio resource control RRC signaling or medium access control-control element MAC-CE signaling.

17. A signal processing method, applied to a network device, **characterised in that** the signal processing method comprises:

receiving a third receive signal, wherein the third receive signal comprises a fifth reference signal transmitted by a terminal, the fifth reference signal is determined by the terminal according to a fourth reference signal, and the fourth reference signal is determined by the network device according to antenna spacing of the terminal, the antenna spacing being less than or equal to half wavelength; and
determining, according to the third receive signal, a fourth receive signal, the fourth receive signal being used for channel estimation.

18. A signal processing apparatus, **characterised by** comprising a memory, a transceiver, and a processor:

wherein the memory is configured to store a computer program;
the transceiver is configured to transmit and receive data under control of the processor; and
the processor is configured to read the computer program in the memory and execute the signal processing method according to any one of claims 1 to 17.

19. A signal processing apparatus, applied to a network device, **characterised in that** the signal processing apparatus comprises:

a first determining unit, configured to determine, according to antenna spacing, a first reference signal, the antenna spacing being less than or equal to half wavelength; and
a second determining unit, configured to determine, according to the first reference signal, a second reference signal, wherein a dimension of a second reference signal matrix corresponding to the second reference signal is smaller than a dimension of a first reference signal matrix corresponding to the first reference signal, and the second reference signal is used for channel estimation.

20. The signal processing apparatus according to claim 19, wherein the dimension of the first reference signal matrix and a first reference signal sequence corresponding to the first reference signal are both determined based on a channel sparsity characteristic and a compressed sensing principle.

21. The signal processing apparatus according to claim 19 or 20, wherein in a non-isotropic scattering environment, the dimension of the first reference signal matrix satisfies that a number of columns in the first reference signal matrix is greater than or equal to a non-linear multiple of a rank of a channel angle response matrix.

22. The signal processing apparatus according to claim 19 or 20, wherein the first reference signal sequence is a randomly selected row of an orthogonal matrix;
or, the first reference signal sequence is a pseudo-random sequence.

23. The signal processing apparatus according to claim 19 or 20, wherein the second determining unit is specifically configured to:
perform, based on a first matrix, rank reduction on the first reference signal to determine the second reference signal, the first matrix being a two-dimensional spatial-frequency Fourier harmonic matrix corresponding to the network device.

24. The signal processing apparatus according to claim 19, wherein the first determining unit is further configured to:
determine a third reference signal applied in an isotropic scattering environment, wherein a number of columns in a third reference signal matrix corresponding to the third reference signal is equal to a cardinality of a two-dimensional lattice ellipse corresponding to the network device in a wavenumber spectrum support set, and a third reference signal sequence corresponding to the third reference signal is an orthogonal sequence or a quasi-orthogonal sequence.

25. A signal processing apparatus, applied to a terminal, **characterised in that** the signal processing apparatus comprises:

a receiving unit, configured to receive a first receive signal, wherein the first receive signal comprises a second reference signal transmitted by a network device, the second reference signal is determined by the network device according to a first reference signal, and the first reference signal is determined by the network device according to antenna spacing, the antenna spacing being less than or equal to half wavelength; and
a determining unit, configured to determine, according to the first receive signal, a second receive signal, the second receive signal being used for channel estimation.

26. The signal processing apparatus according to claim 25, wherein the determining unit is specifically configured to:

preprocess, based on a second matrix, the first receive signal to obtain a preprocessed first receive signal, the second matrix being a two-dimensional spatial-frequency Fourier harmonic matrix corresponding to the terminal; and
determine a receive signal comprising a preprocessed second reference signal extracted from the preprocessed first receive signal as the second receive signal.

27. The signal processing apparatus according to claim 26, wherein the second receive signal satisfies a following first formula:

$$\mathbf{\Phi}_r^{\mathrm{H}}\mathbf{Y} = \mathbf{\Phi}_r^{\mathrm{H}}\mathbf{H}\mathbf{\Phi}_s\mathbf{P} + \mathbf{\Phi}_r^{\mathrm{H}}\mathbf{N} \quad \text{first formula}$$

wherein H represents a channel matrix; $\Phi_s$ represents a first matrix, the first matrix being a two-dimensional spatial-frequency Fourier harmonic matrix corresponding to the network device; $\Phi_r$ represents the second matrix; $\mathbf{\Phi}_r^{\mathrm{H}}$ represents a Hermitian transpose matrix of $\Phi_r$; P represents a first reference signal matrix corresponding to the first reference signal; $\Phi_s\mathbf{P}$ represents a second reference signal matrix corresponding to the second reference signal; $\mathbf{\Phi}_r^{\mathrm{H}}\mathbf{Y}$ represents the second receive signal; and N represents Gaussian white noise of the terminal.

28. The signal processing apparatus according to claim 27, wherein the second receive signal and the first reference signal matrix satisfy a following second formula:

$$\mathrm{vec}(\mathbf{\Phi}_r^{\mathrm{H}}\mathbf{Y}) = \mathbf{P}^{\mathrm{H}}\otimes\mathbf{I}_{n_r}\mathbf{\Lambda}^{\frac{1}{2}}\widetilde{\mathbf{w}} + \mathrm{vec}(\mathbf{\Phi}_r^{\mathrm{H}}\mathbf{N}) \quad \text{second formula}$$

wherein $\mathrm{vec}(\mathbf{\Phi}_r^{\mathrm{H}}\mathbf{Y})$ represents vector expression of $\mathbf{\Phi}_r^{\mathrm{H}}\mathbf{Y}$; $\mathbf{P}^{\mathrm{H}}$ represents a Hermitian transpose matrix of **P**; $\mathbf{I}_{n_r}$ represents an identity matrix of $n_r \times n_r$, $n_r$ representing a cardinality of a two-dimensional lattice ellipse corresponding to the terminal in a wavenumber spectrum support set; $\Lambda$ represents a diagonal matrix comprising an eigenvalue of a channel autocorrelation matrix, $\widetilde{\mathbf{w}}$ represents a complex Gaussian random vector with a mean of 0 and a variance of 1, $\mathbf{\Lambda}^{\frac{1}{2}}\widetilde{\mathbf{w}}$ represents a sparse vector corresponding to the eigenvalue of the channel autocorrelation matrix, and the sparse vector is used for acquiring the channel matrix; and $\mathrm{vec}(\mathbf{\Phi}_r^{\mathrm{H}}\mathbf{N})$ represents vector expression of $\mathbf{\Phi}_r^{\mathrm{H}}\mathbf{N}$.

29. The signal processing apparatus according to claim 28, wherein a number of non-zero eigenvalues of the channel autocorrelation matrix comprised in the diagonal matrix in a non-isotropic scattering environment is less than a number of non-zero eigenvalues of the channel autocorrelation matrix comprised in the diagonal matrix in an isotropic scattering environment.

30. The signal processing apparatus according to claim 28, wherein the second formula is used for acquiring the sparse vector.

31. The signal processing apparatus according to claim 30, further comprising an acquiring unit, configured to:
acquire the sparse vector based on the second formula and using a compressed sensing recovery algorithm.

32. The signal processing apparatus according to any one of claims 25 to 28, wherein an eigenvalue vector of a channel autocorrelation matrix corresponding to an isotropic scattering environment is obtained by using a matrix inversion algorithm.

33. A signal processing apparatus, applied to a terminal, **characterised in that** the signal processing apparatus comprises:

an acquiring unit, configured to acquire a fourth reference signal, wherein the fourth reference signal is determined by a network device according to antenna spacing of the terminal, and the antenna spacing is less than or equal to half wavelength; and

a determining unit, configured to determine, according to the fourth reference signal, a fifth reference signal, wherein a dimension of a fifth reference signal matrix corresponding to the fifth reference signal is smaller than a dimension of a fourth reference signal matrix corresponding to the fourth reference signal, and the fifth reference signal is used for channel estimation.

34. The signal processing apparatus according to claim 33, wherein the acquiring unit is specifically configured to:

acquire the fourth reference signal locally from the terminal, the fourth reference signal being pre-configured by the network device for the terminal;

or, acquire the fourth reference signal from the network device in a one-time manner via radio resource control RRC signaling or medium access control-control element MAC-CE signaling.

35. A signal processing apparatus, applied to a network device, **characterised in that** the signal processing apparatus comprises:

a receiving unit, configured to receive a third receive signal, wherein the third receive signal comprises a fifth reference signal transmitted by a terminal, the fifth reference signal is determined by the terminal according to a fourth reference signal, and the fourth reference signal is determined by the network device according to antenna spacing of the terminal, the antenna spacing being less than or equal to half wavelength; and

a determining unit, configured to determine, according to the third receive signal, a fourth receive signal, the fourth receive signal being used for channel estimation.

36. A processor readable storage medium, **characterised in that** the processor readable storage medium stores a computer program, and the computer program is used for causing the processor to execute the signal processing method according to any one of claims 1 to 17.

FIG. 1

| Terminal | Network device |
|---|---|

S201, determining, according to antenna spacing, a first reference signal, the antenna spacing being less than or equal to half wavelength

S202, determining, according to the first reference signal, a second reference signal, where a dimension of a second reference signal matrix corresponding to the second reference signal is smaller than a dimension of a first reference signal matrix corresponding to the first reference signal

S203, transmitting the second reference signal

S204, receiving a first receive signal, the first receive signal including the second reference signal

S205, determining, according to the first receive signal, a second receive signal, the second receive signal being used for channel estimation

FIG. 2

| Terminal | | Network device |
|---|---|---|

S301, acquiring a fourth reference signal, where the fourth reference signal is determined by the network device according to antenna spacing of the terminal, and the antenna spacing is less than or equal to half wavelength

S302, determining, according to the fourth reference signal, a fifth reference signal, where a dimension of a fifth reference signal matrix corresponding to the fifth reference signal is smaller than a dimension of a fourth reference signal matrix corresponding to the fourth reference signal

S303, transmitting the fifth reference signal

S304, receiving a third receive signal, the third receive signal including the fifth reference signal

S305, determining, according to the third receive signal, a fourth receive signal, the fourth receive signal being used for channel estimation

FIG. 3

| Terminal | | Base station |
|---|---|---|

S401, determining a pilot matrix corresponding to a downlink pilot signal

S402, determining a preprocessing matrix corresponding to the base station

S403, transmitting the preprocessing matrix corresponding to the base station

S404, preprocessing data to be transmitted and the pilot matrix with the preprocessing matrix corresponding to the base station, to obtain a preprocessed downlink pilot signal

S405, transmitting the preprocessed downlink pilot signal

S406, obtaining a receive signal corresponding to the downlink pilot signal

S407, determining a preprocessing matrix corresponding to the terminal

S408, preprocessing the receive signal with the preprocessing matrix corresponding to the terminal, and extracting received downlink pilot data according to a time-frequency resource where a pilot sequence corresponding to the downlink pilot signal is located

S409, using an OMP algorithm according to the downlink pilot data, to obtain a sparse vector

S410, obtaining an estimated channel according to the sparse vector

S411, demodulating the received data based on the estimated channel

FIG. 4

| Terminal | | Base station |
|---|---|---|

S501, acquiring a pilot matrix corresponding to an uplink pilot signal predefined by the base station

S502, determining a preprocessing matrix corresponding to the terminal

S503, preprocessing data to be transmitted and the pilot matrix with the preprocessing matrix corresponding to the terminal, to obtain a preprocessed uplink pilot signal

S504, transmitting the preprocessed uplink pilot signal ▶

S505, obtaining a receive signal corresponding to the uplink pilot signal

S506, determining the preprocessing matrix corresponding to the terminal by acquiring position information of the terminal

S507, determining a preprocessing matrix corresponding to the base station

S508, preprocessing the receive signal with the preprocessing matrix corresponding to the base station, and extracting received uplink pilot data according to a time-frequency resource where a pilot sequence corresponding to the uplink pilot signal is located

S509, using an OMP algorithm according to the uplink pilot data, to obtain a sparse vector

S510, obtaining an estimated channel according to the sparse vector

S511, demodulating the received data based on the estimated channel

FIG. 5

602

Processor

603

Memory

Bus interface

601

Transceiver

FIG. 6

702

Processor

703

Processor

Bus interface

701

Transceiver

704

User interface

FIG. 7

802

Processor

803

Memory

Bus interface

801

Transceiver

804

User interface

FIG. 8

902

Processor

903

Memory

Bus interface

901

Transceiver

FIG. 9

1001

First determining unit

1002

Second determining unit

1003

Transmitting unit

Signal processing apparatus

FIG. 10

1101

Receiving unit

1102

Determining unit

1103

Acquiring unit

Signal processing apparatus

FIG. 11

1201

Acquiring unit

1202

Determining unit

1203

Transmitting unit

Signal processing apparatus

FIG. 12

FIG. 13

## INTERNATIONAL SEARCH REPORT

| | International application No. |
|---|---|
| | **PCT/CN2024/072360** |

| A. | CLASSIFICATION OF SUBJECT MATTER |
|---|---|
| | H04L25/02(2006.01)i |

According to International Patent Classification (IPC) or to both national classification and IPC

| B. | FIELDS SEARCHED |
|---|---|

Minimum documentation searched (classification system followed by classification symbols)

IPC:H04L: H04W

Documentation searched other than minimum documentation to the extent that such documents are included in the fields searched

Electronic data base consulted during the international search (name of data base and, where practicable, search terms used)

3GPP, CJFD, CNTXT, ENTXTC, VEN, WPABSC: 半波长, 参考信号, 导频, 间隔, 间距, 矩阵, 距离, 天线, 维度, 小于等于, 小于或等于, 小于或者等于, RS, matrice?, antenna?, dimension?, pilot signal?, distance?, reference signal?, half wavelength

| C. | DOCUMENTS CONSIDERED TO BE RELEVANT | |
|---|---|---|
| Category* | Citation of document, with indication, where appropriate, of the relevant passages | Relevant to claim No. |
| A | US 2012288022 A1 (TELEFONAKTIEBOLAGET LM ERICSSON (PUBL) et al.) 15 November 2012 (2012-11-15) entire document | 1-36 |
| A | CN 109787664 A (SONY CORP.) 21 May 2019 (2019-05-21) entire document | 1-36 |
| A | CN 113766541 A (BEIJING JIAOTONG UNIVERSITY) 07 December 2021 (2021-12-07) entire document | 1-36 |
| A | CN 114584430 A (DATANG MOBILE COMMUNICATIONS EQUIPMENT CO., LTD.) 03 June 2022 (2022-06-03) entire document | 1-36 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 April 2024** | **24 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/072360**

| Patent document cited in search report | | | Publication date (day/month/year) | Patent family member(s) | | | Publication date (day/month/year) |
|---|---|---|---|---|---|---|---|
| US | 2012288022 | A1 | 15 November 2012 | US | 8837621 | B2 | 16 September 2014 |
| | | | | EP | 2708003 | A1 | 19 March 2014 |
| | | | | US | 2014219377 | A1 | 07 August 2014 |
| | | | | US | 9130615 | B2 | 08 September 2015 |
| | | | | WO | 2012153204 | A1 | 15 November 2012 |
| CN | 109787664 | A | 21 May 2019 | WO | 2019096138 | A1 | 23 May 2019 |
| | | | | US | 2023064870 | A1 | 02 March 2023 |
| | | | | US | 11831575 | B2 | 28 November 2023 |
| | | | | US | 2024048317 | A1 | 08 February 2024 |
| | | | | US | 2020235875 | A1 | 23 July 2020 |
| | | | | US | 11552756 | B2 | 10 January 2023 |
| | | | | EP | 3703272 | A1 | 02 September 2020 |
| | | | | EP | 3703272 | A4 | 02 December 2020 |
| CN | 113766541 | A | 07 December 2021 | None | | | |
| CN | 114584430 | A | 03 June 2022 | None | | | |

Form PCT/ISA/210 (patent family annex) (July 2022)

**Patent documents cited in the description**

- CN 202310098646